(19) Europäisches Patentamt
European Patent Office
Office européen des brevets

(11)  **EP 3 677 485 B1**

(12)  **EUROPEAN PATENT SPECIFICATION**

(45) Date of publication and mention
of the grant of the patent:
**13.11.2024  Bulletin 2024/46**

(21) Application number: **17922960.4**

(22) Date of filing: **31.08.2017**

(51) International Patent Classification (IPC):
**B61K 9/08** *(2006.01)*      **G01B 21/00** *(2006.01)*
**B61L 23/04** *(2006.01)*

(52) Cooperative Patent Classification (CPC):
**B61L 23/042; B61K 9/08; G01B 21/00**

(86) International application number:
**PCT/JP2017/031308**

(87) International publication number:
**WO 2019/043859 (07.03.2019 Gazette 2019/10)**

(54) **INSPECTION SYSTEM, INSPECTION METHOD, AND COMPUTER PROGRAM PRODUCT THEREFOR**

INSPEKTIONSSYSTEM, INSPEKTIONSVERFAHREN UND COMPUTER-PROGRAMM DAFÜR

SYSTÈME D'INSPECTION, PROCÉDÉ D'INSPECTION, ET PRODUIT DE PROGRAMME D'ORDINATEUR ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.07.2020  Bulletin 2020/28**

(73) Proprietor: **Nippon Steel Corporation**
**Tokyo 1008071 (JP)**

(72) Inventors:
• **NAKAGAWA, Junichi**
**Tokyo 100-8071 (JP)**
• **SHIMOKAWA, Yoshiyuki**
**Tokyo 100-8071 (JP)**
• **SHINAGAWA, Daisuke**
**Tokyo 100-8071 (JP)**

• **GOTO, Osamu**
**Tokyo 100-8071 (JP)**
• **MINAMI, Hideki**
**Tokyo 100-8071 (JP)**

(74) Representative: **Vossius & Partner**
**Patentanwälte Rechtsanwälte mbB**
**Siebertstrasse 3**
**81675 München (DE)**

(56) References cited:
**EP-A1- 3 042 822        EP-A1- 3 434 552**
**EP-B1- 3 042 822        EP-B1- 3 434 552**
**WO-A1-2017/164133   JP-A- 2009 300 397**
**JP-A- 2014 044 096    JP-A- 2014 126 451**
**JP-A- 2015 227 834    JP-A- 2017 053 773**
**US-A1- 2012 199 700  US-A1- 2015 210 300**

**Description**

TECHNICAL FIELD

The present invention relates to an inspection system, an inspection method, and a computer program product, and in particular, for inspecting a track of a railway vehicle.

BACKGROUND ART

When a railway vehicle travels on a track, the position of the track changes due to a load from the railway vehicle. When such a change in track occurs, the railway vehicle is liable to exhibit abnormal behavior. Thus, detection of abnormality of the track has been performed conventionally by causing a railway vehicle to travel on the track.
Patent Literature 1 has described a measuring device including an irradiation unit of laser light, a traveling unit, and a light-receiving unit. The irradiation unit is fixed to a single rail. The traveling unit travels on the rail with the irradiation unit fixed thereto. The light-receiving unit is attached to the traveling unit. The light-receiving unit includes a detection unit to detect a light-receiving position of the laser light. This detection unit has a planar shape in cross section substantially perpendicular to an extending direction of the rail. Making the traveling unit travel forward by a distance L, making the traveling unit travel backward by a distance L/2, and making the traveling unit travel forward by the distance L, are performed repeatedly. The traveling unit is made to travel so that measurement ranges by the light-receiving unit are overlapped partly, to thereby measure a track irregularity amount in a curved portion of the track.
Patent Literature 2 describes an inspection apparatus calculating an alignment irregularity amount by substituting angular displacements of wheel sets in a yawing direction, state variables derived by a filter, and a measured value of a forward-and-backward-direction force into motion equations that describe yawings of the wheel sets.
Patent Literature 3 describes a method of measuring a condition of a track using a vehicle for commercial operation.

CITATION LIST

PATENT LITERATURE

Patent Literature 1: Japanese Laid-open
Patent Publication No. 2017-53773
Patent Literature 2: EP 3 434 552 A1
Patent Literature 3: EP 3 042 822 A1

NON PATENT LITERATURE

Non Patent Literature 1: "Railway vehicle dynamics The latest bogie technology" edited by The Japan Society of Mechanical Engineers, DENKISYA KENKYUKAI CO.,LTD., January, 2003, p. 15-p. 33
Non Patent Literature 2: Ping Li et al., "Estimation of railway vehicle suspension parameters for condition monitoring," Control Engineering Practice 15 (2007) p. 43-p. 55

SUMMARY OF INVENTION

TECHNICAL PROBLEM

However, the method described in Patent Literature 1 is a method to directly measure the track irregularity. Therefore, an expensive measuring apparatus is required. Further, in the method described in Patent Literature 1, the traveling unit travels forward and backward repeatedly. Therefore, it is impossible to detect the track irregularity during traveling of a commercial vehicle.
The present invention has been made in consideration of the above-described problems, and an object thereof is to enable detection of irregularity in a curved portion of a track of a railway vehicle without using a special measuring apparatus.

SOLUTION TO PROBLEM

The present invention is defined in the claims. An inspection system of the present invention includes: a data acquisition means that acquires measured data being time-series data of measured values to be measured by causing a railway vehicle including a vehicle body, a bogie, and a wheel set to travel on a track; a frequency adjustment means that reduces a signal strength of a low-frequency component to be generated due to the railway vehicle traveling on a curved portion of the track of the time-series data of a measured value of the measured data of a forward-and-backward-direction force varying in a value according to a state of the railway vehicle or of the time-series data of estimated values of a physical quantity varying in a value according to a state of the railway vehicle; and a track state calculation means that derives information reflecting a state of the track, in which the measured data contain a measured value of a forward-and-backward-direction force, the forward-and-backward-direction force is a force in a forward and backward direction to occur in a member disposed between the wheel set and the bogie on which the wheel set is provided, the member is a member for supporting an axle box, the forward and backward direction is a direction along a traveling direction of the railway vehicle, the frequency adjustment means includes a first frequency adjustment means that reduces a signal strength of a low-frequency component to be generated due to the railway vehicle traveling on a curved portion of the track from time-series data of a measured value of the forward-and-backward-direction force, the track state calculation means uses a relational expression representing the relation between information reflecting a state of the track at a position of the wheel set and the forward-and-backward-direction force and a value of the forward-and-backward-direction force from which the signal strength of the low-frequency component has been reduced by the first frequency adjustment means to derive information reflecting a state of the track, and the relational expression is an expression not including a curvature radius of a rail.

An inspection method of the present invention includes: a data acquisition step of acquiring measured data being time-series data of measured values to be measured by causing a railway vehicle including a vehicle body, a bogie, and a wheel set to travel on a track; a frequency adjustment step of reducing a signal strength of a low-frequency component to be generated due to the railway vehicle traveling on a curved portion of the track of the time-series data of a measured value of the measured data of a forward-and-backward-direction force varying in a value according to a state of the railway vehicle or of the time-series data of estimated values of a physical quantity varying in a value according to a state of the railway vehicle; and a track state calculation step of deriving information reflecting a state of the track, in which the measured data contain a measured value of a forward-and-backward-direction force, the forward-and-backward-direction force is a force in a forward and backward direction to occur in a member disposed between the wheel set and the bogie on which the wheel set is provided, the member is a member for supporting an axle box, the forward and backward direction is a direction along a traveling direction of the railway vehicle, the frequency adjustment step includes a first frequency adjustment step of reducing a signal strength of a low-frequency component to be generated due to the railway vehicle traveling on a curved portion of the track from time-series data of a measured value of the forward-and-backward-direction force, the track state calculation step uses a relational expression representing the relation between information reflecting a state of the track at a position of the wheel set and the forward-and-backward-direction force and a value of the forward-and-backward-direction force from which the signal strength of the low-frequency component has been reduced by the first frequency adjustment step to derive information reflecting a state of the track, and the relational expression is an expression based on an expression not including a curvature radius of a rail.

A program of the present invention causes a computer to execute steps including: a data acquisition step of acquiring measured data being time-series data of measured values to be measured by causing a railway vehicle including a vehicle body, a bogie, and a wheel set to travel on a track; a frequency adjustment step of reducing a signal strength of a low-frequency component to be generated due to the railway vehicle traveling on a curved portion of the track of the time-series data of a measured value of the measured data of a forward-and-backward-direction force varying in a value according to a state of the railway vehicle or of the time-series data of estimated values of a physical quantity varying in a value according to a state of the railway vehicle; and a track state calculation step of deriving information reflecting a state of the track, in which the measured data contain a measured value of a forward-and-backward-direction force, the forward-and-backward-direction force is a force in a forward and backward direction to occur in a member disposed between the wheel set and the bogie on which the wheel set is provided, the member is a member for supporting an axle box, the forward and backward direction is a direction along a traveling direction of the railway vehicle, the frequency adjustment step includes a first frequency adjustment step of reducing a signal strength of a low-frequency component to be generated due to the railway vehicle traveling on a curved portion of the track from time-series data of a measured value of the forward-and-backward-direction force, the track state calculation step uses a relational expression representing the relation between information reflecting a state of the track at a position of the wheel set and the forward-and-backward-direction force and a value of the forward-and-backward-direction force from which the signal strength of the low-frequency component has been reduced by the first frequency adjustment step to derive information reflecting a state of the track, and the relational expression is an expression based on an expression not including a curvature radius of a rail.

## BRIEF DESCRIPTION OF DRAWINGS

[Fig. 1] Fig. 1 is a view illustrating one example of an outline of a railway vehicle.
[Fig. 2] Fig. 2 is a view conceptually illustrating directions of main motions of components of the railway vehicle.
[Fig. 3A] Fig. 3A is a view illustrating one example of an alignment irregularity amount in a linear track.
[Fig. 3B] Fig. 3B is a view illustrating one example of an alignment irregularity amount in a curved track.
[Fig. 4] Fig. 4 is a view illustrating one example of interactive acting relations between the alignment irregularity amount and motions of the components of the railway vehicle.
[Fig. 5] Fig. 5 is a view illustrating one example of interactive acting relations between the alignment irregularity amount and the motions of the components of the railway vehicle by using forward-and-backward-direction forces.
[Fig. 6] Fig. 6 is a view illustrating one example of acting relations necessary for determining the motions of the components directly acting on yawings of wheel sets.
[Fig. 7] Fig. 7 is a view illustrating one example of acting relations necessary for determining the alignment irregularity amount.
[Fig. 8] Fig. 8 is a diagram illustrating a first example of a functional configuration of an inspection apparatus.
[Fig. 9] Fig. 9 is a diagram illustrating one example of a hardware configuration of the inspection apparatus.
[Fig. 10] Fig. 10 is a flowchart illustrating a first example of preprocessing in the inspection apparatus.
[Fig. 11] Fig. 11 is a flowchart illustrating a first example of main processing in the inspection apparatus.
[Fig. 12] Fig. 12 is a chart illustrating one example of a distribution of eigenvalues of an autocorrelation matrix.
[Fig. 13] Fig. 13 is a view illustrating one example of time-series data of a measured value of a forward-and-backward-direction force (a measured value) and time-series data of a predicted value of the forward-and-backward-direction force (a calculated value).
[Fig. 14] Fig. 14 is a view illustrating one example of time-series data of a high-frequency component of the forward-and-backward-direction force.
[Fig. 15] Fig. 15 is a view illustrating one example of time-series data of an alignment irregularity amount in each wheel set.
[Fig. 16] Fig. 16 is a view illustrating one example of time-series data of a final alignment irregularity amount and a curvature of a track 16 (rail).
[Fig. 17] Fig. 17 is a diagram illustrating a second example of the functional configuration of the inspection apparatus.
[Fig. 18] Fig. 18 is a flowchart illustrating a second example of the preprocessing in the inspection apparatus.
[Fig. 19] Fig. 19 is a flowchart illustrating a second example of the main processing in the inspection apparatus.
[Fig. 20] Fig. 20 is a view illustrating one example of a constitution of an inspection system.

## DESCRIPTION OF EMBODIMENTS

Hereinafter, there will be explained embodiments of the present invention with reference to the drawings.

(Outline)

First, there will be explained the outline of the embodiment of the present invention.

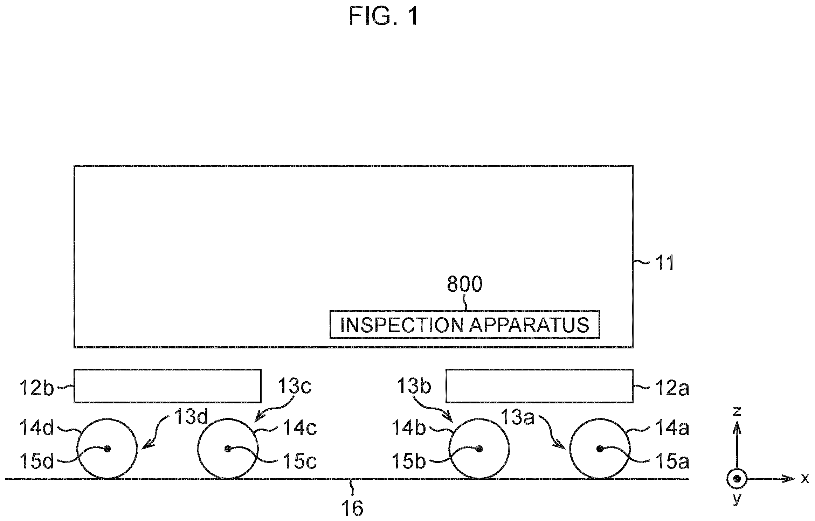

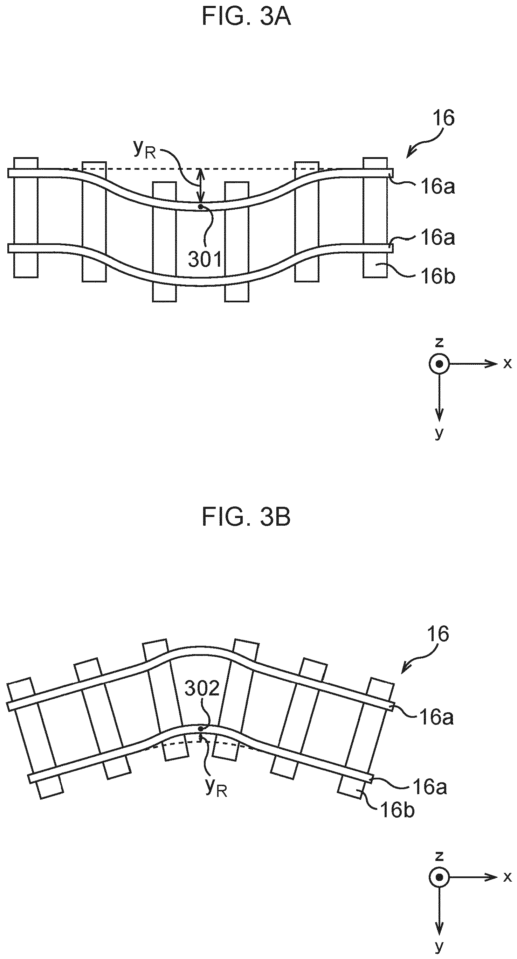

Fig. 1 is a view illustrating one example of an outline of a railway vehicle. Incidentally, in Fig. 1, the railway vehicle is set to proceed in the positive direction of the x axis (the x axis is an axis along a traveling direction of the railway vehicle). Further, the z axis is set to a direction vertical to a track 16 (the ground) (a height direction of the railway vehicle). The y axis is set to a horizontal direction vertical to the traveling direction of the railway vehicle (a direction vertical to both the traveling direction and the height direction of the railway vehicle). Further, the railway vehicle is set to a commercial vehicle. Incidentally, in Fig. 1 and Fig 3, the mark of ● added inside O indicates the direction from the far side of the sheet toward the near side. In Fig. 1, this direction is the positive direction of the y axis. In Fig. 3, this direction is the positive direction of the z axis.
As illustrated in Fig. 1, in this embodiment, the railway vehicle includes a vehicle body 11, bogies 12a, 12b, and wheel sets 13a to 13d. As above, in this embodiment, the railway vehicle including the single vehicle body 11 provided with the two bogies 12a, 12b and four sets of the wheel sets 13a to 13d will be explained as an example. The wheel sets 13a to 13d have axles 15a to 15d and wheels 14a to 14d provided on both ends of the axles 15a to 15d respectively. In this embodiment, the case of the bogies 12a, 12b each being a bolsterless bogie will be explained as an example. Incidentally, in Fig. 1, for convenience of illustration, only the wheels 14a to 14d on one side of the wheel sets 13a to 13d are illustrated, but wheels are also provided on the other side of the wheel sets 13a to 13d (in the example illustrated in Fig. 1, there are eight wheels in total). Further, the railway vehicle includes components other than the components illustrated in Fig. 1 (components and so on to be explained in later-described motion equations), but for convenience of illustration, illustrations of these components are omitted in Fig. 1. For example, the bogies 12a, 12b have bogie frames, bolster springs, and so on. Further, an axle box is disposed on the both sides of each of the wheel sets 13a to 13d in the right and left direction. Further, the bogie frame and the axle box are coupled to each other by an axle box suspension. The axle box suspension is a device (suspension) to be disposed between the axle box and the bogie frame. The axle box suspension absorbs vibration to be conveyed to the railway vehicle from the track 16. Further, the axle box suspension supports the axle box in a state where the position of the axle box relative to the bogie frame is restricted, so as to prevent the axle box from moving in a direction along the x axis and a direction along the y axis relative to the bogie frame (so as to prevent these movements from occurring preferably). The axle box suspension is disposed on the both sides of each of the wheel sets 13a to 13d in the direction along the y axis. Incidentally, the railway vehicle itself can be fabricated by a well-known technique, and thus its detailed explanation is omitted here.

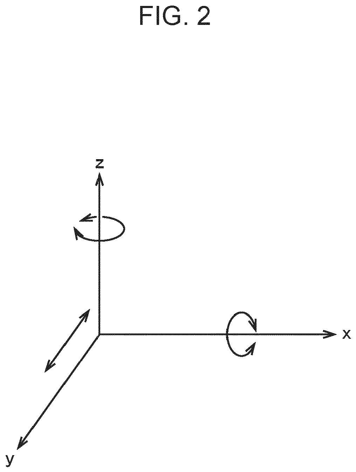

When the railway vehicle travels on the track 16, acting force (creep force) between the wheels 14a to 14d and the track 16 becomes a vibration source and the vibration sequentially propagates to the wheel sets 13a to 13d, the bogies 12a, 12b, and the vehicle body 11. Fig. 2 is a view conceptually illustrating directions of the main motions of the components (the wheel sets 13a to 13d, the bogies 12a, 12b, and the vehicle body 11) of the railway vehicle. The x axis, the y axis, and the z axis illustrated in Fig. 2 correspond to the x axis, the y axis, and the z axis illustrated in Fig. 1 respectively.

In this embodiment as illustrated in Fig. 2, there will be explained, as an example, the case where the wheel sets 13a to 13d, the bogies 12a, 12b, and the vehicle body 11 perform pivoting motion about the x axis as a pivot axis, pivoting motion about the z axis as a pivot axis, and motion in the direction along the y axis. In the following explanation, the pivoting motion about the x axis as a pivot axis is referred to as rolling as necessary, the pivoting direction about the x axis as a pivot axis is referred to as a rolling direction as necessary, and the direction along the x axis is referred to as the forward and backward direction as necessary. Incidentally, the forward and backward direction is the traveling direction of the railway vehicle. In this embodiment, the direction along the x axis is the traveling direction of the railway vehicle. Further, the pivoting motion about the z axis as a pivot axis is referred to as yawing as necessary, the pivoting direction about the z axis as a pivot axis is referred to as a yawing direction as necessary, and the direction along the z axis is referred to as the up and down direction as necessary. Incidentally, the up and down direction is a direction vertical to the track 16. Further, the motion in the direction along the y axis is referred to as a transversal vibration as necessary, and the direction along the y axis is referred to as the right and left direction as necessary. Incidentally, the right and left direction is a direction vertical to both the forward and backward direction (the traveling direction of the railway vehicle) and the up and down direction (the direction vertical to the track 16). Incidentally, the railway vehicle performs motions other than these, but in each of the embodiments, these motions are not considered in order to simplify the explanation. However, these motions may be considered.

The present inventors devised a method of calculating, as one example of information reflecting track irregularity (appearance failure of the track 16), an alignment irregularity amount by using a measured value of force in the forward and backward direction to occur in a member disposed between the wheel sets 13a to 13b (13c to 13d) and the bogie 12a (12b) on which these wheel sets 13a to 13b (13c to 13d) are provided. In the following explanation, the force in the forward and backward direction to occur in the member is referred to as a forward-and-backward-direction force as necessary.

The alignment irregularity amount is calculated by using an equation representing the relation between the alignment irregularity amount and the forward-and-backward-direction force, which is an equation based on a motion equation describing motion when the railway vehicle travels on a linear track. The track 16 includes a linear portion and a curved portion. In the following explanation, the linear portion of the track 16 is referred to as a linear track as necessary and the curved portion of the track 16 is referred to as a curved track as necessary. It is necessary to consider centrifugal force or the like that the railway vehicle receives when traveling in the motion equation describing the motion of the railway vehicle traveling on the curved track. Accordingly, the motion equation describing the motion of the railway vehicle traveling on the curved track includes a term containing a curvature radius of the rail. Therefore, there is a risk that a measurement error of the forward-and-backward-direction force is liable to affect the accuracy of the alignment irregularity amount, failing to calculate the alignment irregularity amount with high accuracy.

The present inventors focused attention on the fact that the measured value of the forward-and-backward-direction force when the railway vehicle travels on the curved track has a certain bias relative to that when traveling on the linear track. The component itself of the forward-and-backward-direction force due to the alignment irregularity occurs in the same manner even on the curved track or the linear track. Thus the present inventors thought that the alignment irregularity amount itself has nothing to do with the amount of the aforementioned bias and thus it is only necessary to reduce a low-frequency component (behavior of the aforementioned bias) from time-series data of the measured value of the forward-and-backward-direction force. From this, the present inventors devised calculating the alignment irregularity amount by giving the time-series data of the value of the forward-and-backward-direction force from which the low-frequency component has been reduced to an equation representing the relation between the alignment irregularity amount and the forward-and-backward-direction force, which is an equation based on the motion equation describing the motion of the railway vehicle when traveling on the linear track. The alignment irregularity amount is calculated as above, thereby making it possible to calculate the alignment irregularity amount in the curved track regardless of using the equation based on the motion equation describing the motion of the railway vehicle when traveling on the linear track. Further, the calculating equation of the alignment irregularity amount results in the same calculating equation even on the curved track or the linear track.

<Motion equation>

On the premise of the above, there will be explained one example of the motion equation that describes the motion when the railway vehicle travels on the linear track. In this embodiment, there will be explained, as an example, the case where the railway vehicle has 21 degrees of freedom. That is, it is set that the wheel sets 13a to 13d perform the motion in the right and left direction (transversal vibration) and the motion in the yawing direction (yawing) ($2 \times 4$ sets - eight degrees of freedom). Further, it is set that the bogies 12a, 12b perform the motion in the right and left direction (transversal vibration), the motion in the yawing direction (yawing), and the motion in the rolling direction (rolling) ($3 \times 2$ sets = six degrees of freedom). Further, the vehicle body 11 performs the motion in the right and left direction (transversal vibration), the motion in the yawing direction (yawing), and the motion in the rolling direction (rolling) ($3 \times 1$ sets = three degrees of freedom). Further, it is set that air springs (the bolster springs) each provided on the bogies 12a, 12b perform the motion in the rolling direction (rolling) ($1 \times 2$ sets = two degrees of freedom). Further, it is set that yaw dampers each provided on the bogies 12a, 12b perform the motion in the yawing direction (yawing) ($1 \times 2$ sets = two degrees of freedom).

Incidentally, the degree of freedom is not limited to 21 degrees of freedom. When the degree of freedom increases, calculation accuracy improves, but a calculation load becomes high. Further, there is a risk that a later-described Kalman filter no longer operates stably. It is possible to appropriately determine the degree of freedom considering these points. Further, the following motion equations can be achieved by representing actions in the respective directions (the right and left direction, the yawing direction, and the rolling direction) of the respective components (the vehicle body 11, the bogies 12a, 12b, and the wheel sets 13a to 13d) based on the descriptions of Non-Patent Literatures 1, 2, for example. Thus, outlines of these motion equations will be explained here, and their detailed explanations are omitted. Incidentally, in each of the following equations, the term containing the curvature radius (curvature) of the track 16 (rail) does not exist. That is, each of the following equations is an equation expressing the railway vehicle traveling on the linear track. The equation expressing the railway vehicle traveling on the linear track can be obtained by setting the curvature radius of the track 16 (rail) to be infinite (the curvature to 0 (zero)) in the equation expressing the railway vehicle traveling on the curved track.

In each of the following equations, each subscript w indicates the wheel sets 13a to 13d. Variables to which (only) the subscript w is added indicate that they are common to the wheel sets 13a to 13d. Subscripts w1, w2, w3, and w4 indicate the wheel sets 13a, 13b, 13c, and 13d respectively.

Subscripts t, T indicate the bogies 12a, 12b. Variables to which (only) the subscripts t, T are added indicate that they are common to the bogies 12a, 12b. Subscripts t1, t2 indicate the bogies 12a, 12b respectively.

Subscripts b, B indicate the vehicle body 11.

A subscript x indicates the forward and backward direction or the rolling direction, and a subscript y indicates the right and left direction, and a subscript z indicates the up and down direction or the yawing direction.

Further, "··" and "·" each added above a variable indicate a second-order time differential and a first-order time differential respectively.

Incidentally, when the following motion equations are explained, explanations of the already-explained variables are omitted as necessary.

[Transversal vibration of the wheel set]

The motion equations that,describe the transversal vibrations of the wheel sets 13a to 13d (motion in the right and left direction) are expressed by (1) Equation to (4) Equation below.

[Mathematical equation 1]

$$m_w \ddot{y}_{w1} + \frac{f_2}{v} \dot{y}_{w1} + C_{wy}[\dot{y}_{w1} - \{\dot{y}_{t1} + a\dot{\psi}_{t1} + h_1\dot{\phi}_{t1}\}] - f_2\psi_{w1} + K_{wy}[y_{w1} - \{y_{t1} + a\psi_{t1} + h_1\phi_{t1}\}] = 0$$

$$\cdots (1)$$

$$m_w \ddot{y}_{w2} + \frac{f_2}{v} \dot{y}_{w2} + C_{wy}[\dot{y}_{w2} - \{\dot{y}_{t1} + a\dot{\psi}_{t1} + h_1\dot{\phi}_{t1}\}] - f_2\psi_{w2} + K_{wy}[y_{w2} - \{y_{t1} + a\psi_{t1} + h_1\phi_{t1}\}] = 0$$

$$\cdots (2)$$

$$m_w \ddot{y}_{w3} + \frac{f_2}{v} \dot{y}_{w3} + C_{wy}[\dot{y}_{w3} - \{\dot{y}_{t2} + a\dot{\psi}_{t2} + h_1\dot{\phi}_{t2}\}] - f_2\psi_{w3} + K_{wy}[y_{w3} - \{y_{t2} + a\psi_{t2} + h_1\phi_{t2}\}] = 0$$

$$\cdots (3)$$

$$m_w \ddot{y}_{w4} + \frac{f_2}{v} \dot{y}_{w4} + C_{wy}[\dot{y}_{w4} - \{\dot{y}_{t2} + a\dot{\psi}_{t2} + h_1\dot{\phi}_{t2}\}] - f_2\psi_{w4} + K_{wy}[y_{w4} - \{y_{t2} + a\psi_{t2} + h_1\phi_{t2}\}] = 0$$

$$\cdots (4)$$

$m_w$ is the mass of the wheel sets 13a to 13d. $\ddot{y}_{w1}$ is acceleration of the wheel set 13a in the right and left direction (in the equation, $\cdot\cdot$ is added above $y_{w1}$ (the same is true of the other variables below)). $f_2$ is a lateral creep coefficient. v is a traveling velocity of the railway vehicle. $\dot{y}_{w1}$ is a velocity of the wheel set 13a in the right and left direction (in the equation, $\cdot$ is added above $y_{w1}$ (the same is true of the other variables below)). $C_{wy}$ is a damping constant of the axle box suspension coupling the axle box and the wheel set in the right and left direction. $\dot{y}_{t1}$ is a velocity of the bogie 12a in the right and left direction. a represents 1/2 of each distance between the wheel sets 13a and 13b and between the wheel sets 13c and 13d in the forward and backward direction, which are provided on the bogies 12a, 12b (the distance between the wheel sets 13a and 13b and the distance between the wheel sets 13c and 13d, which are provided on the bogies 12a, 12b, each become 2a). $\dot{\psi}_{t1}$ is an angular velocity of the bogie 12a in the yawing direction. $h_1$ is a distance between the middle of the axle and the center of gravity of the bogie 12a in the up and down direction. $\dot{\phi}_{t1}$ is an angular velocity of the bogie 12a in the rolling direction. $\psi_{w1}$ is a pivot amount (angular displacement) of the wheel set 13a in the yawing direction. $K_{wy}$ is a spring constant of the axle box suspension in the right and left direction. $y_{w1}$ is a displacement of the wheel set 13a in the right and left direction. $y_{t1}$ is a displacement of the bogie 12a in the right and left direction. $\psi_{t1}$ is a pivot amount (angular displacement) of the bogie 12a in the yawing direction. $\phi_{t1}$ is a pivot amount (angular displacement) of the bogie 12a in the rolling direction. Incidentally, respective variables in (2) Equation to (4) Equation are represented by being replaced with the variables in (1) Equation according to the meanings of the aforementioned subscripts.

[Yawing of the wheel set]

The motion equations that describe the yawings of the wheel sets 13a to 13d are expressed by (5) Equation to (8) Equation below.

[Mathematical equation 2]

$$I_{wz}\ddot{\psi}_{w1}+\frac{f_1 b^2}{v}\dot{\psi}_{w1}+C_{wx}b_1^2\{\dot{\psi}_{w1}-\dot{\psi}_{t1}\}+\frac{f_1 b\gamma}{r}\{y_{w1}-y_{R1}\}+s_a K_{wy}\{y_{w1}-y_{t1}\}$$

$$+s_a C_{wy}\{\dot{y}_{w1}-\dot{y}_{t1}\}+K_{wx}b_1^2\{\psi_{w1}-\psi_{t1}\}=0 \qquad \cdots (5)$$

$$I_{wz}\ddot{\psi}_{w2}+\frac{f_1 b^2}{v}\dot{\psi}_{w2}+C_{wx}b_1^2\{\dot{\psi}_{w2}-\dot{\psi}_{t1}\}+\frac{f_1 b\gamma}{r}\{y_{w2}-y_{R2}\}+s_a K_{wy}\{y_{w2}-y_{t1}\}$$

$$+s_a C_{wy}\{\dot{y}_{w2}-\dot{y}_{t1}\}+K_{wx}b_1^2\{\psi_{w2}-\psi_{t1}\}=0 \qquad \cdots (6)$$

$$I_{wz}\ddot{\psi}_{w3}+\frac{f_1 b^2}{v}\dot{\psi}_{w3}+C_{wx}b_1^2\{\dot{\psi}_{w3}-\dot{\psi}_{t2}\}+\frac{f_1 b\gamma}{r}\{y_{w3}-y_{R3}\}+s_a K_{wy}\{y_{w3}-y_{t2}\}$$

$$+s_a C_{wy}\{\dot{y}_{w3}-\dot{y}_{t2}\}+K_{wx}b_1^2\{\psi_{w3}-\psi_{t2}\}=0 \qquad \cdots (7)$$

$$I_{wz}\ddot{\psi}_{w4}+\frac{f_1 b^2}{v}\dot{\psi}_{w4}+C_{wx}b_1^2\{\dot{\psi}_{w4}-\dot{\psi}_{t2}\}+\frac{f_1 b\gamma}{r}\{y_{w4}-y_{R4}\}+s_a K_{wy}\{y_{w4}-y_{t2}\}$$

$$+s_a C_{wy}\{\dot{y}_{w4}-\dot{y}_{t2}\}+K_{wx}b_1^2\{\psi_{w4}-\psi_{t2}\}=0 \qquad \cdots (8)$$

$I_{wz}$ is a moment of inertia of the wheel sets 13a to 13d in the yawing direction. $\ddot{\phi}_{w1}$ is angular acceleration of the wheel set 13a in the yawing direction. $f_1$ is a longitudinal creep coefficient. b is a distance in the right and left direction between contacts between the two wheels, which are attached to each of the wheel sets 13a to 13d, and the track 16 (rail). $\dot{\phi}_{w1}$ is an angular velocity of the wheel set 13a in the yawing direction. $C_{wx}$ is a damping constant of the axle box suspension in the forward and backward direction. $b_1$ represents 1/2 of the interval between the axle box suspensions in the right and left direction (the interval of the two axle box suspensions, which are provided on the right and left sides of the single wheel set, in the right and left direction becomes $2b_1$). y is a tread slope. r is a radius of the wheels 14a to 14d. $y_{R1}$ is an alignment irregularity amount at the position of the wheel set 13a. $s_a$ is an offset from the middle of the axles 15a to 15d to an axle box suspension spring in the forward and backward direction. $y_{t1}$ is a displacement of the bogie 12a in the right and left direction. $K_{wx}$ is a spring constant of the axle box suspension in the forward and backward direction. Incidentally, respective variables in (6) Equation to (8) Equation are represented by being replaced with the variables in (5) Equation according to the meanings of the aforementioned subscripts. However, $y_{R2}$, $y_{R3}$, and $y_{R4}$ are alignment irregularity amounts at the positions of the wheel sets 13b, 13c, and 13d respectively.

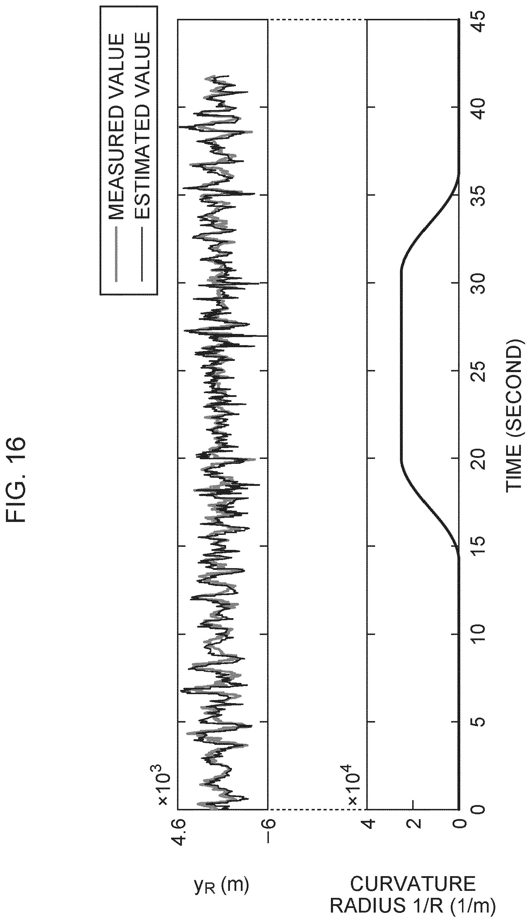

Here, the alignment irregularity is a lateral displacement of a rail in a longitudinal direction as described in Japan Industrial Standard (JIS E 1001: 2001). The alignment irregularity amount is an amount of the displacement. Fig. 3A and Fig. 3B each illustrate one example of the alignment irregularity amount $y_{R1}$ at the position of the wheel set 13a. In Fig. 3A, the case of the track 16 being the linear track will be explained as an example. In Fig. 3B, the case of the track 16 being the curved track will be explained as an example. In Fig. 3A and Fig. 3B, 16a denotes a rail and 16b denotes a crosstie. In Fig. 3A, it is set that the wheel 14a of the wheel set 13a is in contact with the rail 16a at a position 301. In Fig. 3B, it is set that the wheel 14a of the wheel set 13a is in contact with the rail 16a at a position 302. The alignment irregularity amount $y_{R1}$ at the position of the wheel set 13a is a distance in the right and left direction between the contact position between the wheel 14a of the wheel set 13a and the rail 16a and the position of the rail 16a in the case where this position is assumed as a regular state. The position of the wheel set 13a is the contact position between the wheel 14a of the wheel set 13a and the rail 16a. The alignment irregularity amounts $y_{R2}$, $y_{R3}$, and $y_{R4}$ at the positions of the wheel sets 13b, 13c, and 13d are also defined in the same manner as the alignment irregularity amount $y_{R1}$ at the position of the wheel set 13a.

[Transversal vibration of the bogie]

The motion equations that describe the transversal vibrations of the bogies 12a, 12b (motion in the right and left direction) are expressed by (9) Equation and (10) Equation below.

[Mathematical equation 3]

$$m_T \ddot{y}_{t1} + c'_2 [\{\dot{y}_{t1} - h_4 \dot{\phi}_{t1}\} - \{\dot{y}_b + L\dot{\psi}_b + h_5 \dot{\phi}_b\}] + 2C_{wy}\{\dot{y}_{t1} + h_1 \dot{\phi}_{t1}\} - C_{wy}\{\dot{y}_{w1} + \dot{y}_{w2}\}$$
$$+ 2k'_2 [\{y_{t1} - h_2 \phi_{t1}\} - \{y_b + L\psi_b + h_3 \phi_b\}] + 2K_{wy}\{y_{t1} + h_1 \phi_{t1}\} - K_{wy}\{y_{w1} + y_{w2}\} = 0$$

$$\cdots (9)$$

$$m_T \ddot{y}_{t2} + c'_2 [\{\dot{y}_{t2} - h_4 \dot{\phi}_{t2}\} - \{\dot{y}_b + L\dot{\psi}_b + h_5 \dot{\phi}_b\}] + 2C_{wy}\{\dot{y}_{t1} + h_1 \dot{\phi}_{t1}\} - C_{wy}\{\dot{y}_{w3} + \dot{y}_{w4}\}$$
$$+ 2k'_2 [\{y_{t2} - h_2 \phi_{t2}\} - \{y_b + L\psi_b + h_3 \phi_b\}] + 2K_{wy}\{y_2 + h_1 \phi_{t2}\} - K_{wy}\{y_{w3} + y_{w4}\} = 0$$

$$\cdots (10)$$

$m_T$ is the mass of the bogies 12a, 12b. $y_{t1}\cdot\cdot$ is acceleration of the bogie 12a in the right and left direction. $c'_2$ is a damping constant of a lateral movement damper. $h_4$ is a distance between the center of gravity of the bogie 12a and the lateral movement damper in the up and down direction. $y_b\cdot$ is a velocity of the vehicle body 11 in the right and left direction. L represents 1/2 of the interval between the center of the bogie 12a and the center of the bogie 12b in the forward and backward direction (the interval between the center of the bogie 12a and the center of the bogie 12b in the forward and backward direction becomes 2L). $\phi_b\cdot$ is an angular velocity of the vehicle body 11 in the yawing direction. $h_5$ is a distance between the lateral movement damper and the center of gravity of the vehicle body 11 in the up and down direction. $\phi_b\cdot$ is an angular velocity of the vehicle body 11 in the rolling direction. $y_{w2}\cdot$ is a velocity of the wheel set 13b in the right and left direction. $k'_2$ is a spring constant of the air spring (bolster spring) in the right and left direction. $h_2$ is a distance between the center of gravity of each of the bogies 12a, 12b and the center of the air spring (bolster spring) in the up and down direction. $y_b$ is a displacement of the vehicle body 11 in the right and left direction. $\phi_b$ is a pivot amount (angular displacement) of the vehicle body 11 in the yawing direction. $h_3$ is a distance between the center of the air spring (bolster spring) and the center of gravity of the vehicle body 11 in the up and down direction. $\phi_b$ is a pivot amount (angular displacement) of the vehicle body 11 in the rolling direction. Incidentally, respective variables in (10) Equation are represented by being replaced with the variables in (9) Equation according to the meanings of the aforementioned subscripts.

[Yawing of the bogie]

The motion equations that describe the yawings of the bogies 12a, 12b are expressed by (11) Equation and (12) Equation below.

[Mathematical equation 4]

$$I_{Tz}\ddot{\psi}_{t1} + C_{wx} b_1^2 \{\dot{\psi}_{t1} - \dot{\psi}_{w1}\} + C_{wx} b_1^2 \{\dot{\psi}_{t1} - \dot{\psi}_{w2}\} + 2C_{wy} a^2 \dot{\psi}_{t1} - C_{wy} a\{\dot{y}_{w1} - \dot{y}_{w2}\}$$
$$+ K_{wx} b_1^2 \{\psi_{t1} - \psi_{w1}\} + K_{wx} b_1^2 \{\psi_{t1} - \psi_{w2}\} + 2K_{wy} a^2 \psi_{t1} - K_{wy} a\{y_{w1} - y_{w2}\}$$
$$+ 2k'_0 (b'_0)^2 \{\psi_{t1} - \psi_{y1}\} + 2k''_2 b_2^2 \{\psi_{t1} - \psi_b\} = 0$$

$$\cdots (11)$$

$$I_{Tz}\ddot{\psi}_{t2} + C_{wx} b_1^2 \{\dot{\psi}_{t2} - \dot{\psi}_{w3}\} + C_{wx} b_1^2 \{\dot{\psi}_{t2} - \dot{\psi}_{w3}\} + 2C_{wy} a^2 \dot{\psi}_{t2} - C_{wy} a\{\dot{y}_{w3} - \dot{y}_{w24}\}$$
$$+ K_{wx} b_1^2 \{\psi_{t2} - \psi_{w3}\} + K_{wx} b_1^2 \{\psi_{t2} - \psi_{w4}\} + 2K_{wy} a^2 \psi_{t2} - K_{wy} a\{y_{w3} - y_{w4}\}$$
$$+ 2k'_0 (b'_0)^2 \{\psi_{t2} - \psi_{y2}\} + 2k''_2 b_2^2 \{\psi_{t2} - \psi_b\} = 0$$

$$\cdots (12)$$

$I_{Tz}$ is a moment of inertia of the bogies 12a, 12b in the yawing direction. $\phi_{t1}\cdot\cdot$ is angular acceleration of the bogie 12a in the yawing direction. $\phi_{w2}\cdot$ is an angular velocity of the wheel set 13b in the yawing direction. $\phi_{w2}$ is a pivot amount (angular displacement) of the wheel set 13b in the yawing direction. $y_{w2}$ is a displacement of the wheel set 13b in the right and left direction. $k'_0$ is stiffness of a rubber bush of the yaw damper. $b'_0$ represents 1/2 of the interval between the two yaw dampers, which are disposed on the right and left sides of each of the bogies 12a, 12b, in the right and left direction (the interval between the two yaw dampers, which are disposed on the right and left sides of each of the bogies 12a, 12b, in the right and left direction becomes $2b'_0$). $\phi_{y1}$ is a pivot amount (angular displacement) of the yaw damper disposed on the bogie 12a in the yawing direction. $k''_2$ is a spring constant of the air spring (bolster spring) in the right and left direction. $b_2$ represents 1/2 of the interval between the two air springs (bolster springs), which are disposed on the right and left sides of each of the bogies 12a, 12b, in the right and left direction (the interval between the two air springs (bolster springs), which are disposed on the right and left sides of each of the bogies 12a, 12b, in the right and left direction becomes $2b_2$). Incidentally, respective variables in (12) Equation are represented by being replaced with the variables in (11) Equation according to the meanings of the aforementioned subscripts.

[Rolling of the bogie]

The motion equations that describe the rollings of the bogies 12a, 12b are expressed by (13) Equation and (14) Equation below.

[Mathematical equation 5]

$$I_{Tx}\ddot{\phi}_{t1}$$

$$+2c_1(b'_1)^2\dot{\phi}_{t1}+2c_2b_2^2\{\dot{\phi}_{t1}-\dot{\phi}_{a1}\}+C_{wy}h_1[2\{\dot{y}_{t1}+h_1\dot{\phi}_{t1}\}-\{\dot{y}_{w1}+\dot{y}_{w2}\}]$$

$$-c'_2h_4[\{\dot{y}_{t1}-h_4\dot{\phi}_{t1}\}-\{\dot{y}_b+L\dot{\psi}_b+h_5\dot{\phi}_b\}]$$

$$+2k_1b_1^2\phi_{t1}+2\lambda k_2b_2^2\{\phi_{t1}-\phi_{a1}\}+K_{wy}h_1[2\{y_{t1}+h_1\phi_{t1}\}-\{y_{w1}+y_{w2}\}]$$

$$-2k'_2h_2[\{y_{t1}-h_2\phi_{t1}\}-\{y_b+L\psi_b+h_3\phi_b\}]$$

$$+2k_3b_2^2\{\phi_{t1}-\phi_b\}=0 \qquad\qquad \cdots (13)$$

$$I_{Tx}\ddot{\phi}_{t2}$$

$$+2c_1(b'_1)^2\dot{\phi}_{t2}+2c_2b_2^2\{\dot{\phi}_{t2}-\dot{\phi}_{a2}\}+C_{wy}h_1[2\{\dot{y}_{t2}+h_1\dot{\phi}_{t2}\}-\{\dot{y}_{w3}+\dot{y}_{w4}\}]$$

$$-c'_2h_4[\{\dot{y}_{t2}-h_4\dot{\phi}_{t2}\}-\{\dot{y}_b-L\dot{\psi}_b+h_5\dot{\phi}_b\}]$$

$$+2k_1b_1^2\phi_{t2}+2\lambda k_2b_2^2\{\phi_{t2}-\phi_{a2}\}+K_{wy}h_1[2\{y_{t2}+h_1\phi_{t2}\}-\{y_{w3}+y_{w4}\}]$$

$$-2k'_2h_2[\{y_{t2}-h_2\phi_{t2}\}-\{y_b+L\psi_b+h_3\phi_b\}]$$

$$+2k_3b_2^2\{\phi_{t2}-\phi_b\}=0 \qquad\qquad \cdots (14)$$

$I_{Tx}$ is a moment of inertia of the bogies 12a, 12b in the rolling direction. $\phi_{t1}\cdot\cdot$ is angular acceleration of the bogie 12a in the rolling direction. $c_1$ is a damping constant of an axle damper in the up and down direction. $b'_i$ represents 1/2 of the interval between the two axle dampers, which are disposed on the right and left sides of each of the bogies 12a, 12b, in the right and left direction (the interval between the two axle dampers, which are disposed on the right and left sides of each of the bogies 12a, 12b, in the right and left direction becomes $2b'_1$). $c_2$ is a damping constant of the air spring (bolster spring) in the up and down direction. $\phi_{a1}\cdot$ is an angular velocity of the air spring (bolster spring) disposed on the bogie 12a in the rolling direction. $k_1$ is a spring constant of an axle spring in the up and down direction. $\lambda$ is a value obtained by dividing the volume of the air spring (bolster spring) main body by the volume of an auxiliary air

chamber. $k_2$ is a spring constant of the air spring (bolster spring) in the up and down direction. $\phi_{a1}$ is a pivot amount (angular displacement) of the air spring (bolster spring) disposed on the bogie 12a in the rolling direction. $k_3$ is equivalent stiffness by a change in effective pressure receiving area of the air spring (bolster spring). Incidentally, respective variables in (14) Equation are represented by being replaced with the variables in (13) Equation according to the meanings of the aforementioned subscripts. However, $\phi_{a2}$ is a pivot amount (angular displacement) of the air spring (bolster spring) disposed on the bogie 12b in the rolling direction.

[Transversal vibration of the vehicle body]

The motion equation that describes the transversal vibration of the vehicle body 11 (motion in the right and left direction) is expressed by (15) Equation below.
[Mathematical equation 6]

$$m_B \ddot{y}_b + 2c_2' \{\dot{y}_b + h_5 \dot{\phi}_b\} - c_2' [\{\dot{y}_{t1} + \dot{y}_{t2}\} - h_4 \{\dot{\phi}_{t1} + \dot{\phi}_{t2}\}]$$
$$+ 4 k_2' \{y_b + h_3 \phi_b\} - 2 k_2' [\{y_{t1} + y_{t2}\} - h_2 \{\phi_{t1} + \phi_{t2}\}] = 0$$
$$\cdots (15)$$

$m_B$ is the mass of the bogies 12a, 12b. $\ddot{y}_b$ is acceleration of the vehicle body 11 in the right and left direction. $\dot{y}_{t2}$ is a velocity of the bogie 12b in the right and left direction. $\dot{\phi}_{t2}$ is an angular velocity of the bogie 12b in the rolling direction. $y_{t2}$ is a displacement of the bogie 12b in the right and left direction. $\phi_{t2}$ is a pivot amount (angular displacement) of the bogie 12b in the rolling direction.

[Yawing of the vehicle body]

The motion equation that describes the yawing of the vehicle body 11 is expressed by (16) Equation below.
[Mathematical equation 7]

$$I_{Bz} \ddot{\psi}_b + 2c_2' L^2 \dot{\psi}_b - c_2' L \{\dot{y}_{t1} - \dot{y}_{t2}\} + c_2' L h_4 \{\dot{\phi}_{t1} - \dot{\phi}_{t2}\}$$
$$+ 2 c_0 (b_0')^2 \{\dot{\psi}_b - \dot{\psi}_{y1}\} + 2 c_0 (b_0')^2 \{\dot{\psi}_b - \dot{\psi}_{y2}\}$$
$$+ 4 k_2' L^2 \psi_b - 2 k_2' L \{y_{t1} - y_{t2}\} + 2 k_2' L h_2 \{\phi_{t1} - \phi_{t2}\}$$
$$+ 2 k_2'' b_2^2 \{\psi_b - \psi_{t1}\} + 2 k_2'' b_2^2 \{\psi_b - \psi_{t2}\} = 0 \quad \cdots (16)$$

$I_{Bz}$ is a moment of inertia of the vehicle body 11 in the yawing direction. $\ddot{\phi}_b$ is angular acceleration of the vehicle body 11 in the yawing direction. $c_0$ is a damping constant of the yaw damper in the forward and backward direction. $\dot{\phi}_{y1}$ is an angular velocity of the yaw damper disposed on the bogie 12a in the yawing direction. $\dot{\phi}_{y2}$ is an angular velocity of the yaw damper disposed on the bogie 12b in the yawing direction. $\phi_{t2}$ is a pivot amount (angular displacement) of the bogie 12b in the yawing direction.

[Rolling of the vehicle body]

The motion equation that describes the rolling of the vehicle body 11 is expressed by (17) Equation below.
[Mathematical equation 8]

$$I_{Bx}\ddot{\phi}_b + 2c_2' h_5\{\dot{y}_b + h_5\dot{\phi}_b\} - c_2' h_5[\{\dot{y}_{t1} + \dot{y}_{t2}\} - h_4\{\dot{\phi}_{t1} + \dot{\phi}_{t2}\}]$$
$$+ 4k_2' h_3\{y_b + h_3\phi_b\} - 2k_2' h_3[\{y_{t1} + y_{t2}\} - h_2\{\phi_{t1} + \phi_{t2}\}]$$
$$+ 2k_3 b_2^2\{\phi_b - \phi_{t1}\} + 2k_3 b_2^2\{\phi_b - \phi_{t2}\}$$
$$+ 2k_2 b_2^2\{\phi_b - \phi_{a1}\} + 2k_2 b_2^2\{\phi_b - \phi_{a2}\} = 0 \quad \cdots \quad (17)$$

$I_{Bx}$ is a moment of inertia of the vehicle body 11 in the rolling direction. $\ddot{\phi}_b$ is angular acceleration of the vehicle body 11 in the rolling direction.

[Yawing of the damper]

The motion equations that describe the yawing of the yaw damper disposed on the bogie 12a and the yawing of the yaw damper disposed on the bogie 12b are expressed by (18) Equation and (19) Equation below respectively.

[Mathematical equation 9]

$$2c_0(b_0')^2\{\dot{\psi}_{y1} - \dot{\psi}_b\} + 2k_0'(b_0')^2\{\psi_{y1} - \psi_{t1}\} = 0 \quad \cdots \quad (18)$$

$$2c_0(b_0')^2\{\dot{\psi}_{y2} - \dot{\psi}_b\} + 2k_0'(b_0')^2\{\psi_{y2} - \psi_{t2}\} = 0 \quad \cdots \quad (19)$$

$\phi_{y2}$ is a pivot amount (angular displacement) of the yaw damper disposed on the bogie 12b in the yawing direction.

[Rolling of the air spring (bolster spring)]

The motion equations that describe the rolling of the air spring (bolster spring) disposed on the bogie 12a and the rolling of the air spring (bolster spring) disposed on the bogie 12b are expressed by (20) Equation and (21) Equation below respectively.

[Mathematical equation 10]

$$2c_2 b_2^2\{\dot{\phi}_{a1} - \dot{\phi}_{t1}\} + 2\lambda k_2 b_2^2\{\phi_{a1} - \phi_{t1}\} + 2k_2 b_2^2\{\phi_{a1} - \phi_b\} = 0$$
$$\cdots \quad (20)$$

$$2c_2 b_2^2\{\dot{\phi}_{a2} - \dot{\phi}_{t2}\} + 2\lambda k_2 b_2^2\{\phi_{a2} - \phi_{t2}\} + 2k_2 b_2^2\{\phi_{a2} - \phi_b\} = 0$$
$$\cdots \quad (21)$$

$\ddot{\phi}_{a2}$ is an angular velocity of the air spring (bolster spring) disposed on the bogie 12b in the rolling direction.

<Relations between the alignment irregularity amount of the track and the motions of the railway vehicle>

Then, the findings that the present inventors obtained for improving the accuracy of the alignment irregularity amounts $y_{R1}$ to $y_{R4}$ will be explained.

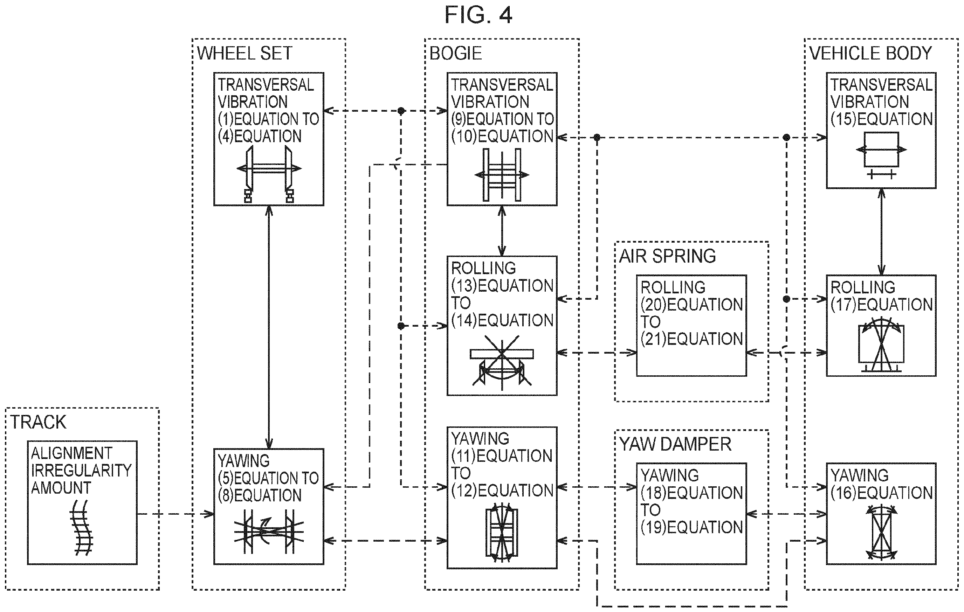

Fig. 4 is a view illustrating one example of interactive acting relations between the alignment irregularity amount and the motions of the components of the railway vehicle. Arrows drawn by a solid line indicate an acting relation between different motions of the same component. Arrows drawn by line types other than the solid line indicate an acting relation between motions of the different components. To each motion, a number of a motion equation that describes its motion, which is explained in this embodiment, is added. For example, the yawings of the wheel sets 13a to 13d are described by (5) Equation to (8) Equation. The yawings of the wheel sets 13a to 13d directly receive actions from the alignment irregularity amounts $y_{R1}$ to $y_{R4}$, the transversal vibrations of the wheel sets 13a to 13d, the transversal vibrations of the bogies 12a, 12b, and the yawings of the bogies 12a, 12b. The transversal vibrations of the bogies 12a, 12b are described by (9) Equation to (10) Equation. The transversal vibrations of the bogies 12a, 12b directly receive actions from the transversal vibrations of the wheel sets 13a to 13d, the rollings of the bogies 12a, 12b, the transversal vibration of the vehicle body 11, the yawing of the vehicle body 11, the yawings of the bogies 12a, 12b, and the rolling of the vehicle body 11, and do not directly receive actions from the yawings of the wheel sets 13a to 13d.

As is clear from Fig. 4, the alignment irregularity amounts $y_{R1}$ to $y_{R4}$ directly act on the yawings of the wheel sets 13a to 13d. This action propagates into the motions of the other components. A state equation is created from the motion equations relating to the motions of the components that directly or indirectly receive the action from the alignment irregularity amounts $y_{R1}$ to $y_{R4}$. Further, measurable state variables are measured from among the motions relating to the alignment irregularity amounts $y_{R1}$ to $y_{R4}$ to set an observation equation. Then, an operation using a filter that performs data assimilation such as a Kalman filter is performed, thereby making it possible to calculate the alignment irregularity amounts $y_{R1}$ to $y_{R4}$. However, the degree of freedom of the motion is large in this method, and thus there is a risk that the operation of the filter becomes no longer stable.

Thus, in order to improve the accuracy of the alignment irregularity amounts $y_{R1}$ to $y_{R4}$, the present inventors thought that it is only necessary to accurately calculate the yawings of the wheel sets 13a to 13d on which the alignment irregularity amounts $y_{R1}$ to $y_{R4}$ directly act and factors that directly act on the yawings of the wheel sets 13a to 13d (including the motions of the components), and to calculate the alignment irregularity amounts $y_{R1}$ to $y_{R4}$ by using the motion equations that describe the yawings of the wheel sets 13a to 13d. Further, the creep force is decomposed into a longitudinal creep force being a component in the forward and backward direction and a lateral creep force being a component in the right and left direction. The present inventors found out that the longitudinal creep force has a high correlation with the alignment irregularity amounts $y_{R1}$ to $y_{R4}$. The longitudinal creep force is measured by force in the forward and backward direction (the forward-and-backward-direction force) to occur in a member disposed between the wheel sets 13a to 13b (13c to 13d) and the bogie 12a (12b) on which these wheel sets 13a to 13b (13c to 13d) are provided. From the above, the inventors devised a method of calculating the alignment irregularity amounts $y_{R1}$ to $y_{R4}$ by using a measured value of the forward-and-backward-direction force.

Further, in-phase components of the longitudinal creep force in one wheel of right and left wheels in one wheel set and the longitudinal creep force in the other wheel are components corresponding to a braking force and a driving force. Accordingly, in order to calculate the alignment irregularity amounts $y_{R1}$ to $y_{R4}$ even when the railway vehicle accelerates or decelerates, the forward-and-backward-direction force is preferably determined so as to correspond to an opposite-phase component of the longitudinal creep force. The opposite-phase component of the longitudinal creep force is a component to be opposite in phase to each other between the longitudinal creep force in one wheel of the right and left wheels in one wheel set and the longitudinal creep force in the other wheel. That is, the opposite-phase component of the longitudinal creep force is a component, of the longitudinal creep force, in the direction in which the axle is twisted. In this case, the forward-and-backward-direction force becomes a component opposite in phase to each other out of forward-and-backward-direction components of forces to occur in the aforementioned two members attached to both the right and left sides of one wheel set.

Hereinafter, there will be explained concrete examples of the forward-and-backward-direction force in the case where the forward-and-backward-direction force is determined so as to correspond to the opposite-phase component of the longitudinal creep force.

In the case of the axle box suspension being a mono-link type axle box suspension, the axle box suspension includes a link, and the axle box and the bogie frame are coupled by the link. A rubber bush is attached to both ends of the link. In this case, the forward-and-backward-direction force becomes, out of forward-and-backward-direction components of loads that two links, which are attached to right and left ends of one wheel set one by one, receive, the component to be opposite in phase to each other. Further, due to arrangement and constitution of the links, the link mainly receives, out of loads in the forward and backward direction, the right and left direction, and the up and down direction, the load in the forward and backward direction. Accordingly, one strain gauge only needs to be attached to each link, for example. By using a measured value of the strain gauge, the forward-and-backward-direction component of the load that this link receives is derived, to thereby obtain a measured value of the forward-and-backward-direction force. Further, in place of applying such a design, a forward-and-backward-direction displacement of the rubber bush attached to the link may be measured by a displacement meter. In this case, the product of a measured displacement and a spring constant of this rubber bush is set as the measured value of the forward-and-backward-direction force. In the case of the axle box suspension being the mono-link type axle box suspension, the previously-described member for supporting the axle box becomes the link or the rubber bush.

Incidentally, in the load measured by the strain gauge attached to the link, not only the component in the forward and backward direction, but also at least one component of a component in the right and left direction and a component in the up and down direction is sometimes contained. However, even in such a case, due to the structure of the axle box suspension, the load of the component in the right and left direction and the load of the component in the up and down direction that the link receives are sufficiently smaller than the load of the component in the forward and backward direction. Accordingly, only attaching one strain gauge to each link makes it possible to obtain a measured value of the forward-and-backward-direction force, which has accuracy to be required practically. In this manner, the components other than the component in the forward and backward direction are sometimes included in the measured value of the forward-and-backward-direction force. Thus, three or more strain gauges may be attached to each link so as to cancel the strains in the up and down direction and the right and left direction. This makes it possible to improve the accuracy of the measured value of the forward-and-backward-direction force.

In the case of the axle box suspension being an axle beam type axle box suspension, the axle box suspension includes an axle beam, and the axle box and the bogie frame are coupled by the axle beam. The axle beam may be formed integrally with the axle box. A rubber bush is attached to a bogie frame-side end of the axle beam. In this case, the forward-and-backward-direction force becomes, out of forward-and-backward-direction components of loads that two axle beams, which are attached to right and left ends of one wheel set one by one, receive, the component to be opposite in phase to each other. Further, due to arrangement and constitution of the axle beams, the axle beam is likely to receive, out of loads in the forward and backward direction, the right and left direction, and the up and down direction, the load in the right and left direction, in addition to the load in the forward and backward direction. Accordingly, two or more strain gauges are attached to each axle beam so as to cancel the strain in the right and left direction, for example. By using measured values of these strain gauges, the forward-and-backward-direction component of the load that the axle beam receives is derived, to thereby obtain a measured value of the forward-and-backward-direction force. Further, in place of applying such a design, a forward-and-backward-direction displacement of the rubber bush attached to the axle beam may be measured by a displacement meter. In this case, the product of a measured displacement and a spring constant of this rubber bush is set as the measured value of the forward-and-backward-direction force. In the case of the axle box suspension being the axle beam type axle box suspension, the previously-described member for supporting the axle box becomes the axle beam or the rubber bush.

Incidentally, in the load measured by the strain gauge attached to the axle beam, not only the components in the forward and backward direction and the right and left direction, but also the component in the up and down direction is sometimes included. However, even in such a case, due to the structure of the axle box suspension, the load of the component in the up and down direction that the axle beam receives is sufficiently smaller than the load of the component in the forward and backward direction and the load of the component in the right and left direction. Accordingly, unless the strain gauge is attached so as to cancel the load of the component in the up and down direction that the axle beam receives, a measured value of the forward-and-backward-direction force, which has accuracy to be required practically, can be obtained. In this manner, the components other than the component in the forward and backward direction are sometimes included in the measured forward-and-backward-direction force, and three or more strain gauges may be attached to each axle beam so as to cancel the strain in the up and down direction as well as the strain in the right and left direction. This makes it possible to improve the accuracy of the measured value of the forward-and-backward-direction force.

In the case of the axle box suspension being a leaf spring type axle box suspension, the axle box suspension includes a leaf spring, and the axle box and the bogie frame are coupled by the leaf spring. A rubber bush is attached to ends of the leaf spring. In this case, the forward-and-backward-direction force becomes, out of forward-and-backward-direction components of loads that two leaf springs, which are attached to right and left ends of one wheel set one by one, receive, the component to be opposite in phase to each other. Further, due to arrangement and constitution of the leaf springs, the leaf spring is likely to receive, out of loads in the forward and backward direction, the right and left direction, and the up and down direction, the load in the right and left direction and the load in the up and down direction, in addition to the load in the forward and backward direction. Accordingly, three or more strain gauges are attached to each leaf spring so as to cancel the strains in the right and left direction and the up and down direction, for example. By using measured values of these strain gauges, the forward-and-backward-direction component of the load that the leaf spring receives is derived, to thereby obtain a measured value of the forward-and-backward-direction force. Further, in place of applying such a design, a forward-and-backward-direction displacement of the rubber bush attached to the leaf spring may be measured by a displacement meter. In this case, the product of a measured displacement and a spring constant of this rubber bush is set as the measured value of the forward-and-backward-direction force. In the case of the axle box suspension being the leaf spring type axle box suspension, the previously-described member for supporting the axle box becomes the leaf spring or the rubber bush.

Incidentally, as the aforementioned displacement meter, a well-known laser displacement meter or eddy current displacement meter can be used.

Further, the forward-and-backward-direction force was explained here by taking the case of the system of the axle box suspension being a mono-link type, an axle beam type, and a leaf spring type as an example. However, the system of the axle box suspension is not limited to the mono-link type, the axle beam type, and the leaf spring type. In conformity with the system of the axle box suspension, the forward-and-backward-direction force can be determined in the same manner as in the mono-link type, the axle beam type, and the leaf spring type.

Further, the case where a measured value of a single forward-and-backward-direction force can be obtained in one wheel set will be explained as an example, in order to simplify the explanation below. That is, the railway vehicle illustrated in Fig. 1 has the four wheel sets 13a to 13d. Accordingly, it is possible to obtain measured values of four forward-and-backward-direction forces $T_1$ to $T_4$.

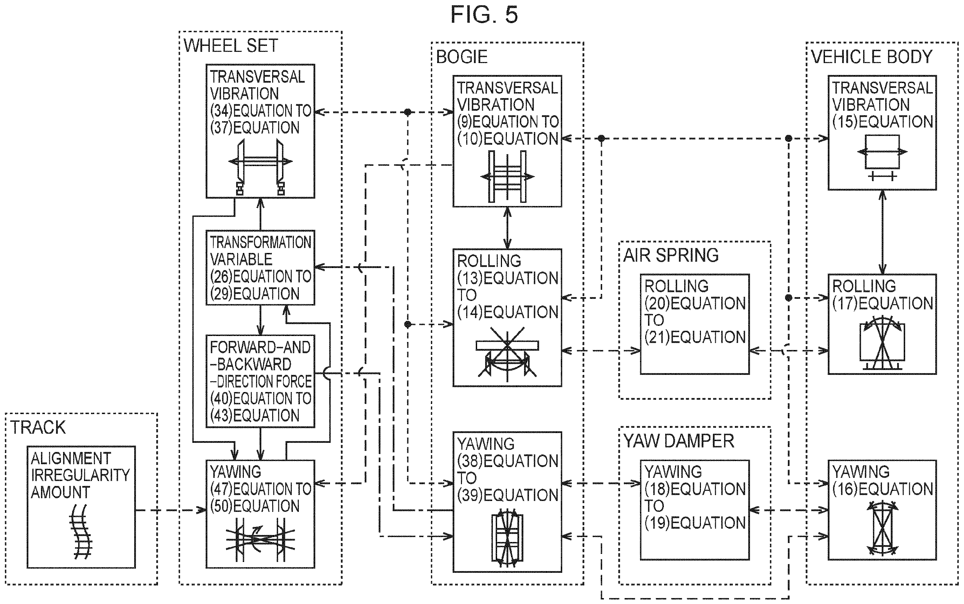

Fig. 5 is a view that illustrates one example of interactive acting relations between the alignment irregularity amounts $y_{R1}$ to $y_{R4}$ and the motions of the components of the railway vehicle while using the forward-and-backward-direction forces $T_1$ to $T_4$. There will be later explained concrete examples of calculation equations of the forward-and-backward-direction forces $T_1$ to $T_4$, calculation equations of transformation variables $e_1$ to $e_4$, motion equations that describe transversal vibrations of the wheel sets 13a to 13d when the transformation variables $e_1$ to $e_4$ are used, and motion equations that describe yawings of the wheel sets 13a to 13d when the forward-and-backward-direction forces $T_1$ to $T_4$ are used (refer to (40) Equation to (43) Equation, (26) Equation to (29) Equation, (34) Equation to (37) Equation, and (64) Equation to (67) Equation respectively).

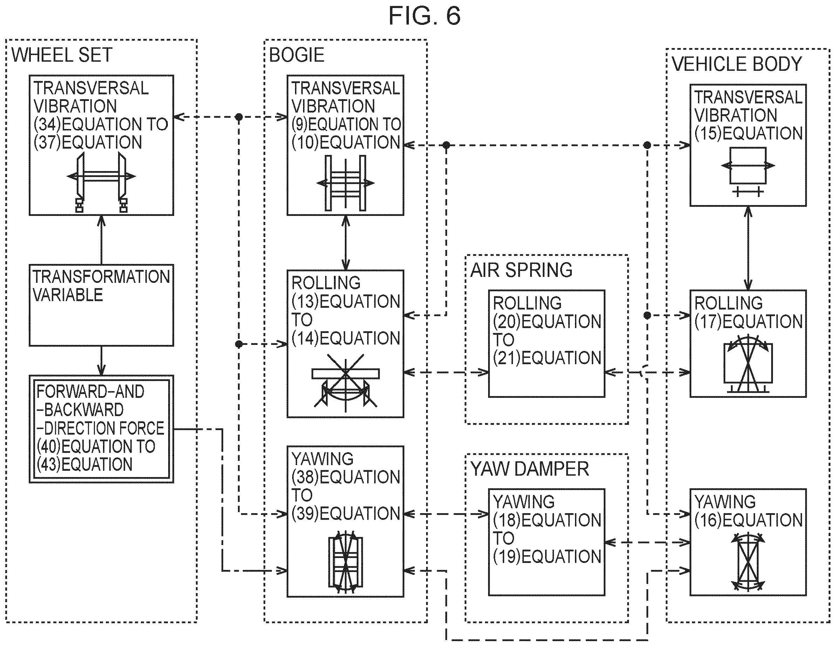

Fig. 6 is a view illustrating acting relations necessary for determining the motions of the components that directly act on the yawings of the wheel sets 13a to 13d, which are extracted from the acting relations in Fig. 5. The degrees of freedom of the motions decrease by the eliminated amount of the yawings of the wheel sets 13a to 13d. Further, measured values to be used for the filter that performs data assimilation such as a Kalman filter increase by the forward-and-backward-direction forces $T_1$ to $T_4$. Accordingly, the accuracy of information of motion to be calculated by performing the operation using the filter that performs data assimilation such as a Kalman filter improves.

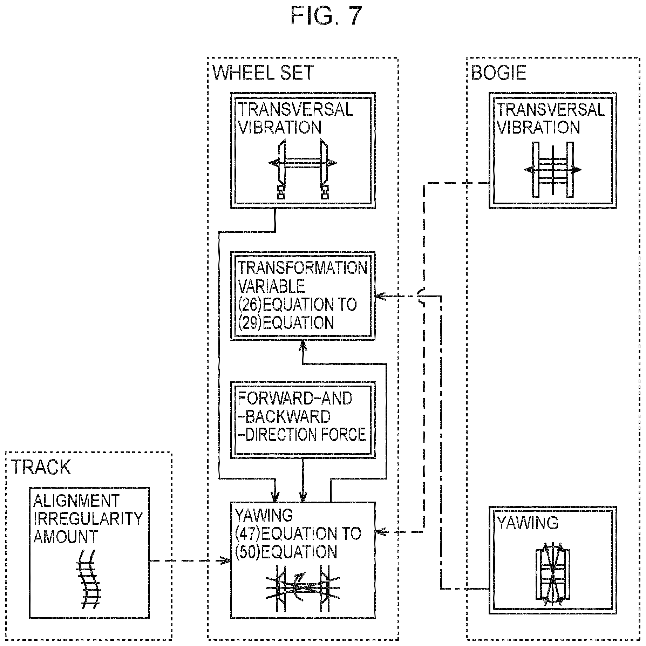

In the meantime, Fig. 7 is a view illustrating acting relations necessary for determining the alignment irregularity amounts $y_{R1}$ to $y_{R4}$, which are extracted from the acting relations in Fig. 5. The transformation variables $e_1$ to $e_4$ and the information of the yawings of the bogies 12a, 12b are already known. Thus, by using the calculation equations of the transformation variables $e_1$ to $e_4$ ((26) Equation to (29) Equation in a later-described example), information of the yawings of the wheel sets 13a to 13d is calculated. The transformation variables $e_1$ to $e_4$ at this time are directly derived from the values of the forward-and-backward-direction forces $T_1$ to $T_4$. Further, the information of the yawings of the bogies 12a, 12b is calculated by using the acting relations in Fig. 6. Thus, the accuracy of the information of the yawings of the wheel sets 13a to 13d calculated from the transformation variables $e_1$ to $e_4$ and the information of the yawings of the bogies 12a, 12b improves as compared to the case where it is calculated by using the acting relations in Fig. 4. Further, the information of the yawings of the wheel sets 13a to 13d, the forward-and-backward-direction forces $T_1$ to $T_4$, and the information of the motions of the components directly acting on the yawings of the wheel sets 13a to 13d (the transversal vibrations of the wheel sets 13a to 13d and the transversal vibrations of the bogies 12a, 12b) are already known. Thus, by using the motion equations that describe the yawings of the wheel sets 13a to 13d ((64) Equation to (67) Equation in a later-described example), the alignment irregularity amounts $y_{R1}$ to $y_{R4}$ are calculated. The accuracy of the information of the yawings of the wheel sets 13a to 13d at this time improves as compared to the case where it is calculated by using the acting relations in Fig. 4, as described previously. Further, the forward-and-backward-direction forces $T_1$ to $T_4$ are measured values. Further, the information of the motions of the components that directly act on the yawings of the wheel sets 13a to 13d is calculated by using the acting relations in Fig. 6, and thus its accuracy improves. Accordingly, the accuracy of the alignment irregularity amounts $y_{R1}$ to $y_{R4}$ that are calculated as above improves. In each of the following embodiments, the case where the alignment irregularity amounts $y_{R1}$ to $y_{R4}$ are calculated by using the above equations will be explained as an example.

(First embodiment)

Then, there will be explained a first embodiment of the present invention.

inspection apparatus 800>

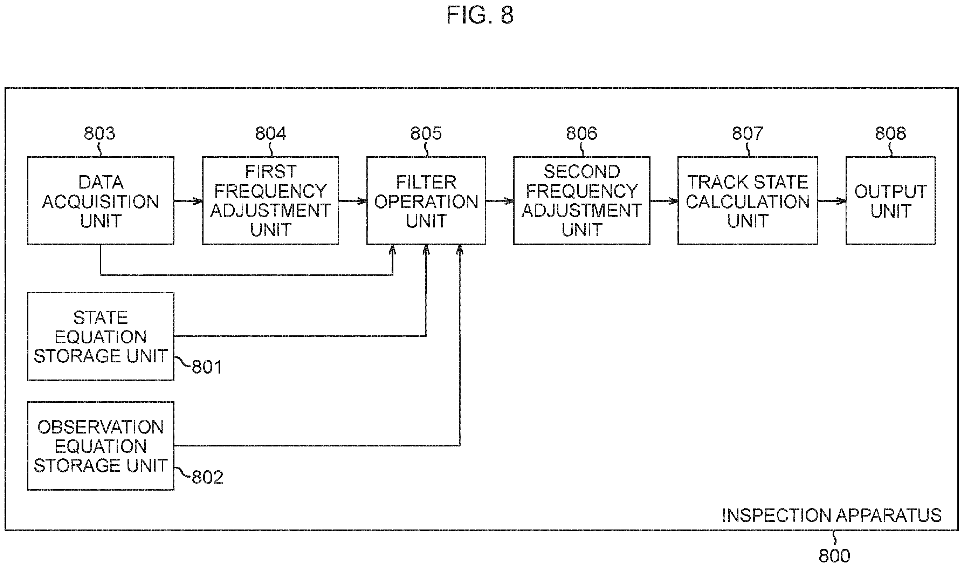

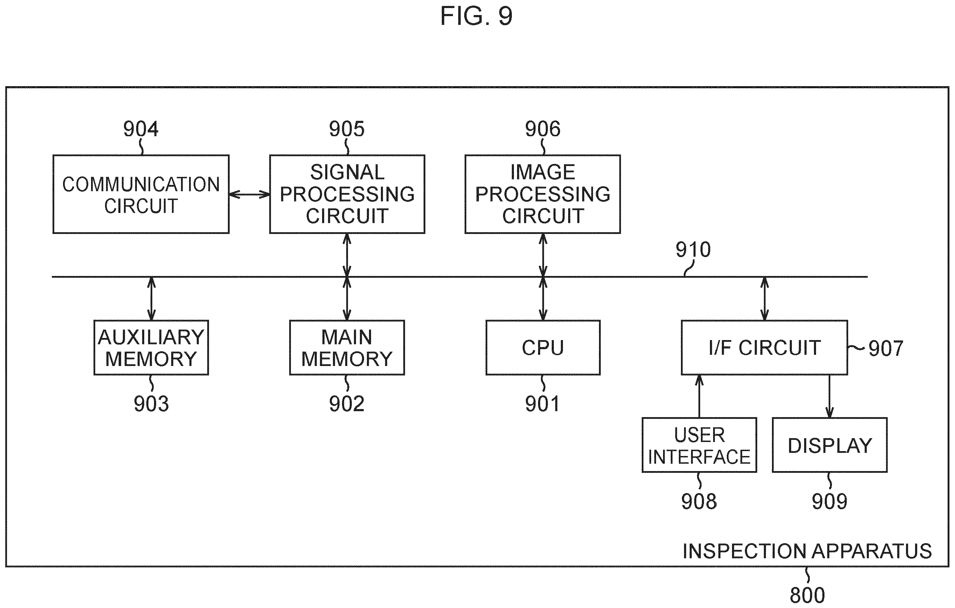

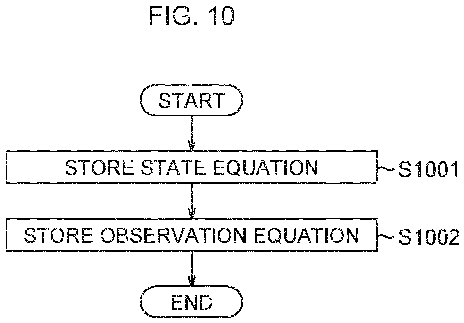

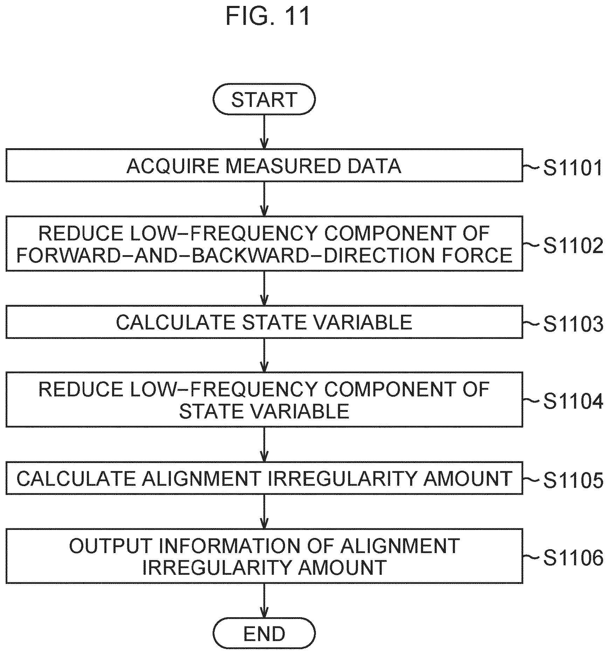

Fig. 8 is a diagram illustrating one example of a functional configuration of an inspection apparatus 800. Fig. 9 is a diagram illustrating one example of a hardware configuration of the inspection apparatus 800. Fig. 10 is a flowchart illustrating one example of preprocessing in the inspection apparatus 800. Fig. 11 is a flowchart illustrating one example of main processing in the inspection apparatus 800. In this embodiment, as illustrated in Fig. 1, the case where the inspection apparatus 800 is mounted on the railway vehicle will be explained as an example.

In Fig. 8, the inspection apparatus 800 includes, as its functions, a state equation storage unit 801, an observation equation storage unit 802, a data acquisition unit 803, a first frequency adjustment unit 804, a filter operation unit 805, a second frequency adjustment unit 806, a track state calculation unit 807, and an output unit 808.

In Fig. 9, the inspection apparatus 800 includes a CPU 901, a main memory 902, an auxiliary memory 903, a communication circuit 904, a signal processing circuit 905, an image processing circuit 906, an I/F circuit 907, a user interface 908, a display 909, and a bus 910.

The CPU 901 overall controls the entire inspection apparatus 800. The CPU 901 uses the main memory 902 as a work area to execute a program stored in the auxiliary memory 903. The main memory 902 stores data temporarily. The auxiliary memory 903 stores various data, in addition to programs to be executed by the CPU 901. The auxiliary memory 903 stores state equations and observation equations to be described later. The state equation storage unit 801 and the observation equation storage unit 802 are fabricated by using the CPU 901 and the auxiliary memory 903, for example.

The communication circuit 904 is a circuit intended for performing communication with the outside of the inspection apparatus 800. The communication circuit 904 receives information of the measured value of the forward-and-backward-direction force and information of measured values of accelerations of the vehicle body 11, the bogies 12a, 12b, and the wheel sets 13a to 13d in the right and left direction, for example. The communication circuit 904 may perform radio communication or wire communication with the outside of the inspection apparatus 800. The communication circuit 904 is connected to an antenna provided on the railway vehicle in the case of performing radio communication.

The signal processing circuit 905 performs various signal processings on signals received in the communication circuit 904 and signals input according to the control by the CPU 901. The data acquisition unit 803 is fabricated by using the CPU 901, the communication circuit 904, and the signal processing circuit 905, for example. Further, the first frequency adjustment unit 804, the filter operation unit 805, the second frequency adjustment unit 806, and the track state calculation unit 807 are fabricated by using the CPU 901 and the signal processing circuit 905, for example.

The image processing circuit 906 performs various image processings on signals input according to the control by the CPU 901. The signal that has been subjected to the image processing is output on the display 909.

The user interface 908 is a part in which an operator gives an instruction to the inspection apparatus 800. The user interface 908 includes buttons, switches, dials, and so on, for example. Further, the user interface 908 may include a graphical user interface using the display 909.

The display 909 displays an image based on a signal output from the image processing circuit 906. The I/F circuit 907 exchanges data with a device connected to the I/F circuit 907. In Fig. 9, as the device to be connected to the I/F circuit 907, the user interface 908 and the display 909 are illustrated. However, the device to be connected to the I/F circuit 907 is not limited to these. For example, a portable storage medium may be connected to the I/F circuit 907. Further, at least a part of the user interface 908 and the display 909 may be provided outside the inspection apparatus 800.

The output unit 808 is fabricated by using the communication circuit 904, the signal processing circuit 905, and at least any one of the image processing circuit 906, the I/F circuit 907, and the display 909, for example.

Incidentally, the CPU 901, the main memory 902, the auxiliary memory 903, the signal processing circuit 905, the image processing circuit 906, and the I/F circuit 907 are connected to the bus 910. Communication among these components is performed via the bus 910. Further, the hardware of the inspection apparatus 800 is not limited to the one illustrated in Fig. 9 as long as it can perform later-described functions of the inspection apparatus 800.

[State equation storage unit 801, S1001]

The state equation storage unit 801 stores state equations. In this embodiment, out of the aforementioned motion equations, the motion equations that describe the yawings of the wheel sets 13a to 13d of (5) Equation to (8) Equation are not included in the state equation. The alignment irregularity amounts $y_{R1}$ to $y_{R4}$ are included in (5) Equation to (8) Equation. In the case where (5) Equation to (8) Equation are included in the state equation and filtering by a later-described Kalman filter is performed, a model of the track 16 is required. The alignment irregularity is not described according to the physical law. Accordingly, it is necessary to create the model of the track 16 so that time differentiations of the alignment irregularity amounts $y_{R1}$ to $y_{R4}$ become white noise, for example. Then, uncertainty of the model of the track 16 is liable to affect a result of the filtering by the later-described Kalman filter. Further, by reducing the state equations and reducing the state variables, it is possible to stabilize the operation of the later-described Kalman filter.

Based on the above findings, in this embodiment, the motion equations that describe the yawings of the wheel sets 13a to 13d of (5) Equation to (8) Equation are not included in the state equation, and the state equation is constituted as follows.

First, the motion equations that describe the transversal vibrations of the bogies 12a, 12b (motion in the right and left direction) of (9) Equation and (10) Equation, the motion equations that describe the rollings of the bogies 12a, 12b of (13) Equation and (14) Equation, the motion equation that describes the transversal vibration of the vehicle body 11 (motion in the right and left direction) of (15) Equation, the motion equation that describes the yawing of the vehicle body 11 of (16) Equation, the motion equation that describes the rolling of the vehicle body 11 of (17) Equation, the motion equations that describe the yawings of the yaw damper disposed on the bogie 12a and the yaw damper disposed on the bogie 12b of (18) Equation and (19) Equation, and the motion equations that describe the rollings of the air spring (bolster spring) disposed on the bogie 12a and the air spring (bolster spring) disposed on the bogie 12b of (20) Equation and (21) Equation are used as they are to constitute the state equation.

In the meantime, in the motion equations that describe the transversal vibrations of the wheel sets 13a to 13d (motion in the right and left direction) of (1) Equation to (4) Equation and the motion equations that describe the yawings of the bogies 12a, 12b of (11) Equation and (12) Equation, the pivot amounts (angular displacements) $\phi_{w1}$ to $\phi_{w4}$ and the angular velocities $\phi_{w1}\cdot$ to $\phi_{w4}\cdot$ of the wheel sets 13a to 13d in the yawing direction are included. As described previously, in this embodiment, the motion equations that describe the yawings of the wheel sets 13a to 13d of (5) Equation to (8) Equation are not included in the state equation. Thus, in this embodiment, results obtained after eliminating these variables from (1) Equation to (4) Equation, (11) Equation, and (12) Equation are used to constitute the state equation in the following manner.

First, the forward-and-backward-direction forces $T_1$ to $T_4$ of the wheel sets 13a to 13d are expressed by (22) Equation to (25) Equation below. In this manner, the forward-and-backward-direction forces $T_1$ to $T_4$ are determined according to the differences between the angular displacements $\phi_{w1}$ to $\phi_{w4}$ of the wheel sets in the yawing direction and the angular displacements $\phi_{t1}$ to $\phi_{t2}$ of the bogies on which these wheel sets are provided in the yawing direction.

[Mathematical equation 11]

$$T_1 = C_{wx} b_1^2 \{ \dot{\psi}_{t1} - \dot{\psi}_{w1} \} + K_{wx} b_1^2 \{ \psi_{t1} - \psi_{w1} \} \qquad \cdots (22)$$

$$T_2 = C_{wx} b_1^2 \{ \dot{\psi}_{t1} - \dot{\psi}_{w2} \} + K_{wx} b_1^2 \{ \psi_{t1} - \psi_{w2} \} \qquad \cdots (23)$$

$$T_3 = C_{wx} b_1^2 \{ \dot{\psi}_{t2} - \dot{\psi}_{w3} \} + K_{wx} b_1^2 \{ \psi_{t2} - \psi_{w3} \} \qquad \cdots (24)$$

$$T_4 = C_{wx} b_1^2 \{ \dot{\psi}_{t2} - \dot{\psi}_{w4} \} + K_{wx} b_1^2 \{ \psi_{t2} - \psi_{w4} \} \qquad \cdots (25)$$

The transformation variables $e_1$ to $e_4$ are defined like (26) Equation to (29) Equation below. As above, the transformation variables $e_1$ to $e_4$ are defined by the differences between the angular displacements $\phi_{t1}$ to $\phi_{t2}$ of the bogies in the yawing direction and the angular displacements $\phi_{w1}$ to $\phi_{w4}$ of the wheel sets in the yawing direction. The transformation variables $e_1$ to $e_4$ are variables for performing mutual transformation between the angular displacements $\phi_{t1}$ to $\phi_{t2}$ of the bogies in the yawing direction and the angular displacements $\phi_{w1}$ to $\phi_{w4}$ of the wheel sets in the yawing direction.

[Mathematical equation 12]

$$e_1 = \psi_{t1} - \psi_{w1} \qquad \cdots (26)$$

$$e_2 = \psi_{t1} - \psi_{w2} \qquad \cdots (27)$$

$$e_3 = \psi_{t2} - \psi_{w3} \qquad \cdots (28)$$

$$e_3 = \psi_{t2} - \psi_{w4} \qquad \cdots (29)$$

When (26) Equation to (29) Equation are modified, (30) Equation to (33) Equation below are obtained.

[Mathematical equation 13]

$$\psi_{w1} = \psi_{t1} - e_1 \qquad \cdots (30)$$

$$\psi_{w2} = \psi_{t1} - e_2 \qquad \cdots (31)$$

$$\psi_{w3} = \psi_{t2} - e_3 \qquad \cdots (32)$$

$$\psi_{w4} = \psi_{t2} - e_4 \qquad \cdots (33)$$

When (30) Equation to (33) Equation are substituted into the motion equations that describe the transversal vibrations of the wheel sets 13a to 13d (motion in the right and left direction) of (1) Equation to (4) Equation, (34) Equation to (37) Equation below are obtained.

[Mathematical equation 14]

$$m_w \ddot{y}_{w1} + \frac{f_2}{v} \dot{y}_{w1} + C_{wy}[\dot{y}_{w1} - \{\dot{y}_{t1} + a\dot{\psi}_{t1} + h_1\dot{\phi}_{t1}\}] - f_2\psi_{t1} + K_{wy}[y_{w1} - \{y_{t1} + a\psi_{t1} + h_1\phi_{t1}\}] = -f_2 e_1$$
$$\cdots (34)$$

$$m_w \ddot{y}_{w2} + \frac{f_2}{v} \dot{y}_{w2} + C_{wy}[\dot{y}_{w2} - \{\dot{y}_{t1} + a\dot{\psi}_{t1} + h_1\dot{\phi}_{t1}\}] - f_2\psi_{t1} + K_{wy}[y_{w2} - \{y_{t1} + a\psi_{t1} + h_1\phi_{t1}\}] = -f_2 e_1$$
$$\cdots (35)$$

$$m_w \ddot{y}_{w3} + \frac{f_2}{v} \dot{y}_{w3} + C_{wy}[\dot{y}_{w3} - \{\dot{y}_{t2} + a\dot{\psi}_{t2} + h_1\dot{\phi}_{t2}\}] - f_2\psi_{t2} + K_{wy}[y_{w3} - \{y_{t2} + a\psi_{t2} + h_1\phi_{t2}\}] = -f_2 e_3$$
$$\cdots (36)$$

$$m_w \ddot{y}_{w4} + \frac{f_2}{v} \dot{y}_{w4} + C_{wy}[\dot{y}_{w4} - \{\dot{y}_{t2} + a\dot{\psi}_{t2} + h_1\dot{\phi}_{t2}\}] - f_2\psi_{t2} + K_{wy}[y_{w4} - \{y_{t2} + a\psi_{t2} + h_1\phi_{t2}\}] = -f_2 e_4$$
$$\cdots (37)$$

As above, the motion equations that describe the transversal vibrations of the wheel sets 13a to 13d (motion in the right and left direction) of (1) Equation to (4) Equation are expressed by using the transformation variables $e_1$ to $e_4$, thereby making it possible to eliminate the pivot amounts (angular displacements) $\phi_{w1}$ to $\phi_{w4}$ of the wheel sets 13a to 13d in the yawing direction that are included in these motion equations.

When (22) Equation to (25) Equation are substituted into the motion equations that describe the yawings of the bogies 12a, 12b of (11) Equation and (12) Equation, (38) Equation and (39) Equation below are obtained.

[Mathematical equation 15]

$$I_{Tz} \ddot{\psi}_{t1} + 2C_{wy} a^2 \dot{\psi}_{t1} - C_{wy} a\{\dot{y}_{w1} - \dot{y}_{w2}\}$$
$$+ 2K_{wy} a^2 \psi_{t1} - K_{wy} a\{y_{w1} - y_{w2}\}$$
$$+ 2k_0'(b_0')^2 \{\psi_{t1} - \psi_{y1}\} + 2k_2''b_2^2\{\psi_{t1} - \psi_b\} = -T_1 - T_2 \qquad \cdots (38)$$

$$I_{Tz} \ddot{\psi}_{t2} + 2C_{wy} a^2 \dot{\psi}_{t2} - C_{wy} a\{\dot{y}_{w3} - \dot{y}_{w4}\}$$
$$+ 2K_{wy} a^2 \psi_{t2} - K_{wy} a\{y_{w3} - y_{w4}\}$$
$$+ 2k_0'(b_0')^2 \{\psi_{t2} - \psi_{y2}\} + 2k_2''b_2^2\{\psi_{t2} - \psi_b\} = -T_3 - T_4 \qquad \cdots (39)$$

As above, the motion equations that describe the yawings of the bogies 12a, 12b of (11) Equation and (12) Equation are expressed by using the forward-and-backward-direction forces $T_1$ to $T_4$, thereby making it possible to eliminate the angular displacements $\phi_{w1}$ to $\phi_{w4}$ and the angular velocities $\phi_{w1} \cdot$ to $\phi_{w4} \cdot$ of the wheel sets 13a to 13d in the yawing direction that are included in these motion equations.

Further, when (26) Equation to (29) Equation are substituted into (22) Equation to (25) Equation, (40) Equation to (43) Equation below are obtained.

[Mathematical equation 16]

$$C_{wx} b_1^2 \dot{e}_1 + K_{wx} b_1^2 e_1 = T_1 \qquad \cdots (40)$$

$$C_{wx} b_1^2 \dot{e}_2 + K_{wx} b_1^2 e_2 = T_2 \qquad \cdots (41)$$

$$C_{wx} b_1^2 \dot{e}_3 + K_{wx} b_1^2 e_3 = T_3 \qquad \cdots (42)$$

$$C_{wx} b_1^2 \dot{e}_4 + K_{wx} b_1^2 e_4 = T_4 \qquad \cdots (43)$$

As above, in this embodiment, like (34) Equation to (37) Equation, the motion equations that describe the transversal vibrations of the wheel sets 13a to 13d (motion in the right and left direction) are expressed, and at the same time, like (38) Equation and (39) Equation, the motion equations that describe the yawings of the bogies 12a, 12b are expressed, and by using these, the state equation is constituted. Further, (40) Equation to (43) Equation are ordinary differential equations, and actual values of the transformation variables $e_1$ to $e_4$, which are solutions of the equations, can be derived by using the values of the forward-and-backward-direction forces $T_1$ to $T_4$ in the wheel sets 13a to 13d. Here, the values of the forward-and-backward-direction forces $T_1$ to $T_4$ are that a signal strength of a low-frequency component to be generated due to the railway vehicle traveling on the curved portion of the track is reduced from the time-series data of the measured value of the forward-and-backward-direction force by the later-described first frequency adjustment unit 804.

The actual values of the transformation variables $e_1$ to $e_4$ derived as above are given to (34) Equation to (37) Equation. Further, the values of the forward-and-backward-direction forces $T_1$ to $T_4$ in the wheel sets 13a to 13d are given to (38) Equation and (39) Equation. Here, the values of the forward-and-backward-direction forces $T_1$ to $T_4$ are that a signal strength of a low-frequency component to be generated due to the railway vehicle traveling on the curved portion of the track is reduced from the time-series data of the measured value of the forward-and-backward-direction force by the later-described first frequency adjustment unit 804.

In this embodiment, variables illustrated in (44) Equation below are set as the state variables, and by using the motion equations of (9) Equation, (10) Equation, (13) Equation to (21) Equation, and (34) Equation to (39) Equation, the state equation is constituted.

[Mathematical equation 17]

$$
\text{State variables} = \begin{bmatrix} \dot{y}_{w1} & y_{w1} & \dot{y}_{w2} & y_{w2} & \dot{y}_{w3} & y_{w3} & \dot{y}_{w4} & y_{w4} & \dot{y}_{t1} & y_{t1} & \dot{y}_{t2} & y_{t2} & \dot{\psi}_{t1} & \psi_{t1} & \dot{\psi}_{t2} & \psi_{t2} \\ \dot{\phi}_{t1} & \phi_{t1} & \dot{\phi}_{t2} & \phi_{t2} & \dot{y}_b & y_b & \dot{\psi}_b & \psi_b & \dot{\phi}_b & \phi_b & \psi_{y1} & \psi_{y2} & \phi_{a1} & \phi_{a2} \end{bmatrix}
$$

$$\cdots \ (44)$$

The state equation storage unit 801 receives the state equation constituted as above, for example, based on the operation of the user interface 908 by an operator and stores it.

[Observation equation storage unit 802, S1002]

The observation equation storage unit 802 stores observation equations. In this embodiment, the acceleration of the vehicle body 11 in the right and left direction, the accelerations of the bogies 12a, 12b in the right and left direction, and the accelerations of the wheel sets 13a to 13d in the right and left direction are set to observation variables. These observation variables are observation variables of the filtering by the later-described Kalman filter. In this embodiment, the motion equations that describe the transversal vibrations of (34) Equation to (37) Equation, (9) Equation, (10) Equation, and (15) Equation are used to constitute an observation equation. The observation equation storage unit 802 receives the observation equation constituted in this manner, for example, based on the operation of the user interface 908 by an operator and stores it.

After the state equation and the observation equation are stored in the inspection apparatus 800 as above, the data acquisition unit 803, the first frequency adjustment unit 804, the filter operation unit 805, the second frequency adjustment unit 806, the track state calculation unit 807, and the output unit 808 start. That is, after the preprocessing by the flowchart in Fig. 10 is finished, the main processing by the flowchart in Fig. 11 starts.

[Data acquisition unit 803, S1101]

The data acquisition unit 803 acquires measured data with a predetermined sampling period.

In this embodiment, the data acquisition unit 803 acquires, as the measured data, time-series data of a measured value of the acceleration of the vehicle body 11 in the right and left direction, time-series data of measured values of the accelerations of the bogies 12a, 12b in the right and left direction, and time-series data of measured values of the accelerations of the wheel sets 13a to 13d in the right and left direction. The respective accelerations are measured by using strain gauges attached to, for example, the vehicle body 11, the bogies 12a, 12b, and the wheel sets 13a to 13d respectively and an arithmetic device that calculates the accelerations by using measured values of these strain gauges. Incidentally, the measurement of the accelerations can be performed by a well-known technique, and thus its detailed explanation is omitted.

Further, the data acquisition unit 803 acquires, as the measured data, time-series data of the measured value of the forward-and-backward-direction force. The method of measuring the forward-and-backward-direction force is as described previously.

The data acquisition unit 803 can acquire the measured data by performing communication with the aforementioned arithmetic device, for example.

[First frequency adjustment unit 804, S1102]

The first frequency adjustment unit 804 reduces (preferably removes) the signal strength of the low-frequency component contained in the time-series data of the measured value of the forward-and-backward-direction force out of the measured data acquired by the data acquisition unit 803. A signal of this low-frequency component is a signal that is not measured when the railway vehicle is traveling on the linear track, but is measured when the railway vehicle is traveling on the curved track. That is, the signal measured when the railway vehicle is traveling on the curved track can be regarded as a signal obtained by superimposing the signal of this low-frequency component on the signal measured when the railway vehicle is traveling on the linear track.

The present inventors devised a model in which an AR (Auto-regressive) model is corrected. Then, the present inventors devised reducing the signal strength of the low-frequency component contained in the time-series data of the measured value of the forward-and-backward-direction force by using this model. In the following explanation, the model devised by the present inventors is referred to as a corrected AR model. In contrast to this, the well-known AR model is referred to as an AR model simply. Hereinafter, there will be explained one example of the corrected AR model.

A value of time-series data y of a physical quantity at a time k ($1 \le k \le M$) is set to $y_k$. M is a number indicating, as the time-series data y of the physical quantity, data until when are contained, and is preset. In the following explanation, the time-series data of the physical quantity will be abbreviated to data y as necessary. The AR model approximating the value $y_k$ of the data y is as in (45) Equation below, for example. The AR model is, as illustrated in (45) Equation, an equation expressing a predicted value $y^{\wedge}_k$ of the physical quantity at the time k ($m + 1 \le k \le M$) in the data y by using an actual value $y_{k-l}$ of the physical quantity at a time k - l ($1 \le l \le m$) prior to the time k in the data y. Incidentally, $y^{\wedge}_k$ is expressed by adding ^ above $y_k$ in (45) · Equation.

[Mathematical equation 18]

$$\hat{y}_k = \sum_{l=1}^{m} \alpha_l\, y_{k-l}, \qquad m+1 \le k \le M \qquad \cdots \ (45)$$

In (45) Equation, a is a coefficient of the AR model. m is a number of the value of the data y to be used for approximating the value $y_k$ of the data y at the time k in the AR model, and is a number among values $y_{k-l}$ to $y_{k-m}$ of the data y at continuous times k - l to k - m prior to the time k. m is an integer less than M. As m, for example, 1500 can be used.

Then, there is derived a conditional expression for approximating the predicted value $y^{\wedge}_k$ of the physical quantity at the time k by the AR model to the value $y_k$ by using a least square method. As the condition for approximating the predicted value $y^{\wedge}_k$ of the physical quantity at the time k by the AR model to the value $y_k$, it is possible to employ a condition that minimizes a square error between the predicted value $y^{\wedge}_k$ of the physical quantity at the time k by the AR model and the value $y_k$, for example. That is, the least square method is used in order to approximate the predicted value $y^{\wedge}_k$ of the physical quantity at the time k by the AR model to the value $y_k$. (46) Equation below is a conditional expression for minimizing the square error between the predicted value $y^{\wedge}_k$ of the physical quantity at the time k by the AR model and the value $y_k$.

[Mathematical equation 19]

$$\frac{\partial}{\partial \alpha_j} \sum_{k=m+1}^{M} \left| y_k - \sum_{l=1}^{m} \alpha_l\, y_{k-l} \right|^2$$

$$= 2 \sum_{k=m+1}^{M} \left\{ \left( y_k - \sum_{l=1}^{m} \alpha_l\, y_{k-l} \right) y_{k-j} \right\}$$

$$= 2 \left\{ \sum_{k=m+1}^{M} y_k\, y_{k-j} - \sum_{l=1}^{m} \alpha_l \sum_{k=m+1}^{M} y_{k-j}\, y_{k-l} \right\} = 0, \qquad 1 \le j \le m$$

$$\cdots \ (46)$$

The relation of (47) Equation below is established by (46) Equation.

[Mathematical equation 20]

$$\sum_{k=m+1}^{M} y_k \, y_{k-j} = \alpha_1 \sum_{k=m+1}^{M} y_{k-j} \, y_{k-1} + \alpha_2 \sum_{k=m+1}^{M} y_{k-j} \, y_{k-2}$$

$$+ \cdots + \alpha_m \sum_{k=m+1}^{M} y_{k-j} \, y_{k-m}, \qquad 1 \le j \le m \qquad \cdots \quad (47)$$

Further, (47) Equation is modified (expressed in matrix notation form), and thereby (48) Equation below is obtained.

[Mathematical equation 21]

$$R_{j0} = (R_{j1} \ R_{j2} \ \cdots R_{jm}) \begin{pmatrix} \alpha_1 \\ \alpha_2 \\ \vdots \\ \alpha_m \end{pmatrix}, \qquad 1 \le j \le m \qquad \cdots \quad (48)$$

$R_{j1}$ in (48) Equation is called autocorrelation of the data y, and is a value defined by (49) Equation below. $|j - l|$ at this time is referred to as a time lag.

[Mathematical equation 22]

$$R_{jl} = \sum_{k=m+1}^{M} y_{k-j} \, y_{k-l}, \qquad 1 \le j \le m, \ 0 \le l \le m \qquad \cdots \quad (49)$$

Based on (48) Equation, (50) Equation below is considered. (50) Equation is an equation derived from a condition that minimizes the error between the predicted value $y^\wedge_k$ of the physical quantity at the time k by the AR model and the value $y_k$ of the physical quantity at the time k corresponding to the predicted value $y^\wedge_k$. (50) Equation is called a Yule-Walker equation. Further, (50) Equation is a linear equation in which a vector composed of coefficients of the AR model is set to a variable vector. A constant vector on the left side in (50) Equation is a vector whose component is the autocorrelation of the data y with a time lag of 1 to m. In the following explanation, the constant vector on the left side in (50) Equation is referred to as an autocorrelation vector as necessary. Further, a coefficient matrix on the right side in (50) Equation is a matrix whose component is the autocorrelation of the data y with a time lag of 0 to m - 1. In the following explanation, the coefficient matrix on the right side in (50) Equation is referred to as an autocorrelation matrix as necessary.

[Mathematical equation 23]

$$\begin{pmatrix} R_{10} \\ R_{20} \\ \vdots \\ R_{m0} \end{pmatrix} = \begin{pmatrix} R_{11} & R_{12} & \cdots & R_{1m} \\ R_{21} & R_{22} & \cdots & R_{2m} \\ \vdots & \vdots & \ddots & \vdots \\ R_{m1} & R_{m2} & \cdots & R_{mm} \end{pmatrix} \begin{pmatrix} a_1 \\ a_2 \\ \vdots \\ a_m \end{pmatrix} \qquad \cdots \quad (50)$$

Further, the autocorrelation matrix on the right side in (50) Equation (a matrix of m × m composed of $R_{jl}$) is described as an autocorrelation matrix R like (51) Equation below.

[Mathematical equation 24]

$$R = \begin{pmatrix} R_{11} & R_{12} & \cdots & R_{1m} \\ R_{21} & R_{22} & \cdots & R_{2m} \\ \vdots & \vdots & & \vdots \\ R_{m1} & R_{m2} & \cdots & R_{mm} \end{pmatrix} \qquad \cdots \quad (51)$$

In general, when deriving the coefficient of the AR model, a method of solving a coefficient $\alpha$ of (50) Equation is used. In (50) Equation, the coefficient $\alpha$ is derived so as to make the predicted value $y^{\wedge}_k$ of the physical quantity at the time k derived by the AR model come close to the value $y_k$ of the physical quantity at the time k as much as possible. Therefore, frequency characteristics of the AR model include a large number of frequency components included in the value $y_k$ of the data y at each time.

Thus, the present inventors focused on the autocorrelation matrix R to be multiplied by the coefficient $\alpha$ of the AR model and earnestly examined it. As a result, the present inventors found out that it is possible to reduce the effect of a high-frequency component contained in the data y by using a part of eigenvalues of the autocorrelation matrix R. That is, the present inventors found out that it is possible to rewrite the autocorrelation matrix R so that the low-frequency component is emphasized.

There will be explained a concrete example of the above below.

The autocorrelation matrix R is subjected to singular value decomposition. Elements of the autocorrelation matrix R are symmetric. Thus, when the autocorrelation matrix R is subjected to singular value decomposition, like (52) Equation below, the result becomes the product of an orthogonal matrix U, a diagonal matrix $\Sigma$, and a transposed matrix of the orthogonal matrix U.

[Mathematical equation 25]

$$R = U \Sigma U^{\mathsf{T}} \qquad \cdots \quad (52)$$

The diagonal matrix $\Sigma$ in (52) Equation is a matrix whose diagonal component is the eigenvalues of the autocorrelation matrix R as illustrated in (53) Equation below. The diagonal component of the diagonal matrix $\Sigma$ is set to $\sigma_{11}$, $\sigma_{22}$, $\cdots$, $\sigma_{mm}$. Further, the orthogonal matrix U is a matrix in which each column component vector is an eigenvector of the autocorrelation matrix R. The column component vector of the diagonal matrix U is set to $u_1$, $u_2$, $\cdots$, $u_m$. There is a correspondence relation in which the eigenvalue of the autocorrelation matrix R responsive to an eigenvector $u_j$ is $\sigma_{jj}$. The eigenvalue of the autocorrelation matrix R is a variable reflecting the strength of each frequency component included in a time waveform of the predicted value $y^{\wedge}_k$ of the physical quantity at the time k by the AR model.

[Mathematical equation 26]

$$\Sigma = \begin{pmatrix} \sigma_{11} & 0 & 0 \\ 0 & \ddots & 0 \\ 0 & 0 & \sigma_{mm} \end{pmatrix}, U = \begin{pmatrix} u_1 & u_2 & \cdots & u_m \end{pmatrix} \qquad \cdots \quad (53)$$

The values of $\sigma_{11}$, $\sigma_{22}$, $\cdots$, $\sigma_{mm}$ being the diagonal components of the diagonal matrix $\Sigma$ obtained by the result of the singular value decomposition of the autocorrelation matrix R are set in descending order in order to simplify the illustration of the mathematical equation. A matrix R' is defined as in (54) Equation below by using, out of the eigenvalues of the autocorrelation matrix R illustrated in (53) Equation, s pieces of the eigenvalues, which are chosen from the largest. s is a number that is 1 or more and less than m. In this embodiment, s is preset. The matrix R' is a matrix resulting from approximating the autocorrelation matrix R by using s pieces of the eigenvalues out of the eigenvalues of the autocorrelation matrix R.

[Mathematical equation 27]

$$R' = U_s \Sigma_s U_s^{\mathsf{T}} \qquad \cdots \quad (54)$$

A matrix $U_s$ in (54) Equation is a matrix of m × s composed of s pieces of the column component vectors, which are chosen from the left of the orthogonal matrix U of (52) Equation, (eigenvectors corresponding to the eigenvalues to be used). That is, the matrix $U_s$ is a submatrix composed of the left elements of m $\times$ s cut out from the orthogonal matrix U. Further, $U_s^T$ in (54) Equation is a transposed matrix of $U_s$. $U_s^T$ is a matrix of s $\times$ m composed of s pieces of row component vectors, which are chosen from the top of the matrix $U^T$ in (52) Equation. The matrix $\Sigma_s$ in (54) Equation is a matrix of s $\times$ s composed of s pieces of columns, which are chosen from the left, and s pieces of columns, which are chosen from the top, of the diagonal matrix $\Sigma$ in (52) Equation. That is, the matrix $\Sigma_s$ is a submatrix composed of the top and left elements of s $\times$ s cut out from the diagonal matrix $\Sigma$.

When the matrix $\Sigma_s$ and the matrix $U_s$ are expressed by the matrix elements, (55) Equation below is obtained.
[Mathematical equation 28]

$$\Sigma_s = \begin{pmatrix} \sigma_{11} & 0 & 0 \\ 0 & \ddots & 0 \\ 0 & 0 & \sigma_{ss} \end{pmatrix}, \quad U_s = (u_1 \quad u_2 \quad \cdots \quad u_s) \qquad \cdots \ (55)$$

By using the matrix R' in place of the autocorrelation matrix R, the relational expression of (50) Equation is rewritten into (56) Equation below.
[Mathematical equation 29]

$$\begin{pmatrix} R_{10} \\ R_{20} \\ \vdots \\ R_{m0} \end{pmatrix} = U_s \Sigma_s U_s^T \begin{pmatrix} \alpha_1 \\ \alpha_2 \\ \vdots \\ \alpha_m \end{pmatrix} \qquad \cdots \ (56)$$

(56) Equation is modified, and thereby (57) Equation below is obtained as the equation deriving the coefficient $\alpha$. The model that calculates the predicted value $y^\wedge_k$ of the physical quantity at the time k from (45) Equation while using the coefficient $\alpha$ derived by (57) Equation is the "corrected AR model."
[Mathematical equation 30]

$$\begin{pmatrix} \alpha_1 \\ \alpha_2 \\ \vdots \\ \alpha_m \end{pmatrix} = U_s \Sigma_s^{-1} U_s^T \begin{pmatrix} R_{10} \\ R_{20} \\ \vdots \\ R_{m0} \end{pmatrix} \qquad \cdots \ (57)$$

The case where the values of $\sigma_{11}$, $\sigma_{22}$, $\cdots$, $\sigma_{mm}$ being the diagonal components of the diagonal matrix $\Sigma$ are set in descending order has been explained here as an example. However, it is not necessary to set the diagonal components of the diagonal matrix $\Sigma$ in descending order during a process of calculating the coefficient $\alpha$. In this case, the matrix $U_s$ is not the submatrix composed of the left elements of m $\times$ s cut out from the orthogonal matrix U, but becomes a submatrix composed of the cut out column component vectors corresponding to the eigenvalues to be used (the eigenvectors). Further, the matrix $\Sigma_s$ is not the submatrix composed of the top and left elements of s $\times$ s cut out from the diagonal matrix $\Sigma$, but becomes a submatrix to be cut out so as to make the eigenvalues used for determining the coefficient of the corrected AR model become the diagonal components.

(57) Equation is an equation to be used for determining the coefficient of the corrected AR model. The matrix $U_s$ in (57) Equation is a matrix (a third matrix) in which the eigenvectors corresponding to the eigenvalues used for determining the coefficient of the corrected AR model are set to the column component vectors, which is the submatrix of the orthogonal matrix U obtained by the singular value decomposition of the autocorrelation matrix R. Further, the matrix $\Sigma_s$ in (57) Equation is a matrix (a second matrix) in which the eigenvalues used for determining the coefficient of the corrected AR model are set to the diagonal components, which is the submatrix of the diagonal matrix obtained by the singular value decomposition of the autocorrelation matrix R. The matrix $U_s \Sigma_s U_s^T$ in (57) Equation is a matrix (a first matrix) derived from the matrix $\Sigma_s$ and the matrix $U_s$.

The right side of (57) Equation is calculated, and thereby the coefficient $\alpha$ of the corrected AR model is derived.

One example of the method of deriving the coefficient $\alpha$ of the corrected AR model has been explained above. Here, as the method of deriving the coefficient of the AR model to be the base of the corrected AR model, the method of using the least square method for the predicted value $y^\wedge_k$ of the physical quantity at the time k has been set in order to make the method understandable intuitively. However, there has been known a method of defining the AR model by using the concept of a stochastic process and deriving its coefficient generally. In this case, the autocorrelation is expressed by autocorrelation of the stochastic process (a population). This autocorrelation of the stochastic process is expressed as a function of a time lag. Thus, the autocorrelation of the data y in this embodiment may be replaced with a value calculated by another calculating formula as long as it approximates the autocorrelation of the stochastic process. For example, $R_{22}$ to $R_{mm}$ are autocorrelation with a time lag of 0 (zero), but they may be replaced with $R_{11}$.

The number s of the eigenvalues extracted from the autocorrelation matrix R illustrated in (53) Equation can be determined from a distribution of the eigenvalues of the autocorrelation matrix R, for example.

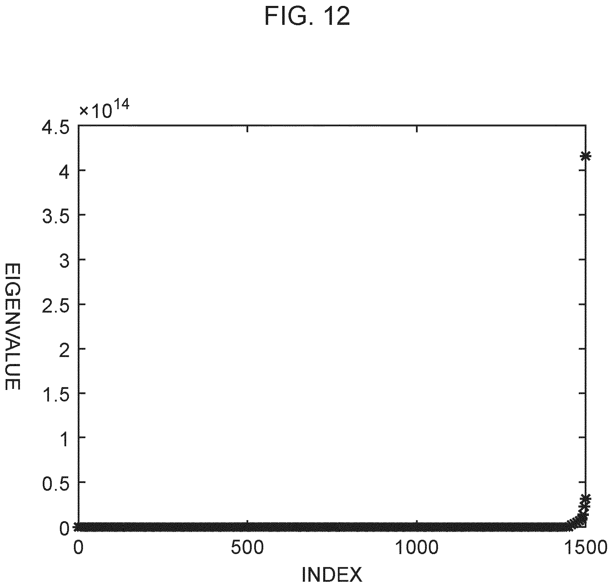

As the physical quantity in the explanation of the previously-described corrected AR model, the forward-and-backward-direction force is applied here. The value of the forward-and-backward-direction force varies according to the state of the railway vehicle. Thus, the railway vehicle is first made to travel on the track 16 to obtain the data y of the measured value of the forward-and-backward-direction force. The autocorrelation matrix R is derived by using (49) Equation and (51) Equation for each of the obtained data y. The autocorrelation matrix R is subjected to singular value decomposition expressed by (52) Equation, to thereby derive the eigenvalues of the autocorrelation matrix R. Fig. 12 is a view illustrating one example of the distribution of the eigenvalues of the autocorrelation matrix R. In Fig. 12, eigenvalues $\sigma_{11}$ to $\sigma_{mm}$, which are obtained by the autocorrelation matrix R in each of the data y of the measured value of the forward-and-backward-direction force $T_1$ in the wheel set 13a being subjected to singular value decomposition, are aligned in ascending order and are plotted. In Fig. 12, the horizontal axis is an index of the eigenvalue and the vertical axis is the value of the eigenvalue.

The example illustrated in Fig. 12 includes one eigenvalue having a value significantly higher than those of the others. Further, the example includes two eigenvalues that have a value relatively larger as compared to the others and are not regarded as 0 (zero), which are not as high as the aforementioned eigenvalue with a significantly higher value. This makes it possible to employ, for example, two or three as the number s of the eigenvalues to be extracted from the autocorrelation matrix R illustrated in (53) Equation. There is no significant difference in the results whichever number is employed.

The first frequency adjustment unit 804 performs the following processing every time the value $y_k$ of the data y of the measured value of the forward-and-backward-direction force at the time k is acquired in the data acquisition unit 803 with a predetermined sampling period.

First, the first frequency adjustment unit 804 generates the autocorrelation matrix R using (49) Equation and (51) Equation based on the data y of the measured value of the forward-and-backward-direction force and preset numbers M, m.

Then, the first frequency adjustment unit 804 performs singular value decomposition on the autocorrelation matrix R, to thereby derive the orthogonal matrix U and the diagonal matrix $\Sigma$ of (52) Equation, and derives the eigenvalues $\sigma_{11}$ to $\sigma_{mm}$ of the autocorrelation matrix R from the diagonal matrix $\Sigma$.

Then, the first frequency adjustment unit 804 chooses s pieces of the eigenvalues $\sigma_{11}$ to $\sigma_{ss}$ from the largest from among the plural eigenvalues $\sigma_{11}$ to $\sigma_{mm}$ of the autocorrelation matrix R as the eigenvalues of the autocorrelation matrix R to be used for deriving the coefficient $\alpha$ of the corrected AR model.

Then, the first frequency adjustment unit 804 determines the coefficient $\alpha$ of the corrected AR model using (57) Equation based on the data y of the measured value of the forward-and-backward-direction force, the eigenvalues $\sigma_{11}$ to $\sigma_{ss}$, and the orthogonal matrix U obtained by the singular value decomposition of the autocorrelation matrix R.

Then, the first frequency adjustment unit 804 derives the predicted value $y^\wedge_k$ of the data y of the measured value of the forward-and-backward-direction force at the time k from (45) Equation based on the coefficient $\alpha$ of the corrected AR model and the data y of the measured value of the forward-and-backward-direction force. Time-series data of the predicted value $y^\wedge_k$ of the forward-and-backward-direction force result in the time-series data from which the low-frequency component contained in the data y of the measured value of the forward-and-backward-direction force has been extracted.

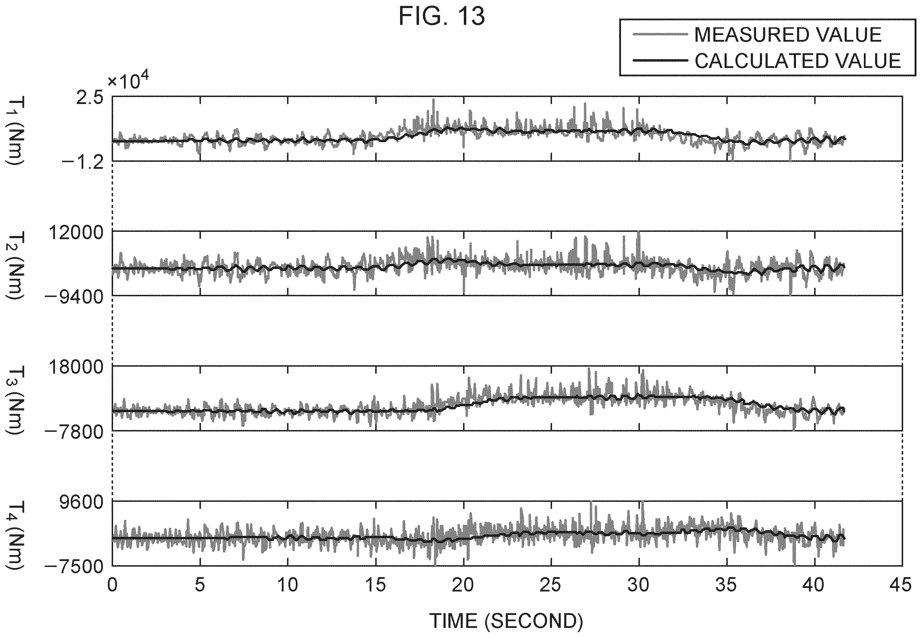

Fig. 13 is a view illustrating one example of the time-series data of the measured value of the forward-and-backward-direction force (the measured value) and the time-series data of the predicted value of the forward-and-backward-direction force (the calculated value). Incidentally, in this embodiment, the measured values of the four forward-and-backward-direction forces $T_1$ to $T_4$ are obtained. That is, four pieces of the data y of the forward-and-backward-direction force are obtained. In Fig. 13, the measured value and the calculated value of each of four pieces of the data y are illustrated. The horizontal axis in Fig. 13 indicates a measuring time and a calculating time of the forward-and-backward-direction forces $T_1$ to $T_4$, each of which is an elapsed time (second) from a reference time when the reference time is set to 0 (zero). The vertical axis indicates the forward-and-backward-direction forces $T_1$ to $T_4$ (Nm).

In Fig. 13, the calculated value of the forward-and-backward-direction force $T_1$ in the wheel set 13a is biased at about 15 seconds to 35 seconds (namely, a value larger than that at another time is exhibited). This period corresponds to the period when the wheel set 13a passes through the curved track. The calculated value of the forward-and-backward-direction force $T_2$ in the wheel set 13b, the calculated value of the forward-and-backward-direction force $T_3$ in the wheel set 13c, and the calculated value of the forward-and-backward-direction force $T_4$ in the wheel set 13d are also biased during the period when the wheel sets 13b, 13c, and 13d pass through the curved track similarly to the calculated value of the forward-and-backward-direction force $T_1$ in the wheel set 13a.

Accordingly, in Fig. 13, removal of the calculated values from the measured values of the forward-and-backward-direction forces $T_1$ to $T_4$ in the wheel sets 13a to 13d makes it possible to remove the low-frequency components, which are due to the wheel sets 13a to 13d passing through the curved track, from the signals of the forward-and-backward-direction forces $T_1$ to $T_4$. That is, in Fig. 13, when the calculated values are removed from the measured values of the forward-and-backward-direction forces $T_1$ to $T_4$ in the wheel sets 13a to 13d, as the forward-and-backward-direction forces $T_1$ to $T_4$ when the wheel sets 13a to 13d have passed through the curved track, the forward-and-backward-direction forces equivalent to those when the wheel sets 13a to 13d have passed through the linear track can be obtained.

Thus, the first frequency adjustment unit 804 subtracts the time-series data of the predicted value $y^\wedge_k$ of the forward-and-backward-direction force from the time-series data (the data y) of the measured value $y_k$ of the forward-and-backward-direction force. In the following explanation, the time-series data resulting from the subtraction of the time-series data of the predicted value $y^\wedge_k$ of the forward-and-backward-direction force from the time-series data (the data y) of the measured value $y_k$ of the forward-and-backward-direction force is referred to as time-series data of a high-frequency component of the forward-and-backward-direction force as necessary. Further, a value of the time-series data of the high-frequency component of the forward-and-backward-direction force at each sampling time is referred to as a value of the high-frequency component of the forward-and-backward-direction force as necessary.

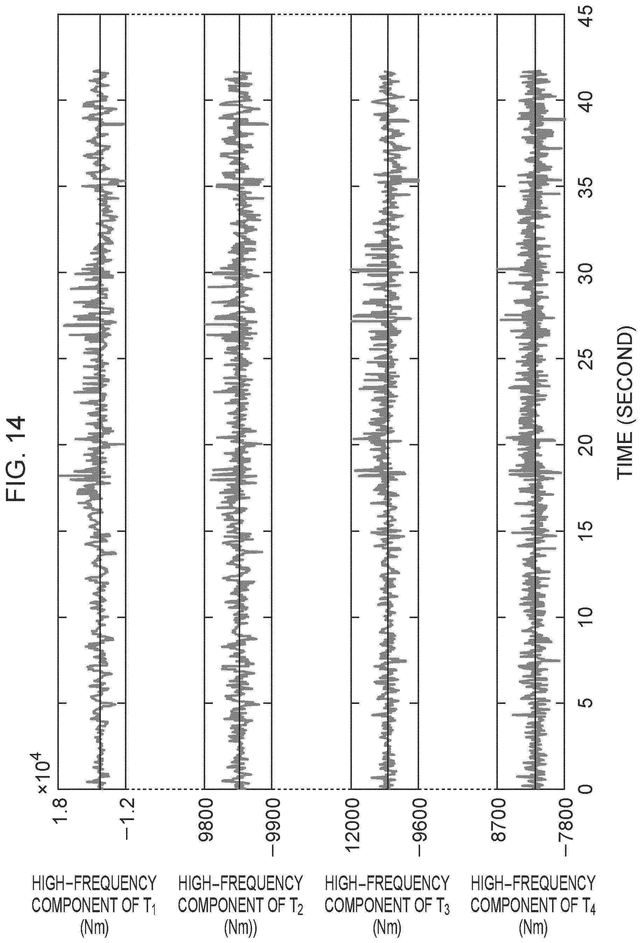

Fig. 14 is a view illustrating one example of the time-series data of the high-frequency component of the forward-and-backward-direction force. The vertical axis in Fig. 14 indicates the time-series data of the high-frequency components of the forward-and-backward-direction forces $T_1$, $T_2$, $T_3$, and $T_4$. That is, the high-frequency components of the forward-and-backward-direction forces $T_1$, $T_2$, $T_3$, and $T_4$ illustrated on the vertical axis are ones obtained by subtracting the calculated values from the measured values of the forward-and-backward-direction forces $T_1$, $T_2$, $T_3$, and $T_4$ in the wheel sets 13a, 13b, 13c, and 13d that are illustrated in Fig. 13 respectively. Further, the horizontal axis in Fig. 14 indicates a measuring time and a calculating time of the forward-and-backward-direction forces $T_1$ to $T_4$, each of which is an elapsed time (second) from a reference time when the reference time is set to 0 (zero), similarly to the horizontal axis in Fig. 13.

The first frequency adjustment unit 804 derives the time-series data of the high-frequency components of the forward-and-backward-direction forces $T_1$ to $T_4$ as above.

[Filter operation unit 805, S1103]

The filter operation unit 805 sets the observation equation as the observation equation stored by the observation equation storage unit 802, sets the state equation as the state equation stored by the state equation storage unit 801, and determines estimated values of the state variables illustrated in (44) Equation by the Kalman filter. At this time, the filter operation unit 805 uses, out of pieces of the measured data acquired in the data acquisition unit 803, the measured data excluding the forward-and-backward-direction forces $T_1$ to $T_4$ and the time-series data of the high-frequency components of the forward-and-backward-direction forces $T_1$ to $T_4$ generated in the first frequency adjustment unit 804. As described previously, in this embodiment, in the measured data, the measured value of the acceleration of the vehicle body 11 in the right and left direction, the measured values of the accelerations of the bogies 12a, 12b in the right and left direction, and the measured values of the accelerations of the wheel sets 13a to 13d in the right and left direction are contained. As for the forward-and-backward-direction forces $T_1$ to $T_4$ in the wheel sets 13a to 13d, the time-series data of the high-frequency components of the forward-and-backward-direction forces $T_1$ to $T_4$ generated in the first frequency adjustment unit 804 are used without using the measured data (the measured values) acquired in the data acquisition unit 803.

The Kalman filter is one of the methods of performing data assimilation. That is, the Kalman filter is one example of the method to determine an estimated value of an unobserved variable (state variable) so that the difference between, of an observable variable (observation variable), a measured value and an estimated value becomes small (minimum). The filter operation unit 805 derives a Kalman gain when the difference between, of the observation variable, the measured value and the estimated value becomes small (minimum) and derives the estimated value of the unobserved variable (state variable) at that time. In the Kalman filter, the following observation equation of (58) Equation and the following state equation of (59) Equation are used.

$$Y = HX + V \quad \cdots \quad (58)$$

$$X \cdot = \Phi X + W \quad \cdot \cdot \cdot (59)$$

In (58) Equation, Y is a vector in which the measured value of the observation variable is stored. H is an observation model. X is a vector in which the state variable is stored. V is observation noise. In (59) Equation, $X \cdot$ is a time differentiation of X. $\Phi$ is a linear model. W is system noise. Incidentally, the Kalman filter itself can be fabricated by a well-known · technique, and thus its detailed explanation is omitted.

The filter operation unit 805 determines the estimated values of the state variables illustrated in (44) Equation with a predetermined sampling period, to thereby generate time-series data of the estimated values of the state variables illustrated in (44) Equation.

[Second frequency adjustment unit 806]

Unless the signal strength of the low-frequency component contained in the time-series data of the measured value of the forward-and-backward-direction force is removed sufficiently by the first frequency adjustment unit 804, the signal of the low-frequency component due to the railway vehicle traveling on the curved track may be left in the time-series data of the estimated values of the state variables generated by the filter operation unit 805. Thus, the second frequency adjustment unit 806 reduces (preferably removes) the signal strength of the low-frequency component contained in the time-series data of the estimated values of the state variables generated by the filter operation unit 805. Incidentally, in the case where it is possible to determine the number s of the eigenvalues to be extracted from the autocorrelation matrix R illustrated in (53) Equation so as to sufficiently remove the signal strength of the low-frequency component contained in the time-series data of the measured value of the forward-and-backward-direction force by the first frequency adjustment unit 804, the processing of the second frequency adjustment unit 806 is not required.

In this embodiment, the second frequency adjustment unit 806 uses the corrected AR model to reduce the signal strength of the low-frequency component contained in the time-series data of the estimated values of the state variables similarly to the first frequency adjustment unit 804.

The second frequency adjustment unit 806 performs the following processing for each state variable with a predetermined sampling period.

As the physical quantity in the explanation of the previously-described corrected AR model, the state variable is applied here. That is, the data y of the state variable result in the time-series data of the estimated values of the state variables generated by the filter operation unit 805. The estimated values of the state variables each vary according to the state of the railway vehicle.

First, the second frequency adjustment unit 806 generates the autocorrelation matrix R using (49) Equation and (51) Equation based on the data y of the estimated values of the state variables and the preset numbers M and m.

Then, the second frequency adjustment unit 806 performs singular value decomposition on the autocorrelation matrix R, to thereby derive the orthogonal matrix U and the diagonal matrix $\Sigma$ of Equation (52), and derives the eigenvalues $\sigma_{11}$ to $\sigma_{mm}$ of the autocorrelation matrix R from the diagonal matrix $\Sigma$.

Then, the second frequency adjustment unit 806 chooses s pieces of the eigenvalues $\sigma_{11}$ to $\sigma_{ss}$ from the largest from among the plural eigenvalues $\sigma_{11}$ to $\sigma_{mm}$ of the autocorrelation matrix R as the eigenvalues of the autocorrelation matrix R to be used for deriving the coefficient $\alpha$ of the corrected AR model. s is preset for each state variable. For example, the railway vehicle is made to travel on the track 16, to then obtain the data y of the estimated value of each of the state variables in such a manner as explained so far. Then, a distribution of the eigenvalues of the autocorrelation matrix R is made individually for each state variable. From the distributions of the eigenvalues of the autocorrelation matrix R, the number s of the eigenvalues to be extracted from the autocorrelation matrix R illustrated in (53) Equation is determined for each of the state variables.

Then, the second frequency adjustment unit 806 determines the coefficient $\alpha$ of the corrected AR model using (57) Equation based on the data y of the estimated value of the state variable, the eigenvalues $\sigma_{11}$ to $\sigma_{ss}$, and the orthogonal matrix U obtained by the singular value decomposition of the autocorrelation matrix R.

Then, the second frequency adjustment unit 806 derives the predicted value $y^{\wedge}_k$ of the data y of the estimated value of the state variable at the time k from (45) Equation based on the coefficient $\alpha$ of the corrected AR model and the data y of the estimated value of the state variable. Time-series data of the predicted value $y^{\wedge}_k$ of the state variable result in the time-series data from which the low-frequency component contained in the data y of the estimated value of the state variable has been extracted.

Then, the second frequency adjustment unit 806 subtracts the time-series data of the predicted value $y^{\wedge}_k$ of the state variable from the data y of the estimated value of the state variable. In the following explanation, a value of the time-series data resulting from the subtraction of the time-series data of the predicted value $y^{\wedge}_k$ of the state variable from the data y of the estimated value of the state variable at each sampling time is referred to as the value of a high-frequency component of the state variable as necessary.

[Track state calculation unit 807, S1105]

When (22) Equation to (25) Equation are substituted into the motion equations that describe the yawings of the wheel sets 13a to 13d of (5) Equation to (8) Equation, (60) Equation to (63) Equation below are obtained.

[Mathematical equation 31]

$$I_{wz}\ddot{\psi}_{w1} + \frac{f_1 b^2}{v}\dot{\psi}_{w1} + \frac{f_1 b \gamma}{r}\{y_{w1} - y_{R1}\} + s_a K_{wy}\{y_{w1} - y_{t1}\} + s_a C_{wy}\{\dot{y}_{w1} - \dot{y}_{t1}\} = T_1$$
$$\cdots (60)$$

$$I_{wz}\ddot{\psi}_{w2} + \frac{f_1 b^2}{v}\dot{\psi}_{w2} + \frac{f_1 b \gamma}{r}\{y_{w2} - y_{R2}\} + s_a K_{wy}\{y_{w2} - y_{t1}\} + s_a C_{wy}\{\dot{y}_{w2} - \dot{y}_{t1}\} = T_2$$
$$\cdots (61)$$

$$I_{wz}\ddot{\psi}_{w3} + \frac{f_1 b^2}{v}\dot{\psi}_{w3} + \frac{f_1 b \gamma}{r}\{y_{w3} - y_{R3}\} + s_a K_{wy}\{y_{w3} - y_{t2}\} + s_a C_{wy}\{\dot{y}_{w3} - \dot{y}_{t2}\} = T_3$$
$$\cdots (62)$$

$$I_{wz}\ddot{\psi}_{w4} + \frac{f_1 b^2}{v}\dot{\psi}_{w4} + \frac{f_1 b \gamma}{r}\{y_{w4} - y_{R4}\} + s_a K_{wy}\{y_{w4} - y_{t2}\} + s_a C_{wy}\{\dot{y}_{w4} - \dot{y}_{t2}\} = T_4$$
$$\cdots (63)$$

In this embodiment, as illustrated in (60) Equation to (53) Equation, relational expressions representing the relations between the forward-and-backward-direction forces $T_1$ to $T_4$ and the alignment irregularity amounts $y_{R1}$ to $y_{R4}$ at the positions of the wheel sets 13a to 13d are set.

The track state calculation unit 807 calculates estimated values of the pivot amounts (angular displacements) $\phi_{w1}$ to $\phi_{w4}$ of the wheel sets 13a to 13d in the yawing direction by (30) Equation to (33) Equation. Then, the track state calculation unit 807 gives the estimated values of the pivot amounts (angular displacements) $\phi_{w1}$ to $\phi_{w4}$ of the wheel sets 13a to 13d in the yawing direction, the values of the high-frequency components of the state variables generated in the second frequency adjustment unit 806, and the values of the high-frequency components of the forward-and-backward-direction forces $T_1$ to $T_4$ generated in the first frequency adjustment unit 804 to (60) Equation to (63) Equation, to thereby calculate the alignment irregularity amounts $y_{R1}$ to $y_{R4}$ at the positions of the wheel sets 13a to 13d. The state variables to be used here are the displacements $y_{t1}$ to $y_{t2}$ of the bogies 12a, 12b in the right and left direction, the velocities $y_{t1} \cdot$ to $y_{t2} \cdot$ of the bogies 12a, 12b in the right and left direction, the displacements $y_{w1}$ to $y_{w4}$ of the wheel sets 13a to 13d in the right and left direction, and the velocities $y_{w1} \cdot$ to $y_{w4} \cdot$ of the wheel sets 13a to 13d in the right and left direction. The track state calculation unit 807 performs such a calculation of the alignment irregularity amounts $y_{R1}$ to $y_{R4}$ as above with a predetermined sampling period, to thereby obtain the time-series data of the alignment irregularity amounts $y_{R1}$ to $y_{R4}$.

Then, the track state calculation unit 807 calculates a final alignment irregularity amount $y_R$ from the alignment irregularity amounts $y_{R1}$ to $y_{R4}$. For example, the track state calculation unit 807 matches phases of the time-series data of the alignment irregularity amounts $y_{R2}$ to $y_{R4}$ to a phase of the time-series data of the alignment irregularity amount $y_{R1}$. That is, the track state calculation unit 807 calculates, from the distance between the wheel set 13a and the wheel sets 13b to 13d in the forward and backward direction and the velocity of the railway vehicle, a delay time between the time when the wheel set 13a passes through a certain position and the time when the wheel sets 13b to 13d pass through this position. The track state calculation unit 807 displaces the phases of the time-series data of the alignment irregularity amounts $y_{R2}$ to $y_{R4}$ by this delay time.

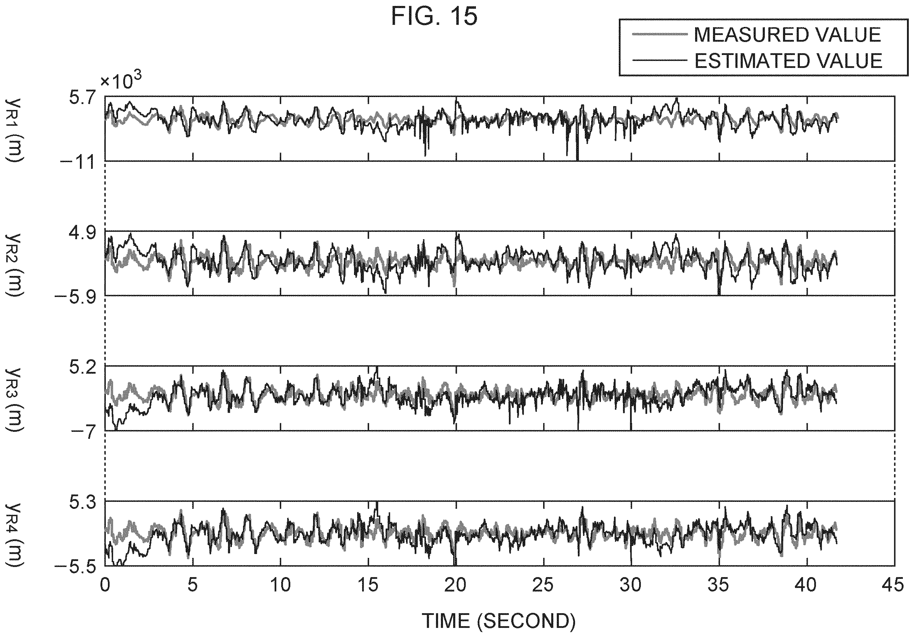

Fig. 15 is a view illustrating one example of the time-series data of the alignment irregularity amounts $y_{R1}$ to $y_{R4}$ in the wheel sets 13a to 13d. In Fig. 15, the phases of the time-series data of the alignment irregularity amounts $y_{R2}$ to $y_{R4}$ in the wheel sets 13b to 13d are matched to the phase of the time-series data of the alignment irregularity amount $y_{R1}$ in the wheel set 13a. The horizontal axis in Fig. 15 indicates a detection time of the alignment irregularity amount $y_{R1}$, which is an elapsed time (second) from a reference time when the reference time is set to 0 (zero). The vertical axis in Fig. 15 indicates the alignment irregularity amounts $y_{R1}$ to $y_{R4}$ in the wheel sets 13a to 13d (m).

The track state calculation unit 807 calculates an arithmetic mean value of the sum of the values of the alignment irregularity amounts $y_{R1}$ to $y_{R4}$ whose phases are matched at the same sampling time as the final alignment irregularity amount $y_R$ at this sampling time. The track state calculation unit 807 performs such a calculation at each sampling time, to thereby obtain time-series data of the final alignment irregularity amount $y_R$. The phases of the alignment irregularity amounts $y_{R2}$ to $y_{R4}$ are matched to the phase of the alignment irregularity amount $y_{R1}$, thereby making it possible to cancel disturbance factors existing in common in the time-series data of the alignment irregularity amounts $y_{R1}$ to $y_{R4}$.

Fig. 16 is a view illustrating one example of the time-series data of the final alignment irregularity amount $y_R$ and a curvature 1/R of the track 16 (the rail). The horizontal axis in Fig. 16 indicates a detection time of the final alignment irregularity amount $y_R$, which is an elapsed time (second) from a reference time when the reference time is set to 0 (zero), similarly to the horizontal axis in Fig. 15. The vertical axis in the upper part of Fig. 16 indicates the final alignment irregularity amount $y_R$ (m) at each detection time. The vertical axis in the lower part of Fig. 16 indicates the curvature 1/R (1/m) of the track 16 (the rail) at the point where the wheel set 13a of the railway vehicle is located at each detection time of the final alignment irregularity amount $y_R$. In the lower part of Fig. 16, the curvature 1/R being 0 (zero) indicates the linear track and the curvature 1/R being a value other than 0 (zero) indicates the curved track.

In the upper part of Fig. 16, the measured value is the alignment irregularity amount $y_R$ measured actually. The estimated value is the final alignment irregularity amount $y_R$ calculated by the track state calculation unit 807. As illustrated in the upper part of Fig. 16, it is found out that the estimated value of the alignment irregularity amount $y_R$ well agrees with the measured value either on the linear track or on the curved track.

Incidentally, the track state calculation unit 807 may find a moving average of each of the alignment irregularity amounts $y_{R1}$ to $y_{R4}$ whose phases are matched (namely, pass each of the alignment irregularity amounts $y_{R1}$ to $y_{R4}$ through a low-pass filter) and calculate the final alignment irregularity amount $y_R$ from the alignment irregularity amounts $y_{R1}$ to $y_{R4}$ whose moving averages have been found.

Further, the track state calculation unit 807 may calculate, as the final alignment irregularity amount $y_R$, an arithmetic mean value of two values of the values of the alignment irregularity amounts $y_{R1}$ to $y_{R4}$ whose phases are matched at the same sampling time from which the maximum value and the minimum value are removed.

[Output unit 808, S1104]

The output unit 808 outputs information of the final alignment irregularity amount $y_R$ calculated by the track state calculation unit 807. At this time, the output unit 808 may output information indicating that the track 16 is abnormal in the case where the final alignment irregularity amount $y_R$ is larger than a preset value. As a form of output, it is possible to employ at least any one of displaying the information on a computer display, transmitting the information to an external device, and storing the information in an internal or external storage medium, for example.

(Summary)

As above, in this embodiment, the inspection apparatus 800 reduces the signal strength of the low-frequency components contained in the time-series data of the measured values of the forward-and-backward-direction forces $T_1$ to $T_4$ and generates the time-series data of the high-frequency components of the forward-and-backward-direction forces $T_1$ to $T_4$. The inspection apparatus 800 gives the time-series data of the high-frequency components of the forward-and-backward-direction forces $T_1$ to $T_4$ to a relational expression of the forward-and-backward-direction forces $T_1$ to $T_4$ and the alignment irregularity amounts $y_{R1}$ to $y_{R4}$ at the positions of the wheel sets 13a to 13d, to thereby calculate the alignment irregularity amounts $y_{R1}$ to $y_{R4}$ at the positions of the wheel sets 13a to 13d. This relational expression is an expression based on the motion equation that describes the motion of the railway vehicle when traveling on the linear track (namely, the equation not including the curvature radius R of the track 16 (the rail)). Accordingly, it is possible to detect the irregularity in the curved track with high accuracy without using a special measuring apparatus.

Further, in this embodiment, the inspection apparatus 800 generates the autocorrelation matrix R from the data y of the measured value of the forward-and-backward-direction force, and by using s pieces of the eigenvalues from the largest chosen from the eigenvalues obtained by the singular value decomposition of the autocorrelation matrix R, determines the coefficient $\alpha$ of the corrected AR model approximating the data y of the measured value of the forward-and-backward-direction force. Accordingly, it is possible to determine the coefficient $\alpha$ so as to make the signal of the low-frequency component contained in the data y of the measured value of the forward-and-backward-direction force remain and prevent the high-frequency component from remaining. The inspection apparatus 800 calculates the predicted value $\hat{y}_k$ of the forward-and-backward-direction force at the time k by giving the data y of the measured value of the forward-and-backward-direction force at the time k - 1 ($1 \leqq 1 \leqq m$), which is prior to the time k, to the corrected AR model whose coefficient $\alpha$ is determined in this manner. Accordingly, it is possible to reduce the signal of the low-frequency component, which is due to the railway vehicle traveling on the curved track, from the data y of the measured value of the forward-and-backward-direction force without estimating a cutoff frequency beforehand.

Further, in this embodiment, the inspection apparatus 800 gives, out of the measured data acquired in the data acquisition unit 803, the measured data excluding the forward-and-backward-direction forces $T_1$ to $T_4$ and the time-

series data of the high-frequency components of the forward-and-backward-direction forces $T_1$ to $T_4$ generated in the first frequency adjustment unit 804 to the Kalman filter, to derive the state variables ($y_{w1}\cdot$ to $y_{w4}\cdot$, $y_{w1}$ to $y_{w4}$, $y_{t1}\cdot$ to $y_{t2}\cdot$, $y_{t1}$ to $y_{t2}$, $\phi_{t1}\cdot$ to $\phi_{t2}\cdot$, $\phi_{t1}$ to $\phi_{t2}$, $\phi_{t1}\cdot$ to $\phi_{t2}\cdot$, $\phi_{t1}$ to $\phi_{t2}$, $y_b\cdot$, $y_b$, $\phi_b\cdot$, $\phi_b$, $\phi_b\cdot$, $\phi_b$, $\phi_{y1}$, $\phi_{y2}$, $\phi_{a1}$, and $\phi_{a2}$). Next, the inspection apparatus 800 reduces (preferably removes) the signal strength of the low-frequency component contained in the time-series data of the estimated value of the state variable, to thereby calculate the value of the high-frequency component of the state variable. Next, the inspection apparatus 800 uses the values of the high-frequency components of the pivot amounts (angular displacements) $\phi_{t1}$ to $\phi_{t2}$ of the bogies 12a, 12b in the yawing direction and the actual values of the transformation variables $e_1$ to $e_4$, to derive the pivot amounts (angular displacements) $\phi_{w1}$ to $\phi_{w4}$ of the wheel sets 13a to 13d in the yawing direction. Next, the inspection apparatus 800 substitutes the pivot amounts (angular displacements) $\phi_{w1}$ to $\phi_{w4}$ of the wheel sets 13a to 13d in the yawing direction, the values of the high-frequency components of the state variables, and the values of the high-frequency components of the forward-and-backward-direction forces $T_1$ to $T_4$ into the motion equations that describe the yawings of the wheel sets 13a to 13d, to calculate the alignment irregularity amounts $y_{R1}$ to $y_{R4}$ at the positions of the wheel sets 13a to 13d. Then, the inspection apparatus 800 calculates the final alignment irregularity amount $y_R$ from the alignment irregularity amounts $y_{R1}$ to $y_{R4}$ at the positions of the wheel sets 13a to 13d. Accordingly, it becomes no longer necessary to constitute, as the motion equations that describe the yawings of the wheel sets 13a to 13d, the state equation by using the motion equations including the alignment irregularity amounts $y_{R1}$ to $y_{R4}$ at the positions of the wheel sets 13a to 13d as variables. Thereby, it becomes no longer necessary to create a model of the track 16, and at the same time, it is possible to reduce the number of state variables. In this embodiment, it is possible to reduce the degrees of freedom of the model to 17 degrees of freedom from 21 degrees of freedom, and at the same time, it is possible to reduce the number of state variables to 30 from 38. Further, the number of measured values to be used in the Kalman filter increases by the forward-and-backward-direction forces $T_1$ to $T_4$.

On the other hand, when the motion equations that describe the yawings of the wheel sets 13a to 13d of (5) Equation to (8) Equation are included in the state equation without using the forward-and-backward-direction forces $T_1$ to $T_4$, the calculation sometimes becomes unstable, failing to obtain the estimated results. That is, unless the state variables are selected, the calculation sometimes becomes unstable, failing to obtain the estimated results. Further, even if the estimated results are obtained, the accuracy to detect irregularity of the track 16 becomes higher in the method of this embodiment as compared to the method of not selecting the state variables. This is because in this embodiment, not including the motion equations that describe the yawings of the wheel sets 13a to 13d in the state equation and using the measured values of the forward-and-backward-direction forces are achieved.

Further, the strain gauges can be used as sensors in this embodiment, thus not requiring special sensors. Accordingly, it is possible to accurately detect irregularity of the track 16 (track irregularity) inexpensively. Further, since it is not necessary to use special sensors, the strain gauges are attached to a commercial vehicle and the inspection apparatus 800 is mounted on the commercial vehicle, thereby making it possible to detect irregularity of the track 16 in real time during traveling of the commercial vehicle. Accordingly, it is possible to detect irregularity of the track 16 without traveling of an inspection car. However, the strain gauges may be attached to the inspection car and the inspection apparatus 800 may be mounted on the inspection car.

<Modified example>

The case of using the corrected AR model has been explained as an example in this embodiment. However, it is not always necessary to use the corrected AR model and reduce the signal of the low-frequency component, which is due to the railway vehicle traveling on the curved track, from the data y of the measured value of the forward-and-backward-direction force. For example, in the case where it is possible to specify a frequency band due to the railway vehicle traveling on the curved track, a high-pass filter may be used to reduce the signal of the low-frequency component, which is due to the railway vehicle traveling on the curved track, from the data y of the measured value of the forward-and-backward-direction force.

Further, the case where the wheel set to be a standard when phase matching is the wheel set 13a has been explained as an example in this embodiment. However, the wheel set to be a standard may be the wheel set 13b, 13c, or 13d other than the wheel set 13a.

In this embodiment, the case of using the Kalman filter has been explained as an example. However, it is not always necessary to use the Kalman filter as long as a filter that derives the estimated values of the state variables so that the error between, of the observation variable, the measured value and the estimated value becomes minimum or the expected value of this error becomes minimum (that is, a filter that performs data assimilation) is used. For example, a particle filter may be used. Incidentally, as the error between, of the observation variable, the measured value and the estimated value, for example, a square error between, of the observation variable, the measured value and the estimated value is cited.

Further, in this embodiment, the case of deriving the alignment irregularity amount has been explained as an example. However, it is not always necessary to derive the alignment irregularity amount as long as information that reflects the track irregularity (appearance failure of the track 16) is derived as the information reflecting the state of the track 16. For example, in addition to or in place of the alignment irregularity amount, calculations of (64) Equation to (67) Equation may be performed, to thereby derive a lateral force to occur when the railway vehicle travels on the linear track (stress in the right and left direction between the wheel and the rail). However, $Q_1$, $Q_2$, $Q_3$, and $Q_4$ are lateral forces in the wheels 14a, 14b, 14c, and 14d respectively. $f_3$ represents a spin creep coefficient.

[Mathematical equation 32]

$$Q_1 = \frac{f_2}{V}\dot{y}_{w1} - f_2 \psi_{w1} + f_2 \frac{T_1}{K_{wx}b_1^2} - f_3 \frac{\dot{\psi}_{t1}}{V} + f_3 \frac{\dot{T}_1}{K_{wx}b_1^2 V} \qquad \cdots (64)$$

$$Q_2 = \frac{f_2}{V}\dot{y}_{w2} - f_2 \psi_{w2} + f_2 \frac{T_2}{K_{wx}b_1^2} - f_3 \frac{\dot{\psi}_{t1}}{V} + f_3 \frac{\dot{T}_2}{K_{wx}b_1^2 V} \qquad \cdots (65)$$

$$Q_3 = \frac{f_2}{V}\dot{y}_{w3} - f_2 \psi_{w3} + f_2 \frac{T_3}{K_{wx}b_1^2} - f_3 \frac{\dot{\psi}_{t2}}{V} + f_3 \frac{\dot{T}_3}{K_{wx}b_1^2 V} \qquad \cdots (66)$$

$$Q_4 = \frac{f_2}{V}\dot{y}_{w4} - f_2 \psi_{w4} + f_2 \frac{T_4}{K_{wx}b_1^2} - f_3 \frac{\dot{\psi}_{t2}}{V} + f_3 \frac{\dot{T}_4}{K_{wx}b_1^2 V} \qquad \cdots (67)$$

Further, in this embodiment, the case of including the state variables that represent the state of the vehicle body 11 has been explained as an example. However, the vehicle body 11 is a part into which vibrations by acting forces between the wheels 14a to 14d and the track 16 (creep force) propagate finally. Accordingly, it is not necessary to include the state variables representing the state of the vehicle body 11 in the case where the effect by the propagation in the vehicle body 11 is judged to be small, for example. In such a case, out of the motion equations of (1) Equation to (21) Equation, the motion equations that describe the transversal vibration, the yawing, and the rolling of the vehicle body 11 of (15) Equation to (17) Equation and the motion equations that describe the yawing of the yaw damper disposed on the bogie 12a and the yawing of the yaw damper disposed on the bogie 12b of (18) Equation and (19) Equation are no longer required. Further, in the motion equations of (1) Equation to (21) Equation, the value inside {} that includes the state amount relating to the vehicle body (state amount including the subscript of b) and the state amount relating to the vehicle body (state amount including the subscript of b) (for example, the third term $\{\phi_{a2} - \phi_b\}$ on the left side of (21) Equation)) is set to 0 (zero).

Further, in this embodiment, the case of the bogies 12a, 12b each being a bolsterless bogie has been explained as an example. However, the bogies 12a, 12b are not limited to the bolsterless bogie. Besides, according to the components of the railway vehicle, forces that the railway vehicle receives, the directions of the motions of the railway vehicle, or the like, the motion equations are rewritten appropriately. That is, the motion equations are not limited to the ones explained in this embodiment as an example.

(Second embodiment)

Next, there will be explained a second embodiment. In the following explanation, the final alignment irregularity amount $y_R$ calculated by the method in the first embodiment will be referred to as an estimated value of the alignment irregularity amount $y_R$ as necessary and the actually-measured alignment irregularity amount $y_R$ will be referred to as a measured value of the alignment irregularity amount $y_R$ as necessary.

The measured data used when calculating the time-series data of the estimated value of the alignment irregularity amount $y_R$ illustrated in Fig. 15 are not the data measured actually but simulation data obtained by simulating vibrations of the railway vehicle. Thus, the present inventors confirmed whether or not there is a deviation between, of the alignment irregularity amount $y_R$, the estimated value and the measured value by using the actually-measured measured data.

As a result, the present inventors obtained the finings that a large deviation is generated between, of the alignment irregularity amount $y_R$, the estimated value and the measured value at a seam place of the rail in the curved track. Here, a large deviation indicates that of the alignment irregularity amount $y_R$, a time waveform of the estimated value and a time waveform of the measured value are inverted. For example, a large deviation is set to be generated in the case where in a time zone where the time waveform of the estimated value of the alignment irregularity amount $y_R$ becomes convex upward, the time waveform of the measured value of the alignment irregularity amount $y_R$ becomes convex downward. The components in the right and left direction included in the forward-and-backward-direction forces $T_1$ to $T_4$ when the railway vehicle passes through a seam of the rail in the linear track are thought to be small. In contrast to this, the components in the right and left direction included in the forward-and-backward-direction forces $T_1$ to $T_4$ when the railway vehicle passes through a seam of the rail in the curved track are thought to increase. From the above, the present inventors thought that a large deviation is generated between, of the alignment irregularity amount $y_R$, the estimated value and the measured value at a seam place of the rail in the curved track. Thus, in this embodiment, the time-series data of the measured values of the forward-and-backward-direction forces $T_1$ to $T_4$ that correspond to the region including the seam place of the rail in the curved track are corrected, to thereby suppress the generation of a large deviation between, of the alignment irregularity amount $y_R$, the estimated value and the measured value. As above, this embodiment is that processing to correct the estimated value of the alignment irregularity amount $y_R$ is added to the first embodiment. Thus, in the explanation of this embodiment, the same reference numerals and symbols as those added to Fig. 1 to Fig. 16 are added to the same parts as those in the first embodiment, or the like, and their detailed explanations are omitted.

<Inspection apparatus 1700>

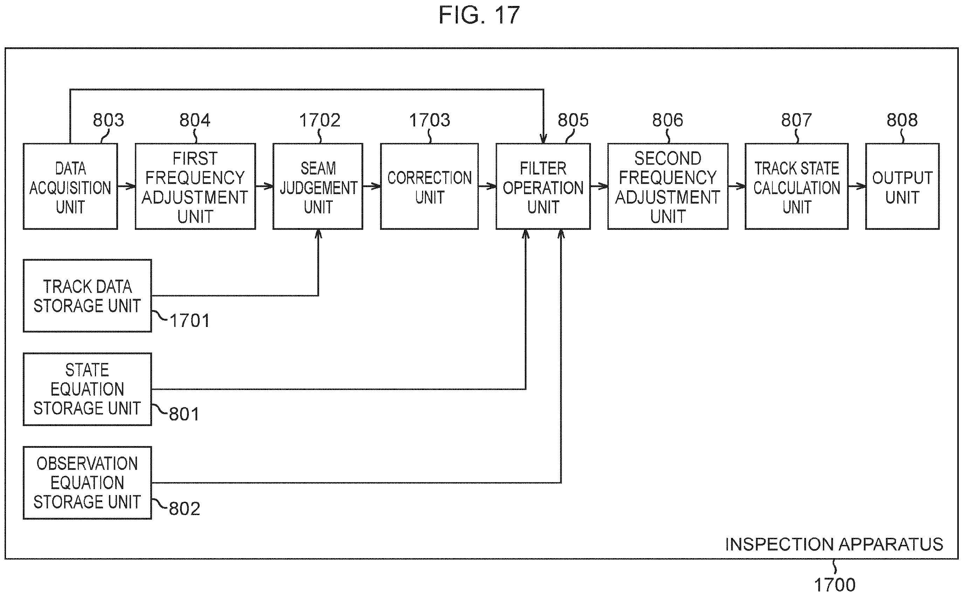

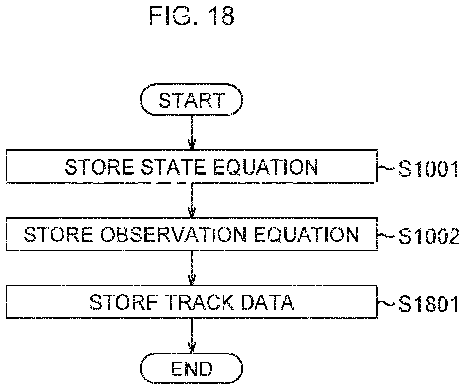

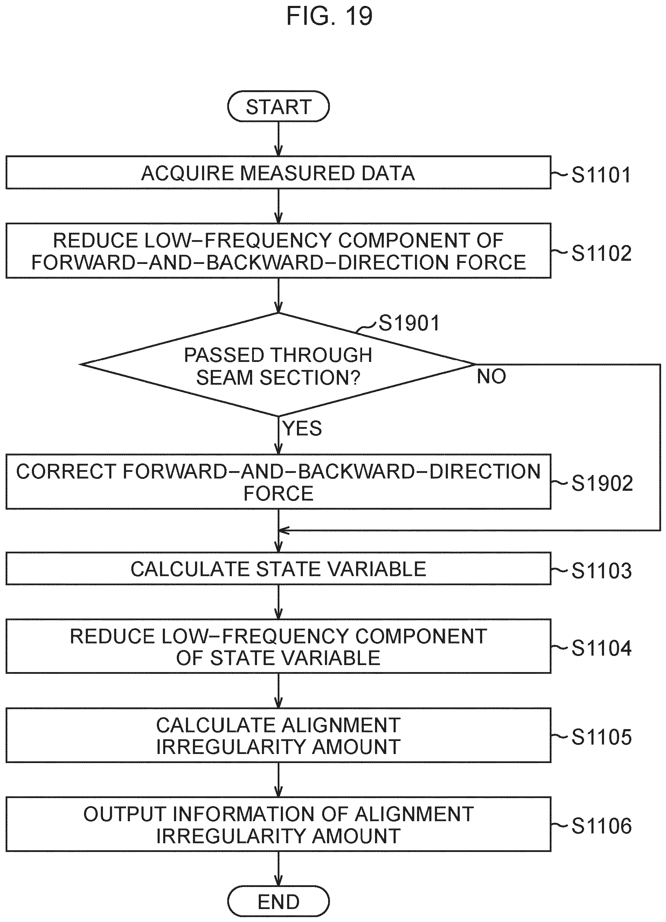

Fig. 17 is a diagram illustrating one example of a functional configuration of an inspection apparatus 1700. Fig. 18 is a flowchart illustrating one example of preprocessing in the inspection apparatus 1700. Fig. 19 is a flowchart illustrating one example of main processing in the inspection apparatus 1700. In this embodiment as well, similarly to the first embodiment, the case where the inspection apparatus 1700 is mounted on the railway vehicle will be explained as an example.

In Fig. 17, the inspection apparatus 1700 includes, as its functions, a state equation storage unit 801, an observation equation storage unit 802, a track data storage unit 1701, a data acquisition unit 803, a first frequency adjustment unit 804, a seam judgement unit 1702, a correction unit 1703, a filter operation unit 805, a second frequency adjustment unit 806, a track state calculation unit 807, and an output unit 808. A hardware configuration of the inspection apparatus 1700 can be fabricated by the ones illustrated in Fig. 9, for example.

[Track data storage unit 1701, S1801]

The track data storage unit 1701 stores track data. The track data contains data indicating the relation between a position of a track on which the railway vehicle travels and a curvature 1/R of a rail at this position. The position with the curvature 1/R being 0 (zero) means the linear track. The position with the curvature 1/R not being 0 (zero) means the curved track. As such data, for example, data that a railroad company manages every line can be used.

When the position of the railway vehicle is expressed by the distance from a starting station, the current traveling position of the railway vehicle can be obtained by deriving a traveling distance from a velocity of the railway vehicle and a traveling time. The method of deriving the current traveling position of the railway vehicle is not limited to such a method. For example, the data acquisition unit 803 may have a GPS receiver. In this case, the GPS receiver acquires the current traveling position of the railway vehicle.

[Seam judgement unit 1702, S1901]

The seam judgement unit 1702 judges whether or not the railway vehicle has passed through a section containing a seam of the rail in the curved track. In the following explanation, this region will be referred to as a seam section as necessary. In this embodiment, the seam judgement unit 1702 calculates the seam section as follows. First, the seam judgement unit 1702 matches phases of accelerations $\ddot{y}_{w2}$ to $\ddot{y}_{w4}$ of the wheel sets 13b to 13d in the right and left direction to a phase of acceleration $\ddot{y}_{w1}$ of the wheel set 13a in the right and left direction. That is, the seam judgement unit 1702 calculates, from the distance between the wheel set 13a and the wheel sets 13b to 13d in the forward and backward direction and the velocity of the railway vehicle, a delay time between a time when the wheel set 13a passes through a certain position and a time when the wheel sets 13b to 13d pass through this position. The seam judgement unit 1702 displaces the phases of time-series data of the accelerations $\ddot{y}_{w2}$ to $\ddot{y}_{w4}$ of the wheel sets 13b to 13d in the right and left direction by this delay time. The seam judgement unit 1702 calculates an arithmetic mean value $\ddot{y}_w$ of the accelerations $\ddot{y}_{w1}$ to $\ddot{y}_{w4}$ of the wheel sets 13a to 13d whose phases are matched in the right and left direction. The seam judgement unit 1702 sets a time when the absolute value of the arithmetic mean value $\ddot{y}_w$ of the accelerations $\ddot{y}_{w1}$ to $\ddot{y}_{w4}$ of the wheel sets 13a to 13d in the right and left direction exceeds a threshold value to a time when the wheel set 13a of the railway vehicle has passed through the seam of the rail in the curved track. The threshold value is preset. The accelerations $y_{w1}\cdots$ to $y_{w4}\cdots$ of the wheel sets 13a to 13d in the right and left direction when the railway vehicle passes through the seam of the rail in the curved track are examined, and a value that can be judged that the railway vehicle has passed through the seam of the rail in the curved track from the result of the examination is employed as the threshold value. For example, values of $3(m/s^2)$ to $6(m/s^2)$ are set as the threshold value. The seam judgement unit 1702 sets the section where the wheel set 13a of the railway vehicle passes through for a time t (second) before and after the time when the wheel set 13a of the railway vehicle has passed through the seam of the rail in the curved track to the seam section. t is a preset time, and for example, a value that is less than 0.2 (second) is set as the value of t.

[Correction unit 1703, S1902]

The correction unit 1703 starts when the seam judgement unit 1702 judges that the wheel set 13a of the railway vehicle has passed through the seam section. In this embodiment, the correction unit 1703 corrects values of the high-frequency components of the forward-and-backward-direction forces $T_1$ to $T_4$ at the time corresponding to the time when the wheel set 13a of the railway vehicle has passed through the seam section.

For example, the correction unit 1703 linearly interpolates a value of the high-frequency component of the forward-and-backward-direction force $T_1$ at the time corresponding to the beginning of the time when the wheel set 13a of the railway vehicle has passed through the seam section and a value of the high-frequency component of the forward-and-backward-direction force $T_1$ at the time corresponding to the ending of the time when the wheel set 13a of the railway vehicle has passed through the seam section. That is, the correction unit 1703 connects these values by a straight line.

The correction unit 1703 matches the phases of the time-series data of the high-frequency components of the forward-and-backward-direction forces $T_2$ to $T_4$ to the phase of the time-series data of the forward-and-backward-direction force $T_1$. That is, the correction unit 1703 calculates, form the distance between the wheel set 13a and the wheel sets 13b to 13d in the forward and backward direction and the velocity of the railway vehicle, a delay time between the time when the wheel set 13a passes through a certain position and the time when the wheel sets 13b to 13d pass through this position. The correction unit 1703 displaces the phases of the time-series data of the high-frequency components of the forward-and-backward-direction forces $T_2$ to $T_4$ by this delay time.

The correction unit 1703 linearly interpolates, in the time-series data of the high-frequency components of the forward-and-backward-direction forces $T_2$ to $T_4$ whose phases are displaced in this manner, values of the high-frequency components of the forward-and-backward-direction forces $T_2$ to $T_4$ at the time corresponding to the beginning of the time when the wheel set 13a of the railway vehicle has passed through the seam section and values of the high-frequency components of the forward-and-backward-direction forces $T_2$ to $T_4$ at the time corresponding to the ending of the time when the wheel set 13a of the railway vehicle has passed through the seam section respectively.

Incidentally, the correcting method by the correction unit 1703 is not limited to the linear interpolation. For example, the correction unit 1703 may perform spline interpolation.

(Summary)

As above, in this embodiment, the detection apparatus 1700 corrects the values of the high-frequency components of the forward-and-backward-direction forces $T_1$ to $T_4$ at the time corresponding to the time when the wheel set 13a of the railway vehicle has passed through the seam section. Accordingly, it is possible to further improve the accuracy of the estimated value of the final alignment irregularity amount $y_R$.

<Modified example>

In this embodiment, the case where the seam section is set only for the curved track has been explained as an example. However, the seam section may be set also for the linear track in addition to the curved track.

Further, in this embodiment, the case of correcting the values of the high-frequency components of the forward-and-backward-direction forces $T_1$ to $T_4$ has been explained as an example. However, the measured values of the forward-and-backward-direction forces $T_1$ to $T_4$ acquired by the data acquisition unit 803 may be corrected as explained in this embodiment. In this case, the first frequency adjustment unit 804 reduces the signal strength of the low-frequency components contained in time-series data of the corrected measured values of the forward-and-backward-direction forces $T_1$ to $T_4$.

Further, in this embodiment, the case where whether or not the wheel set 13a of the railway vehicle has passed through the seam section is judged by using the accelerations $y_{w1}\cdots$ to $y_{w4}\cdots$ of the wheel sets 13a to 13d in the right and left direction has been explained as an example. However, it is not always necessary to use the accelerations $y_{w1}\cdots$ to $y_{w4}\cdots$ of the wheel sets 13a to 13d in the right and left direction as long as data indicating vibrations of the railway vehicle are used. For example, accelerations $y_{t1}\cdots$ and $y_{t2}\cdots$ of the bogies 12a, 12b in the right and left direction may be used. Further, accelerations of the wheel sets 13a to 13d or the bogies 12a, 12b in the up and down direction may be used.

In this case, the data acquisition unit 803 acquires measured values of the accelerations of the wheel sets 13a to 13d or the bogies 12a, 12b in the up and down direction as the measured data.

Besides, in this embodiment as well, the various modified examples explained in the first embodiment can be employed.

(Third embodiment)

Next, there will be explained a third embodiment.

In the first embodiment, the case where the inspection apparatus 800 mounted on the railway vehicle calculates the final alignment irregularity amount $y_R$ has been explained as an example. In contrast to this, in this embodiment, a data processing device in which some functions of the inspection apparatus 800 are mounted is disposed in an operation center. The data processing device receives measured data transmitted from the railway vehicle and calculates the final alignment irregularity amount $y_R$ by using the received measured data. In this manner, in this embodiment, the functions that the inspection apparatus 800 in the first embodiment has are shared and executed by the railway vehicle and the operation center. Constitutions and processing due to this are mainly different between this embodiment and the first embodiment. Accordingly, in the explanation of this embodiment, the same reference numerals and symbols as those added to Fig. 1 to Fig. 16 are added to the same parts as those in the first embodiment, or the like, and their detailed explanations are omitted.

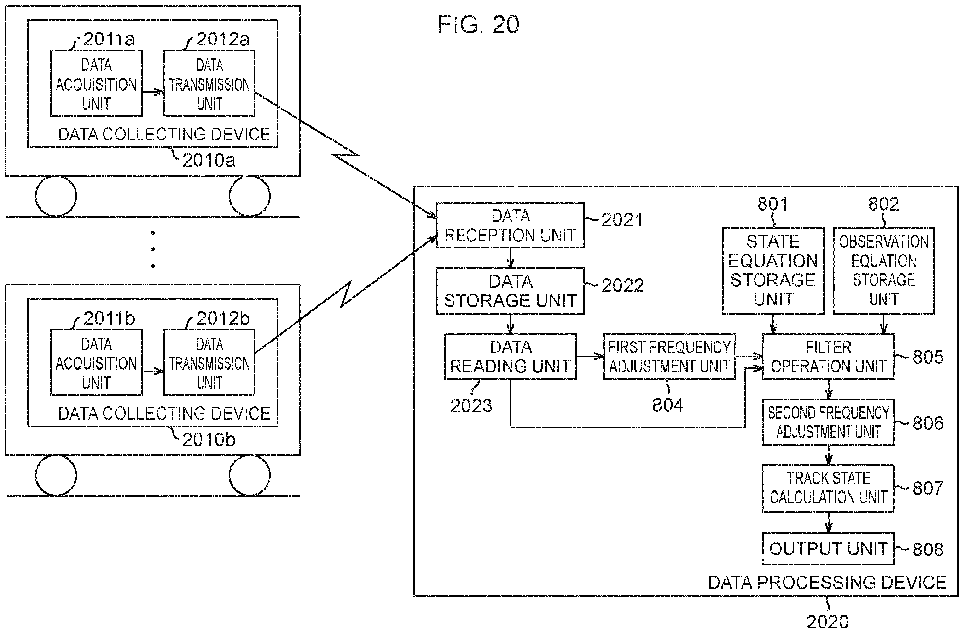

Fig. 20 is a view illustrating one example of a configuration of an inspection system. In Fig. 20, the inspection system includes data collecting devices 2010a, 2010b, and a data processing device 2020. In Fig. 20, one example of functional configurations of the data collecting devices 2010a, 2010b and the data processing device 2020 is also illustrated. Incidentally, each hardware of the data collecting devices 2010a, 2010b and the data processing device 2020 can be fabricated by the one illustrated in Fig. 9, for example. Accordingly, detailed explanations of the hardware configurations of the data collecting devices 2010a, 2010b and the data processing device 2020 are omitted.

The data collecting devices 2010a, 2010b are mounted on each railway vehicle one by one. The data processing device 2020 is disposed at the operation center. The operation center centrally manages operations of a plurality of railway vehicles, for example.

<Data collecting devices 2010a, 2010b>

The data collecting devices 2010a, 2010b can be fabricated by the same components. The data collecting devices 2010a, 2010b include data acquisition units 2011a, 2011b and data transmission units 2012a, 2012b.

[Data acquisition units 2011a, 2011b]

The data acquisition units 2011a, 2011b have the same function as that of the data acquisition unit 803. That is, the data acquisition units 2011a, 2011b acquire the same measured data as those acquired in the data acquisition unit 803. Concretely, the data acquisition units 2011a, 2011b acquire, as the measured data, a measured value of acceleration of the vehicle body 11 in the right and left direction, measured values of accelerations of the bogies 12a, 12b in the right and left direction, measured values of accelerations of the wheel sets 13a to 13d in the right and left direction, and a measured value of the forward-and-backward-direction force. Strain gauges and an arithmetic device for obtaining these measured values are the same as those explained in the first embodiment.

[Data transmission units 2012a, 2012b]

The data transmission units 2012a, 2012b transmit the measured data acquired in the data acquisition units 2011a, 2011b to the data processing device 2020. In this embodiment, the data transmission units 2012a, 2012b transmit the measured data acquired in the data acquisition units 2011a, 2011b to the data processing device 2020 by radio. At this time, the data transmission units 2012a, 2012b add identification numbers of the railway vehicles in which the data collecting devices 2010a, 2010b are mounted to the measured data acquired in the data acquisition units 2011a, 2011b. In this manner, the data transmission units 2012a, 2012b transmit the measured data with the identification numbers of the railway vehicles added thereto.

<Data processing device 2020>

[Data reception unit 2021]

A data reception unit 2021 receives the measured data transmitted by the data transmission units 2012a, 2012b.

To the measured data, the identification numbers of the railway vehicles, which are transmission sources of the measured data, have been added.

[Data storage unit 2022]

A data storage unit 2022 stores the measured data received in the data reception unit 2021. The data storage unit 2022 stores the measured data every identification number of the railway vehicle. The data storage unit 2022 specifies the position of the railway vehicle at the time of receipt of the measured data based on the current operation situation of the railway vehicle and the time of receipt of the measured data, and stores information of the specified position and the measured data in association with each other. Incidentally, the data collecting devices 2010a, 2010b may collect the information of the current position of the railway vehicle and contain the collected information in the measured data.

[Data reading unit 2023]

A data reading unit 2023 reads the measured data stored in the data storage unit 2022. The data reading unit 2023 can read, out of the measured data stored in the data storage unit 2022, the measured data designated by an operator. Further, the data reading unit 2023 can also read the measured data matching a preset condition at a preset timing. In this embodiment, the measured data read by the data reading unit 2023 are determined based on at least any one of the identification number and the position of the railway vehicle, for example.

A state equation storage unit 801, an observation equation storage unit 802, a first frequency adjustment unit 804, a filter operation unit 805, a second frequency adjustment unit 806, a track state calculation unit 807, and an output unit 808 are the same as those explained in the first embodiment. Accordingly, their detailed explanations are omitted here. Incidentally, the filter operation unit 805 uses the measured data read by the data reading unit 2023 in place of using the measured data acquired in the data acquisition unit 803, and determines the estimated values of the state variables illustrated in (44) Equation.

<Summary>

As above, in this embodiment, the data collecting devices 2010a, 2010b mounted in the railway vehicles collect the measured data to transmit them to the data processing device 2020. The data processing device 2020 disposed at the operation center stores the measured data received from the data collecting devices 2010a, 2010b and uses the stored measured data to calculate the final alignment irregularity amount $y_R$. Accordingly, in addition to the effects explained in the first embodiment, for example, the following effects are exhibited. That is, the data processing device 2020 can calculate the final alignment irregularity amount $y_R$ at an arbitrary timing by reading the measured data at an arbitrary timing. Further, the data processing device 2020 can output time-series variation of the final alignment irregularity amount $y_R$ at the same position. Further, the data processing device 2020 can output each final alignment irregularity amount $y_R$ in a plurality of lines every line.

<Modified example>

In this embodiment, the case where the data collecting devices 2010a, 2010b directly transmit the measured data to the data processing device 2020 has been explained as an example. However, it is not always necessary to constitute this embodiment as above. An inspection system may be built by using cloud computing, for example.

The data processing device 2020 disposed at the operation center may calculate the final alignment irregularity amount $y_R$ in such a manner as explained in the second embodiment. In this case, the data processing device 2020 further includes the seam judgement unit 1702 and the correction unit 1703.

Besides, it is possible to employ the various modified examples explained in the first embodiment and the second embodiment also for this embodiment.

Further, in the first embodiment, the case where the state equation storage unit 801, the observation equation storage unit 802, the data acquisition unit 803, the first frequency adjustment unit 804, the filter operation unit 805, the second frequency adjustment unit 806, the track state calculation unit 807, and the output unit 808 are included in one apparatus has been explained as an example. However, it is not always necessary to constitute these embodiments as above. Functions of the state equation storage unit 801, the observation equation storage unit 802, the first frequency adjustment unit 804, the filter operation unit 805, the second frequency adjustment unit 806, the track state calculation unit 807, and the output unit 808 may be fabricated by a plurality of apparatuses. In this case, the inspection system is constituted by using the plural apparatuses. The above is true of the state equation storage unit 801, the observation equation storage unit 802, the data acquisition unit 803, the first frequency adjustment unit 804, the filter operation unit 805, the second frequency adjustment unit 806, the track state calculation unit 807, the output unit 808, the seam judgement unit 1702, and the correction unit 1703, which are explained in the second embodiment.

(Another embodiment)

The embodiments of the present invention explained above can be fabricated by causing a computer to execute a program. Further, a computer-readable recording medium in which the aforementioned program is recorded and a computer program product such as the aforementioned program can also be applied as the embodiment of the present invention. As the recording medium, it is possible to use a flexible disk, a hard disk, an optical disk, a magneto-optic disk, a CD-ROM, a magnetic tape, a nonvolatile memory card, a ROM, or the like, for example.

Further, the embodiments of the present invention explained above merely illustrate concrete examples of implementing the present invention, and the technical scope of the present invention is not to be construed in a restrictive manner by these embodiments. That is, the present invention may be implemented in various forms without departing from the invention defined in the appended claims.

INDUSTRIAL APPLICABILITY

The present invention can be utilized for inspecting tracks of railway vehicles, for example.

**Claims**

1. An inspection system, comprising:

   a data acquisition means arranged to acquire measured data being time-series data of measured values to be measured by causing a railway vehicle including a vehicle body (11), a bogie (12a, 12b), and a wheel set (13a to 13b) to travel on a track (16);
   a frequency adjustment means arranged to reduce a signal strength of a low-frequency component to be generated due to the railway vehicle traveling on a curved portion of the track (16) of the time-series data of a measured value of the measured data of a forward-and-backward-direction force varying in a value according to a state of the railway vehicle or of the time-series data of estimated values of a physical quantity varying in a value according to a state of the railway vehicle; and
   a track state calculation means arranged to derive information reflecting a state of the track (16), wherein
   the measured data contain a measured value of the forward-and-backward-direction force,
   the low-frequency component is a signal contained in the time-series data of a measured value of the measured data, the low frequency component not being measured when the railway vehicle is traveling on a linear portion of the track (16), but is measured when the railway vehicle is traveling on a curved portion of the track (16),
   the forward-and-backward-direction force is a force in a forward and backward direction to occur in a member disposed between the wheel set (13a to 13b) and the bogie (12a, 12b) on which the wheel set (13a to 13b) is provided,
   the member is a member for supporting an axle box,
   the forward and backward direction is a direction along a traveling direction of the railway vehicle,
   the frequency adjustment means includes a first frequency adjustment means arranged to reduce the signal strength of the low-frequency component to be generated due to the railway vehicle traveling on a curved portion of the track (16) from the time-series data of the measured value of the forward-and-backward-direction force,
   the track state calculation means is arranged to use a relational expression representing the relation between information reflecting a state of the track (16) at a position of the wheel set (13a to 13b) and the forward-and-backward-direction force and a value of the forward-and-backward-direction force from which the signal strength of the low-frequency component has been reduced by the first frequency adjustment means to derive information reflecting a state of the track (16), and
   the relational expression is an expression not including a curvature radius of a rail.

2. The inspection system according to claim 1, further comprising:

   a filter operation means arranged to perform an operation using a filter performing data assimilation by using the measured data, a state equation, and an observation equation, and thereby to determine estimated values of state variables being variables to determine estimated values in the state equation, wherein
   the measured data further contain measured values of accelerations of the bogie (12a, 12b) and the wheel set (13a to 13b) in a right and left direction,

the right and left direction is a direction perpendicular to both the forward and backward direction and an up and down direction being a direction perpendicular to the track (16),

the forward-and-backward-direction force is a force to be determined according to a difference between an angular displacement of the wheel set (13a to 13b) in a yawing direction and an angular displacement of the bogie (12a, 12b) on which the wheel set (13a to 13b) is provided in the yawing direction,

the yawing direction is a pivoting direction with the up and down direction set as a pivot axis,

the state equation is an equation described by using the state variables, the forward-and-backward-direction force, and a transformation variable,

the state variables include a displacement and a velocity of the bogie (12a, 12b) in the right and left direction, an angular displacement and an angular velocity of the bogie (12a, 12b) in the yawing direction, an angular displacement and an angular velocity of the bogie (12a, 12b) in a rolling direction, a displacement and a velocity of the wheel set (13a to 13b) in the right and left direction, and an angular displacement of an air spring attached to the railway vehicle in the rolling direction, and do not include an angular displacement or an angular velocity of the wheel set (13a to 13b) in the yawing direction,

the rolling direction is a pivoting direction with the forward and backward direction set as a pivot axis,

the transformation variable is a variable that performs mutual transformation between the angular displacement of the wheel set (13a to 13b) in the yawing direction and the angular displacement of the bogie (12a, 12b) in the yawing direction,

the observation equation is an equation described by using an observation variable and the transformation variable,

the observation variable includes the accelerations of the bogie (12a, 12b) and the wheel set (13a to 13b) in the right and left direction,

the filter operation means is arranged to use the state equation into which a measured value of the observation variable, the value of the forward-and-backward-direction force from which the signal strength of the low-frequency component has been reduced by the first frequency adjustment means, and an actual value of the transformation variable are substituted and the observation equation into which the actual value of the transformation variable is substituted, and to determine estimated values of the state variables when an error of the observation variable between the measured value and an estimated value or an expected value of the error becomes minimum,

the track state calculation means is arranged to use an estimated value of the angular displacement of the bogie (12a, 12b) in the yawing direction, which is one of the state variables determined by the filter operation means, and the actual value of the transformation variable to derive an estimated value of the angular displacement of the wheel set (13a to 13b) in the yawing direction, and to use the estimated value of the angular displacement of the wheel set (13a to 13b) in the yawing direction, the value of the forward-and-backward-direction force from which the signal strength of the low-frequency component has been reduced by the first frequency adjustment means, and the relational expression to derive the information reflecting the state of the track (16),

the relational expression is an expression in which a motion equation describing motion of the wheel set (13a to 13b) in the yawing direction is expressed by using the forward-and-backward-direction force, and

the actual value of the transformation variable is derived by using the value of the forward-and-backward-direction force from which the signal strength of the low-frequency component has been reduced by the first frequency adjustment means.

3. The inspection system according to claim 2, wherein

the state equation is constituted by using a motion equation that describes motion of the wheel set (13a to 13b) in the right and left direction, a motion equation that describes motion of the bogie (12a, 12b) in the right and left direction, a motion equation that describes motion of the bogie (12a, 12b) in the yawing direction, a motion equation that describes motion of the bogie (12a, 12b) in the rolling direction, and a motion equation that describes motion of the air spring in the rolling direction,

the motion equation that describes the motion of the wheel set (13a to 13b) in the right and left direction is a motion equation described by using the transformation variable in place of using the angular displacement of the wheel set (13a to 13b) in the yawing direction,

the motion equation that describes the motion of the bogie (12a, 12b) in the yawing direction is a motion equation described by using the forward-and-backward-direction force in place of using the angular displacement and the angular velocity of the wheel set (13a to 13b) in the yawing direction, and

the transformation variable is represented by a difference between the angular displacement of the bogie (12a, 12b) in the yawing direction and the angular displacement of the wheel set (13a to 13b) in the yawing direction.

4. The inspection system according to claim 2 or 3, wherein

the data acquisition means is arranged to further acquire a measured value of acceleration of the vehicle body (11) in the right and left direction,
the observation variable further includes the acceleration of the vehicle body (11) in the right and left direction, the state variables further include a displacement and a velocity of the vehicle body (11) in the right and left direction, an angular displacement and an angular velocity of the vehicle body (11) in the yawing direction, an angular displacement and an angular velocity of the vehicle body (11) in the rolling direction, and an angular displacement of an yaw damper attached to the railway vehicle in the yawing direction, and
the filter operation means is arranged to determine estimated values of the state variables when differences between the measured values and estimated values of the accelerations of the vehicle body (11), the bogie (12a, 12b), and the wheel set (13a to 13b) in the right and left direction become minimum.

5. The inspection system according to claim 4, wherein
the state equation is constituted by further using a motion equation that describes motion of the vehicle body (11) in the right and left direction, a motion equation that describes motion of the vehicle body (11) in the yawing direction, a motion equation that describes motion of the vehicle body (11) in the rolling direction, and a motion equation that describes motion of the yaw damper in the yawing direction.

6. The inspection system according to any one of claims 2 to 5, wherein

the observation equation is constituted by further using the motion equation that describes the motion of the wheel set (13a to 13b) in the right and left direction and the motion equation that describes the motion of the bogie (12a, 12b) in the right and left direction, and
the motion equation that describes the motion of the wheel set (13a to 13b) in the right and left direction is a motion equation described by using the transformation variable in place of using the angular displacement of the wheel set (13a to 13b) in the yawing direction.

7. The inspection system according to claim 6, wherein
the observation equation is constituted by further using the motion equation that describes the motion of the vehicle body (11) in the right and left direction.

8. The inspection system according to any one of claims 2 to 7, wherein

the physical quantity includes the state variables,
the frequency adjustment means further includes a second frequency adjustment means arranged to reduce the signal strength of the low-frequency component to be generated due to the railway vehicle traveling on a curved portion of the track (16) from the time-series data of the estimated values of the state variables.

9. The inspection system according to any one of claims 2 to 8, wherein
the filter is a Kalman filter.

10. The inspection system according to any one of claims 1 to 9, wherein

the frequency adjustment means is arranged to use the time-series data of the physical quantity and determine a coefficient in a corrected AR model, and use the corrected AR model whose coefficient is determined and the time-series data of the physical quantity and reduces the signal strength of the low-frequency component to be generated due to the railway vehicle traveling on a curved portion of the track (16) from the time-series data of the physical quantity,
the corrected AR model is an expression representing a predicted value of the physical quantity by using a value of the physical quantity and the coefficient responsive to the value,
the frequency adjustment means is arranged to use an equation in which a first matrix is set to a coefficient matrix and an autocorrelation vector is set to a constant vector and determines the coefficient,
the autocorrelation vector is a vector whose component is autocorrelation of the time-series data of the physical quantity with a time lag of 1 to m, m being a number of the measured value used in the corrected AR model,
the first matrix is a matrix $U_s \Sigma_s U_s^T$ derived from a second matrix $\Sigma_s$ that is derived from s pieces of eigenvalues of an autocorrelation matrix, s being a number set to be 1 or more and less than m, and a diagonal matrix $\Sigma$ and a third matrix $U_s$ that is derived from s pieces of the eigenvalues and an orthogonal matrix U,

the autocorrelation matrix is a matrix whose component is autocorrelation of the time-series data of the physical quantity with a time lag of 0 to m - 1,

the diagonal matrix is a matrix whose diagonal component is eigenvalues of the autocorrelation matrix that are derived by singular value decomposition of the autocorrelation matrix,

the orthogonal matrix is a matrix in which an eigenvector of the autocorrelation matrix is set to a column component vector,

the second matrix is a submatrix of the diagonal matrix and is a matrix whose diagonal component is s pieces of the eigenvalues, and

the third matrix is a submatrix of the orthogonal matrix and is a matrix in which eigenvectors corresponding to s pieces of the eigenvalues are set to column component vectors.

11. The inspection system according to claim 10, wherein
out of eigenvalues of the autocorrelation matrix, the largest eigenvalue is included in s pieces of the eigenvalues.

12. The inspection system according to any one of claims 1 to 11, further comprising:

a correction means arranged to correct a value of the forward-and-backward-direction force in a section containing a seam of a rail in the curved portion of the track (16), wherein
the value of the forward-and-backward-direction force to be corrected by the correction means is a measured value of the forward-and-backward-direction force contained in the measured data or a value of forward-and-backward-direction force from which the signal strength of the low-frequency component has been reduced by the first frequency adjustment means.

13. The inspection system according to any one of claims 1 to 12, wherein

the information reflecting the state of the track (16) is an alignment irregularity amount of the track (16) or a lateral force that is a stress in the right and left direction between a wheel provided on the wheel set (13a to 13b) and the track (16), and
the right and left direction is a direction perpendicular to both the forward and backward direction and the up and down direction being a direction perpendicular to the track (16).

14. The inspection system according to any one of claims 1 to 13, wherein

the forward-and-backward-direction force is, out of components in the forward and backward direction of forces to occur in the two members attached to both sides of the single wheel set (13a to 13b) in the right and left direction, the component opposite in phase to each other, and
the right and left direction is a direction perpendicular to both the forward and backward direction and the up and down direction being a direction perpendicular to the track (16).

15. The inspection system according to claim 14, wherein
the member is a link supporting the axle box, or a rubber bush attached to a link supporting the axle box.

16. The inspection system according to claim 14, wherein
the member is an axle beam supporting the axle box, or a rubber bush attached to an axle beam supporting the axle box.

17. The inspection system according to claim 14, wherein
the member is a leaf spring supporting the axle box, or a rubber bush attached to a leaf spring supporting the axle box.

18. The inspection system according to any one of claims 1 to 17, further comprising:

a transmission means arranged to transmit the measured data acquired by the data acquisition means; and
a reception means arranged to receive the measured data transmitted by the transmission means.

19. An inspection method, comprising:

a data acquisition step of acquiring measured data being time-series data of measured values to be measured by causing a railway vehicle including a vehicle body (11), a bogie (12a, 12b), and a wheel set (13a to 13b) to travel on a track (16);

a frequency adjustment step of reducing a signal strength of a low-frequency component to be generated due to the railway vehicle traveling on a curved portion of the track (16) of the time-series data of a measured value of the measured data of a forward-and-backward-direction force varying in a value according to a state of the railway vehicle or of the time-series data of estimated values of a physical quantity varying in a value according to a state of the railway vehicle; and

a track state calculation step of deriving information reflecting a state of the track (16), wherein

the measured data contain a measured value of the forward-and-backward-direction force,

the low-frequency component is a signal contained in the time-series data of a measured value of the measured data, the low frequency component not being measured when the railway vehicle is traveling on a linear portion of the track (16), but is measured when the railway vehicle is traveling on a curved portion of the track (16),

the forward-and-backward-direction force is a force in a forward and backward direction to occur in a member disposed between the wheel set (13a to 13b) and the bogie (12a, 12b) on which the wheel set (13a to 13b) is provided,

the member is a member for supporting an axle box,

the forward and backward direction is a direction along a traveling direction of the railway vehicle,

the frequency adjustment step includes a first frequency adjustment step of reducing the signal strength of the low-frequency component to be generated due to the railway vehicle traveling on a curved portion of the track (16) from the time-series data of the measured value of the forward-and-backward-direction force,

the track state calculation step uses a relational expression representing the relation between information reflecting a state of the track (16) at a position of the wheel set (13a to 13b) and the forward-and-backward-direction force and a value of the forward-and-backward-direction force from which the signal strength of the low-frequency component has been reduced by the first frequency adjustment step to derive information reflecting a state of the track (16), and

the relational expression is an expression based on an expression not including a curvature radius of a rail.

20. A computer program product comprising instructions which, when the program is executed by a computer, cause the computer to carry out steps comprising:

a data acquisition step of acquiring measured data being time-series data of measured values to be measured by causing a railway vehicle including a vehicle body (11), a bogie (12a, 12b), and a wheel set (13a to 13b) to travel on a track (16);

a frequency adjustment step of reducing a signal strength of a low-frequency component to be generated due to the railway vehicle traveling on a curved portion of the track (16) of the time-series data of a measured value of the measured data of a forward-and-backward-direction force varying in a value according to a state of the railway vehicle or of the time-series data of estimated values of a physical quantity varying in a value according to a state of the railway vehicle; and

a track state calculation step of deriving information reflecting a state of the track (16), wherein

the measured data contain a measured value of the forward-and-backward-direction force,

the low-frequency component is a signal contained in the time-series data of a measured value of the measured data, the low frequency component not being measured when the railway vehicle is traveling on a linear portion of the track (16), but is measured when the railway vehicle is traveling on a curved portion of the track (16),

the forward-and-backward-direction force is a force in a forward and backward direction to occur in a member disposed between the wheel set (13a to 13b) and the bogie (12a, 12b) on which the wheel set (13a to 13b) is provided,

the member is a member for supporting an axle box,

the forward and backward direction is a direction along a traveling direction of the railway vehicle,

the frequency adjustment step includes a first frequency adjustment step of reducing the signal strength of the low-frequency component to be generated due to the railway vehicle traveling on a curved portion of the track (16) from the time-series data of the measured value of the forward-and-backward-direction force,

the track state calculation step uses a relational expression representing the relation between information reflecting a state of the track (16) at a position of the wheel set (13a to 13b) and the forward-and-backward-direction force and a value of the forward-and-backward-direction force from which the signal strength of the low-frequency component has been reduced by the first frequency adjustment step to derive information reflecting a state of the track (16), and

the relational expression is an expression based on an expression not including a curvature radius of a rail.

**Patentansprüche**

1.  Inspektionssystem, mit:

    einer Datenerfassungseinrichtung, die dazu eingerichtet ist, Messdaten zu erfassen, die Zeitreihendaten von Messwerten sind, die gemessen werden sollen, indem veranlasst wird, dass ein Schienenfahrzeug, das einen Fahrzeugkasten (11), ein Drehgestell (12a, 12b) und einen Radsatz (13a bis 13b) aufweist, auf einem Gleis (16) fährt,
    einer Frequenzeinstelleinrichtung, die dazu eingerichtet ist, eine Signalstärke einer Niederfrequenzkomponente, die durch das Fahren des Schienenfahrzeugs auf einem Kurvenabschnitt des Gleises (16) erzeugt wird, in den Zeitreihendaten eines Messwertes der gemessenen Daten einer Kraft in Vorwärts-Rückwärtsrichtung, die in einem Wert gemäß einem Zustand des Schienenfahrzeugs variiert, oder in den Zeitreihendaten von Schätzwerten einer physikalischen Größe, die in einem Wert gemäß einem Zustand des Schienenfahrzeugs variiert, zu reduzieren, und
    einer Gleiszustandberechnungseinrichtung, die dazu eingerichtet ist, Information herzuleiten, die einen Zustand des Gleises (16) anzeigt, wobei
    die gemessenen Daten einen Messwert der Kraft in Vorwärts-Rückwärtsrichtung enthalten,
    die Niederfrequenzkomponente ein Signal ist, das in den Zeitreihendaten eines Messwerts der gemessenen Daten enthalten ist, wobei die Niederfrequenzkomponente nicht gemessen wird, wenn das Schienenfahrzeug auf einem geraden Abschnitt des Gleises (16) fährt, aber gemessen wird, wenn das Schienenfahrzeug auf einem Kurvenabschnitt des Gleises (16) fährt,
    die Kraft in Vorwärts-Rückwärtsrichtung eine Kraft in einer Vorwärts-Rückwärtsrichtung ist, die in einem Bauteil auftritt, das zwischen dem Radsatz (13a bis 13b) und dem Drehgestell (12a, 12b), auf dem der Radsatz (13a bis 13b) vorgesehen ist, angeordnet ist,
    das Bauteil ein Bauteil zum Tragen eines Achslagers ist,
    die Vorwärts-Rückwärtsrichtung eine Richtung entlang einer Fahrtrichtung des Schienenfahrzeugs ist,
    die Frequenzeinstelleinrichtung eine erste Frequenzeinstelleinrichtung aufweist, die dazu eingerichtet ist, die Signalstärke der Niederfrequenzkomponente, die aufgrund des auf einem Kurvenabschnitt des Gleises (16) fahrenden Schienenfahrzeugs erzeugt werden soll, in den Zeitreihendaten des Messwerts der Kraft in Vorwärts-Rückwärtsrichtung zu reduzieren,
    die Gleiszustandberechnungseinrichtung dazu eingerichtet ist, einen Beziehungsausdruck zu verwenden, der die Beziehung zwischen Information, die einen Zustand des Gleises (16) an einer Position des Radsatzes (13a bis 13b) anzeigt, und der Kraft in Vorwärts-Rückwärtsrichtung darstellt, und einen Wert der Kraft in Vorwärts-Rückwärtsrichtung, in dem die Signalstärke der Niederfrequenzkomponente durch die erste Frequenzeinstelleinrichtung reduziert worden ist, um Information herzuleiten, die einen Zustand des Gleises (16) anzeigt, und
    der Beziehungsausdruck ein Ausdruck ist, der einen Krümmungsradius einer Schiene nicht enthält.

2.  Inspektionssystem nach Anspruch 1, ferner mit:

    einer Filteroperationseinrichtung, die dazu eingerichtet ist, eine Operation unter Verwendung eines Filters auszuführen, das eine Datenassimilation unter Verwendung der gemessenen Daten, einer Zustandsgleichung und einer Beobachtungsgleichung ausführt, und um dadurch Schätzwerte von Zustandsvariablen zu bestimmen, die Variablen zum Bestimmen von Schätzwerten in der Zustandsgleichung sind, wobei
    die gemessenen Daten ferner Messwerte von Beschleunigungen des Drehgestells (12a, 12b) und des Radsatzes (13a bis 13b) in einer Rechts-Linksrichtung enthalten,
    die Rechts-Linksrichtung eine Richtung senkrecht sowohl zur Vorwärts-Rückwärtsrichtung als auch zu einer Aufwärts-Abwärtsrichtung ist, die eine Richtung senkrecht zum Gleis (16) ist,
    die Kraft in Vorwärts-Rückwärtsrichtung eine Kraft ist, die gemäß einer Differenz zwischen einem Winkelversatz des Radsatzes (13a bis 13b) in einer Gierrichtung und einem Winkelversatz des Drehgestells (12a, 12b), auf dem der Radsatz (13a bis 13b) vorgesehen ist, in der Gierrichtung bestimmt werden soll,
    die Gierrichtung eine Schwenkrichtung ist, wobei die Aufwärts-Abwärtsrichtung als eine Schwenkachse festgelegt ist,
    die Zustandsgleichung eine Gleichung ist, die durch Verwendung der Zustandsvariablen der Kraft in Vorwärts-Rückwärtsrichtung und einer Transformationsvariablen beschrieben wird,
    die Zustandsvariablen einen Versatz und eine Geschwindigkeit des Drehgestells (12a, 12b) in der Rechts-Linksrichtung, einen Winkelversatz und eine Winkelgeschwindigkeit des Drehgestells (12a, 12b) in der Gierrichtung, einen Winkelversatz und eine Winkelgeschwindigkeit des Drehgestells (12a, 12b) in einer Rollrichtung, einen Versatz und eine Geschwindigkeit des Radsatzes (13a bis 13b) in der Rechts-Linksrichtung und einen Winkelversatz einer am Schienenfahrzeug befestigten Luftfeder in der Rollrichtung aufweisen, und keinen Winkelversatz oder keine Winkelgeschwindigkeit des Radsatzes (13a bis 13b) in der Gierrichtung aufweisen,
die Rollrichtung eine Schwenkrichtung ist, wobei die Vorwärts-Rückwärtsrichtung als eine Schwenkachse festgelegt ist,
die Transformationsvariable eine Variable ist, die eine wechselseitige Transformation zwischen dem Winkelversatz des Radsatzes (13a bis 13b) in der Gierrichtung und dem Winkelversatz des Drehgestells (12a, 12b) in der Gierrichtung ausführt,
die Beobachtungsgleichung eine Gleichung ist, die durch Verwendung einer Beobachtungsvariablen und der Transformationsvariablen beschrieben wird,
die Beobachtungsvariable die Beschleunigungen des Drehgestells (12a, 12b) und des Radsatzes (13a bis 13b) in der Rechts-Linksrichtung enthält,
die Filteroperationseinrichtung dazu eingerichtet ist, die Zustandsgleichung zu verwenden, in der ein Messwert der Beobachtungsvariablen, der Wert der Kraft in Vorwärts-Rückwärtsrichtung, von dem die Signalstärke der Niederfrequenzkomponente durch die erste Frequenzeinstelleinrichtung reduziert worden ist, und ein Istwert der Transformationsvariablen substituiert werden, sowie die Beobachtungsgleichung, in der der Istwert der Transformationsvariablen substituiert ist, und um Schätzwerte der Zustandsvariablen zu bestimmen, wenn ein Fehler der Beobachtungsvariablen zwischen dem Messwert und einem Schätzwert oder einem Erwartungswert des Fehlers minimal wird,
die Gleiszustandsberechnungseinrichtung dazu eingerichtet ist, einen Schätzwert des Winkelversatzes des Drehgestells (12a, 12b) in der Gierrichtung, die eine der Zustandsvariablen ist, die durch die Filteroperationseinrichtung bestimmt wird, und den Istwert der Transformationsvariablen zu verwenden, um einen Schätzwert des Winkelversatzes des Radsatzes (13a bis 13b) in der Gierrichtung herzuleiten, und den Schätzwert des Winkelversatzes des Radsatzes (13a bis 13b) in der Gierrichtung, den Wert der Kraft in Vorwärts-Rückwärtsrichtung, in dem die Signalstärke der Niederfrequenzkomponente durch die erste Frequenzeinstelleinrichtung reduziert worden ist, und den Beziehungsausdruck zu verwenden, um die Information herzuleiten, die den Zustand des Gleises (16) anzeigt,
wobei der Beziehungsausdruck ein Ausdruck ist, in dem eine die Bewegung des Radsatzes (13a bis 13b) in der Gierrichtung beschreibende Bewegungsgleichung unter Verwendung der Kraft in Vorwärts- und Rückwärtsrichtung ausgedrückt ist, und
der Istwert der Transformationsvariablen unter Verwendung des Wertes der Kraft in Vorwärts-Rückwärtsrichtung hergeleitet wird, von dem die Signalstärke der Niederfrequenzkomponente durch die erste Frequenzeinstelleinrichtung reduziert worden ist.

3. Inspektionssystem nach Anspruch 2, wobei

die Zustandsgleichung unter Verwendung einer Bewegungsgleichung, die eine Bewegung des Radsatzes (13a bis 13b) in der Rechts-Linksrichtung beschreibt, einer Bewegungsgleichung, die die Bewegung des Drehgestells (12a, 12b) in der Rechts-Linksrichtung beschreibt, einer Bewegungsgleichung, die eine Bewegung des Drehgestells (12a, 12b) in der Gierrichtung beschreibt, einer Bewegungsgleichung, die die Bewegung des Drehgestells (12a, 12b) in der Rollrichtung beschreibt, und einer Bewegungsgleichung gebildet wird, die die Bewegung der Luftfeder in der Rollrichtung beschreibt,
die Bewegungsgleichung, die die Bewegung des Radsatzes (13a bis 13b) in der Rechts-Linksrichtung beschreibt, eine Bewegungsgleichung ist, die unter Verwendung der Transformationsvariablen anstelle der Verwendung des Winkelversatzes des Radsatzes (13a bis 13b) in der Gierrichtung beschrieben wird,
die Bewegungsgleichung, die die Bewegung des Drehgestells (12 a, 12b) in der Gierrichtung beschreibt, eine Bewegungsgleichung ist, die unter Verwendung der Kraft in Vorwärts-Rückwärtsrichtung anstelle des Winkelversatzes und der Winkelgeschwindigkeit des Radsatzes (13a bis 13b) in der Gierrichtung beschrieben wird, und
die Transformationsvariable durch eine Differenz zwischen dem Winkelversatz des Drehgestells (12a, 12b) in der Gierrichtung und des Winkelversatzes des Radsatzes (13a bis 13b) in der Gierrichtung dargestellt wird.

4. Inspektionssystem nach Anspruch 2 oder 3, wobei

die Datenerfassungseinrichtung dazu eingerichtet ist, ferner einen Messwert der Beschleunigung des Fahrzeugkastens (11) in der Rechts-Linksrichtung zu erfassen,
die Beobachtungsvariable ferner die Beschleunigung des Fahrzeugkastens (11) in der Rechts-Linksrichtung aufweist,
die Zustandsvariablen ferner einen Versatz und eine Geschwindigkeit des Fahrzeugkastens (11) in der Rechts-Linksrichtung, einen Winkelversatz und eine Winkelgeschwindigkeit des Fahrzeugkastens (11) in der Gierrichtung, einen Winkelversatz und eine Winkelgeschwindigkeit des Fahrzeugkastens (11) in der Rollrichtung, und einen Winkelversatz eines am Schienenfahrzeug angebrachten Gierdämpfers in der Gierrichtung aufweisen, und

die Filteroperationseinrichtung dazu eingerichtet ist, um Schätzwerte der Zustandsvariablen zu bestimmen, wenn Differenzen zwischen den Messwerten und den Schätzwerten der Beschleunigungen des Fahrzeugkastens (11), des Drehgestells (12a, 12b) und des Radsatzes (13a bis 13b) in der Rechts-Linksrichtung, minimal werden.

5. Inspektionssystem nach Anspruch 4, wobei
die Zustandsgleichung weiter unter Verwendung einer Bewegungsgleichung, die die Bewegung des Fahrzeugkastens (11) in der Rechts-Linksrichtung beschreibt, einer Bewegungsgleichung, die die Bewegung des Fahrzeugkastens (11) in der Gierrichtung beschreibt, einer Bewegungsgleichung, die die Bewegung des Fahrzeugkastens (11) in der Rollrichtung beschreibt, und einer Bewegungsgleichung gebildet wird, die eine Bewegung des Gierdämpfers in der Gierrichtung beschreibt.

6. Inspektionssystem nach einem der Ansprüche 2 bis 5, wobei

die Beobachtungsgleichung ferner unter Verwendung der Bewegungsgleichung, die eine Bewegung des Radsatzes (13a bis 13b) in der Rechts-Linksrichtung beschreibt, und der Bewegungsgleichung gebildet wird, die eine Bewegung des Drehgestells (12a, 12b) in der Rechts-Linksrichtung beschreibt, und
die Bewegungsgleichung, die die Bewegung des Radsatzes (13a bis 13b) in der Rechts-Linksrichtung beschreibt, eine Bewegungsgleichung ist, die unter Verwendung der Transformationsvariablen anstelle der Verwendung des Winkelversatzes des Radsatzes (13a bis 13b) in der Gierrichtung beschrieben wird.

7. Inspektionssystem nach Anspruch 6, wobei
die Beobachtungsgleichung ferner unter Verwendung der Bewegungsgleichung gebildet wird, die die Bewegung des Fahrzeugkastens (11) in der Rechts-Linksrichtung beschreibt.

8. Inspektionssystem nach einem der Ansprüche 2 bis 7, wobei

die physikalische Größe die Zustandsvariablen enthält,
die Frequenzeinstelleinrichtung ferner eine zweite Frequenzeinstelleinrichtung aufweist, die dazu eingerichtet ist, die Signalstärke der Niederfrequenzkomponente, die aufgrund der Fahrt des Schienenfahrzeugs auf einem Kurvenabschnitt des Gleises (16) erzeugt werden soll, in den Zeitreihendaten der Schätzwerte der Zustandsvariablen zu reduzieren.

9. Inspektionssystem nach einem der Ansprüche 2 bis 8, wobei
das Filter ein Kalman-Filter ist.

10. Inspektionssystem nach einem der Ansprüche 1 bis 9, wobei

die Frequenzeinstelleinrichtung dazu eingerichtet ist, die Zeitreihendaten der physikalischen Größe zu verwenden und einen Koeffizienten in einem korrigierten AR-Modell zu bestimmen, und das korrigierte AR-Modell, dessen Koeffizient bestimmt ist, und die Zeitreihendaten der physikalischen Größe zu verwenden und die Signalstärke der Niederfrequenzkomponente, die aufgrund des auf einem Kurvenabschnitt des Gleises (16) fahrenden Schienenfahrzeugs erzeugt werden soll, in den Zeitreihendaten der physikalischen Größe zu reduzieren,
wobei das korrigierte AR-Modell ein Ausdruck ist, der einen Vorhersagewert der physikalischen Größe unter Verwendung eines Wertes der physikalischen Größe und des auf den Wert ansprechenden Koeffizienten darstellt,
die Frequenzeinstelleinrichtung dazu eingerichtet ist, eine Gleichung zu verwenden, in der eine erste Matrix auf eine Koeffizientenmatrix und ein Autokorrelationsvektor auf einen konstanten Vektor gesetzt sind, und den Koeffizienten zu bestimmen,
wobei der Autokorrelationsvektor ein Vektor ist, dessen Komponente eine Autokorrelation der Zeitreihendaten der physikalischen Größe mit einer Zeitverzögerung von 1 bis m ist, wobei m eine Zahl des im korrigierten AR-Modell verwendeten Messwerts ist,
die erste Matrix eine Matrix $U_s S_s U_s^T$ ist, die von einer zweiten Matrix $\Sigma_s$, die aus s Teilen von Eigenwerten einer Autokorrelationsmatrix hergeleitet ist, wobei s eine Zahl ist, die auf 1 oder mehr und weniger als m gesetzt ist,

EP 3 677 485 B1

und einer Diagonalmatrix Σ und einer dritten Matrix U_s hergeleitet ist, die aus s Teilen der Eigenwerte und einer orthogonalen Matrix U hergeleitet ist,
die Autokorrelationsmatrix eine Matrix ist, deren Komponente die Autokorrelation der Zeitreihendaten der physikalischen Größe mit einer Zeitverzögerung von 0 bis m - 1 ist,
die Diagonalmatrix eine Matrix ist, deren Diagonalkomponente Eigenwerte der Autokorrelationsmatrix sind, die durch Singulärwertzerlegung der Autokorrelationsmatrix hergeleitet werden,
die orthogonale Matrix eine Matrix ist, in der ein Eigenvektor der Autokorrelationsmatrix auf einen Spaltenkomponentenvektor gesetzt ist,
die zweite Matrix eine Untermatrix der Diagonalmatrix und eine Matrix ist, deren Diagonalkomponente s Teilen der Eigenwerte sind, und
die dritte Matrix eine Untermatrix der orthogonalen Matrix und eine Matrix ist, in der Eigenvektoren, die s Teilen der Eigenwerte entsprechen, auf Spaltenkomponentenvektoren gesetzt sind.

11. Inspektionssystem nach Anspruch 10, wobei
von den Eigenwerten der Autokorrelationsmatrix der größte Eigenwert in s Teilen der Eigenwerte enthalten ist.

12. Inspektionssystem nach einem der Ansprüche 1 bis 11, ferner mit:

einer Korrektureinrichtung, die dazu eingerichtet ist, einen Wert der Kraft in Vorwärts-Rückwärtsrichtung in einem Abschnitt zu korrigieren, der eine Nahtstelle einer Schiene im Kurvenabschnitt des Gleises (16) enthält, wobei der durch die Korrektureinrichtung zu korrigierende Wert der Kraft in Vorwärts-Rückwärtsrichtung ein Messwert der Kraft in Vorwärts-Rückwärtsrichtung ist, der in den gemessenen Daten enthalten ist, oder ein Wert der Kraft in Vorwärts-Rückwärtsrichtung, von dem die Signalstärke der Niederfrequenzkomponente durch die erste Frequenzeinstelleinrichtung reduziert worden ist.

13. Inspektionssystem nach einem der Ansprüche 1 bis 12, wobei

die den Zustand des Gleises (16) anzeigende Information ein Maß für eine Unregelmäßigkeit in der Ausrichtung des Gleises (16) oder eine Seitenkraft ist, die eine Belastung in der Rechts-Linksrichtung zwischen einem Rad, das im Radsatz (13a bis 13b) vorgesehen ist, und dem Gleis (16) ist, und
die Rechts-Linksrichtung eine Richtung sowohl senkrecht zur Vorwärts-Rückwärtsrichtung als auch zur Aufwärts-Abwärtsrichtung ist, die eine Richtung senkrecht zum Gleis (16) ist.

14. Inspektionssystem nach einem der Ansprüche 1 bis 13, wobei

die Kraft in Vorwärts-Rückwärtsrichtung unter den Komponenten von Kräften in der Vorwärts-Rückwärtsrichtung, die in den beiden an beiden Seiten des Einzelradsatzes (13a bis 13b) in der Rechts-Linksrichtung befestigten Bauteilen auftreten, die gegenphasige Komponente ist, und
die Rechts-Linksrichtung eine Richtung senkrecht sowohl zur Vorwärts-Rückwärtsrichtung als auch zur Aufwärts-Abwärtsrichtung ist, die eine Richtung senkrecht zum Gleis (16) ist.

15. Inspektionssystem nach Anspruch 14, wobei
das Bauteil ein das Achslager stützender Lenker oder eine Gummibuchse ist, die an einem das Achslager stützenden Lenker befestigt ist.

16. Inspektionssystem nach Anspruch 14, wobei
das Bauteil ein Achsträger ist, der das Achslager trägt, oder eine Gummibuchse, die an einem das Achslager tragenden Achsträger befestigt ist.

17. Inspektionssystem nach Anspruch 14, wobei
das Bauteil eine Blattfeder ist, die das Achslager trägt, oder eine Gummibuchse, die an einer das Achslager tragenden Blattfeder befestigt ist.

18. Inspektionssystem nach einem der Ansprüche 1 bis 17, ferner mit:

einer Übertragungseinrichtung, die dazu eingerichtet ist, die durch die Datenerfassungseinrichtung erfassten Messdaten zu übertragen; und
einer Empfangseinrichtung, die dazu eingerichtet ist, die durch die Übertragungseinrichtung übertragenen Mess-

44

daten zu empfangen.

19. Inspektionsverfahren, mit:

einem Datenerfassungsschritt zum Erfassen von gemessenen Daten, die Zeitreihendaten von Messwerten sind, die gemessen werden sollen, indem ein Schienenfahrzeug, das einen Fahrzeugkasten (11), ein Drehgestell (12a, 12b) und einen Radsatz (13a bis 13b) aufweist, veranlasst wird, auf einem Gleis (16) zu fahren;
einem Frequenzeinstellschritt zum Reduzieren einer Signalstärke einer Niederfrequenzkomponente, die aufgrund der Fahrt des Schienenfahrzeugs auf einem Kurvenabschnitt des Gleises (16) erzeugt werden soll, in den Zeitreihendaten eines Messwertes der gemessenen Daten einer Kraft in Vorwärts-Rückwärtsrichtung, die in einem Wert gemäß einem Zustand des Schienenfahrzeugs variiert, oder in den Zeitreihendaten von Schätzwerten einer physikalischen Größe, die in einem Wert gemäß einem Zustand des Schienenfahrzeugs variiert; und
einem Gleiszustandsberechnungsschritt zum Herleiten von Information, die einen Zustand des Gleises (16) anzeigt,
wobei die gemessenen Daten einen Messwert der Kraft in Vorwärts-Rückwärtsrichtung enthalten,
die Niederfrequenzkomponente ein Signal ist, das in den Zeitreihendaten eines Messwertes der gemessenen Daten enthalten ist, wobei die Niederfrequenzkomponente nicht gemessen wird, wenn das Schienenfahrzeug auf einem geraden Abschnitt des Gleises (16) fährt, aber gemessen wird, wenn das Schienenfahrzeug auf einem Kurvenabschnitt des Gleises (16) fährt,
die Kraft in Vorwärts-Rückwärtsrichtung eine Kraft in einer Vorwärts-Rückwärtsrichtung ist, die in einem Bauteil auftritt, das zwischen dem Radsatz (13a bis 13b) und dem Drehgestell (12a, 12b), auf dem der Radsatz (13a bis 13b) vorgesehen ist, angeordnet ist,
das Bauteil ein Bauteil zum Tragen eines Achslagers ist,
die Vorwärts-Rückwärtsrichtung eine Richtung entlang einer Fahrtrichtung des Schienenfahrzeugs ist,
der Frequenzeinstellschritt einen ersten Frequenzeinstellschritt zum Reduzieren der Signalstärke der Niederfrequenzkomponente, die aufgrund des auf einem Kurvenabschnitt des Gleises (16) fahrenden Schienenfahrzeugs erzeugt wird, in den Zeitseriendaten des Messwerts der Kraft in Vorwärts-Rückwärtsrichtung aufweist,
der Gleiszustandberechnungsschritt einen Beziehungsausdruck verwendet, der die Beziehung zwischen Information, die einen Zustand des Gleises (16) an einer Position des Radsatzes (13a bis 13b) anzeigt, und der Kraft in Vorwärts-Rückwärtsrichtung darstellt, und einen Wert der Kraft in Vorwärts-Rückwärtsrichtung, von dem die Signalstärke der Niederfrequenzkomponente durch den ersten Frequenzeinstellschritt reduziert worden ist, um Information herzuleiten, die einen Zustand des Gleises (16) anzeigt, und
der Beziehungsausdruck ein Ausdruck ist, der auf einem Ausdruck basiert, der einen Krümmungsradius einer Schiene nicht enthält.

20. Computerprogrammprodukt mit:
Anweisungen, die, wenn das Programm durch einen Computer ausgeführt wird, den Computer veranlassen, Schritte auszuführen, die aufweisen:

einen Datenerfassungsschritt zum Erfassen von gemessenen Daten, die Zeitreihendaten von Messwerten sind, die gemessen werden sollen, indem ein Schienenfahrzeug, das einen Fahrzeugkasten (11), ein Drehgestell (12a, 12b) und einen Radsatz (13a bis 13b) aufweist, veranlasst wird, auf einem Gleis (16) zu fahren;
einen Frequenzeinstellschritt zum Vermindern einer Signalstärke einer Niederfrequenzkomponente, die aufgrund der Fahrt des Schienenfahrzeugs auf einem Kurvenabschnitt des Gleises (16) erzeugt werden soll, in Zeitreihendaten eines Messwertes der gemessenen Daten einer Kraft in Vorwärts-Rückwärtsrichtung, die in einem Wert gemäß einem Zustand des Schienenfahrzeugs variiert, oder in Zeitreihendaten von Schätzwerten einer physikalischen Größe, die in einem Wert gemäß einem Zustand des Schienenfahrzeugs variiert; und
einen Gleiszustandberechnungsschritt zum Herleiten von Information, die einen Zustand des Gleises (16) anzeigt, wobei
die gemessenen Daten einen Messwert der Kraft in Vorwärts-Rückwärtsrichtung enthalten,
die Niederfrequenzkomponente ein Signal ist, das in den Zeitreihendaten eines Messwertes der gemessenen Daten enthalten ist, wobei die Niederfrequenzkomponente nicht gemessen wird, wenn das Schienenfahrzeug auf einem geraden Abschnitt des Gleises (16) fährt, aber gemessen wird, wenn das Schienenfahrzeug auf einem Kurvenabschnitt des Gleises (16) fährt,
die Kraft in Vorwärts-Rückwärtsrichtung eine Kraft in einer Vorwärts-Rückwärtsrichtung ist, die in einem Bauteil auftritt, das zwischen dem Radsatz (13a bis 13b) und dem Drehgestell (12a, 12b), auf dem der Radsatz (13a bis 13b) vorgesehen ist, angeordnet ist,

45

das Bauteil ein Bauteil zum Tragen eines Achslagers ist,

die Vorwärts-Rückwärtsrichtung eine Richtung entlang einer Fahrtrichtung des Schienenfahrzeugs ist,

der Frequenzeinstellschritt einen ersten Frequenzeinstellschritt zum Reduzieren der Signalstärke der Niederfrequenzkomponente, die aufgrund des auf einem Kurvenabschnitt des Gleises (16) fahrenden Schienenfahrzeugs erzeugt wird, in den Zeitseriendaten des Messwerts der Kraft in Vorwärts-Rückwärtsrichtung aufweist,

der Gleiszustandberechnungsschritt einen Beziehungsausdruck verwendet, der die Beziehung zwischen Information, die einen Zustand des Gleises (16) an einer Position des Radsatzes (13a bis 13b) anzeigt, und der Kraft in Vorwärts-Rückwärtsrichtung darstellt, und einen Wert der Kraft in Vorwärts-Rückwärtsrichtung, von dem die Signalstärke der Niederfrequenzkomponente durch den ersten Frequenzeinstellschritt reduziert worden ist, um Information herzuleiten, die einen Zustand des Gleises (16) anzeigt, und

der Beziehungsausdruck ein Ausdruck ist, der auf einem Ausdruck basiert, der einen Krümmungsradius einer Schiene nicht enthält.

**Revendications**

1. Système d'inspection, comprenant :

un moyen d'acquisition de données conçu pour acquérir des données mesurées qui sont des données de séries chronologiques de valeurs mesurées à mesurer en faisant circuler sur une voie (16) un véhicule ferroviaire comportant une carrosserie de véhicule (11), un bogie (12a, 12b) et un train de roues (13a à 13b) ;

un moyen d'ajustement de fréquences conçu pour réduire une intensité de signal d'une composante basse fréquence générée en raison de la circulation du véhicule ferroviaire sur une partie courbe de la voie (16) des données de séries chronologiques d'une valeur mesurée des données mesurées d'une force de direction avant-arrière, dont une valeur varie en fonction d'un état du véhicule ferroviaire, ou des données de séries chronologiques de valeurs estimées d'une quantité physique, dont une valeur varie en fonction d'un état du véhicule ferroviaire ; et

un moyen de calcul d'état de voie conçu pour obtenir des informations reflétant un état de la voie (16), dans lequel

les données mesurées contiennent une valeur mesurée de la force de direction avant-arrière,

la composante basse fréquence est un signal contenu dans les données de séries chronologiques d'une valeur mesurée des données mesurées, la composante basse fréquence n'étant pas mesurée lorsque le véhicule ferroviaire circule sur une partie linéaire de la voie (16), mais étant mesurée lorsque le véhicule ferroviaire circule sur une partie courbe de la voie (16),

la force de direction avant-arrière est une force dans une direction avant et une direction arrière qui s'exerce dans un élément disposé entre le train de roues (13a à 13b) et le bogie (12a, 12b) sur lequel est prévu le train de roues (13a à 13b),

l'élément est un élément pour supporter une boîte d'essieu,

la direction avant-arrière est une direction le long d'une direction de circulation du véhicule ferroviaire,

le moyen d'ajustement de fréquences comporte un premier moyen d'ajustement de fréquences conçu pour réduire l'intensité de signal de la composante basse fréquence générée en raison de la circulation du véhicule ferroviaire sur une partie courbe de la voie (16) des données de séries chronologiques de la valeur mesurée de la force de direction avant-arrière,

le moyen de calcul d'état de voie est conçu pour utiliser une expression relationnelle représentant la relation entre des informations reflétant un état de la voie (16) à une position du train de roues (13a à 13b) et la force de direction avant-arrière, et une valeur de la force de direction avant-arrière à partir de laquelle l'intensité de signal de la composante basse fréquence a été réduite par le premier moyen d'ajustement de fréquences pour obtenir des informations reflétant un état de la voie (16), et

l'expression relationnelle est une expression ne comportant pas de rayon de courbure d'un rail.

2. Système d'inspection selon la revendication 1, comprenant en outre :

un moyen d'opération de filtrage conçu pour effectuer une opération à l'aide d'un filtre effectuant une assimilation de données en utilisant les données mesurées, une équation d'état et une équation d'observation, et pour déterminer ainsi des valeurs estimées de variables d'état qui sont des variables pour déterminer des valeurs estimées de l'équation d'état, dans lequel

les données mesurées contiennent en outre des valeurs mesurées des accélérations du bogie (12a, 12b) et du train de roues (13a à 13b) dans une direction droite-gauche,

la direction droite-gauche est une direction perpendiculaire à la fois à la direction avant-arrière et à une direction haut-bas qui est une direction perpendiculaire à la voie (16),

la force de direction avant-arrière est une force à déterminer selon une différence entre un déplacement angulaire du train de roues (13a à 13b) dans une direction de lacet et un déplacement angulaire du bogie (12a, 12b) sur lequel est prévu le train de roues (13a à 13b) dans la direction de lacet,

la direction de lacet est une direction de pivotement avec la direction haut-bas définie comme axe de pivotement,

l'équation d'état est une équation décrite en utilisant les variables d'état, la force de direction avant-arrière et une variable de transformation,

les variables d'état comportent un déplacement et une vitesse du bogie (12a, 12b) dans la direction droite-gauche, un déplacement angulaire et une vitesse angulaire du bogie (12a, 12b) dans la direction de lacet, un déplacement angulaire et une vitesse angulaire du bogie (12a, 12b) dans une direction de roulement, un déplacement et une vitesse du train de roues (13a à 13b) dans la direction droite-gauche, et un déplacement angulaire d'un ressort pneumatique fixé au véhicule ferroviaire dans la direction de roulement, et ne comportent pas de déplacement angulaire ou de vitesse angulaire du train de roues (13a à 13b) dans la direction de lacet,

la direction de roulement est une direction de pivotement avec la direction avant-arrière définie comme axe de pivotement,

la variable de transformation est une variable qui effectue une transformation mutuelle entre le déplacement angulaire du train de roues (13a à 13b) dans la direction de lacet et le déplacement angulaire du bogie (12a, 12b) dans la direction de lacet,

l'équation d'observation est une équation décrite en utilisant une variable d'observation et la variable de transformation,

la variable d'observation comporte les accélérations du bogie (12a, 12b) et du train de roues (13a à 13b) dans la direction droite-gauche,

le moyen d'opération de filtrage est conçu pour utiliser l'équation d'état où une valeur mesurée de la variable d'observation, la valeur de la force de direction avant-arrière à partir de laquelle l'intensité de signal de la composante basse fréquence a été réduite par le premier moyen d'ajustement de fréquences et une valeur réelle de la variable de transformation sont substituées, et pour utiliser l'équation d'observation où la valeur réelle de la variable de transformation est substituée, et pour déterminer les valeurs estimées des variables d'état lorsqu'une erreur de la variable d'observation entre la valeur mesurée et une valeur estimée ou une valeur attendue de l'erreur devient minimale,

le moyen de calcul d'état de voie est conçu pour utiliser une valeur estimée du déplacement angulaire du bogie (12a, 12b) dans la direction de lacet, qui est l'une des variables d'état déterminées par le moyen d'opération de filtrage, et la valeur réelle de la variable de transformation pour obtenir une valeur estimée du déplacement angulaire du train de roues (13a à 13b) dans la direction de lacet, et pour utiliser la valeur estimée du déplacement angulaire du train de roues (13a à 13b) dans la direction de lacet, la valeur de la force de direction avant-arrière à partir de laquelle l'intensité de signal de la composante basse fréquence a été réduite par le premier moyen d'ajustement de fréquences, et l'expression relationnelle pour obtenir les informations reflétant l'état de la voie (16),

l'expression relationnelle est une expression où une équation de mouvement décrivant le mouvement du train de roues (13a à 13b) dans la direction de lacet est exprimée en utilisant la force de direction avant-arrière, et la valeur réelle de la variable de transformation est obtenue en utilisant la valeur de la force de direction avant-arrière à partir de laquelle l'intensité de signal de la composante basse fréquence a été réduite par le premier moyen d'ajustement de fréquences.

3. Système d'inspection selon la revendication 2, dans lequel

l'équation d'état est constituée en utilisant une équation de mouvement qui décrit le mouvement du train de roues (13a à 13b) dans la direction droite-gauche, une équation de mouvement qui décrit le mouvement du bogie (12a, 12b) dans la direction droite-gauche, une équation de mouvement qui décrit le mouvement du bogie (12a, 12b) dans la direction de lacet, une équation de mouvement qui décrit le mouvement du bogie (12a, 12b) dans la direction de roulement, et une équation de mouvement qui décrit le mouvement du ressort pneumatique dans la direction de roulement,

l'équation de mouvement qui décrit le mouvement du train de roues (13a à 13b) dans la direction droite-gauche est une équation de mouvement décrite en utilisant la variable de transformation au lieu d'utiliser le déplacement angulaire du train de roues (13a à 13b) dans la direction de lacet,

l'équation de mouvement qui décrit le mouvement du bogie (12a, 12b) dans la direction de lacet est une équation de mouvement décrite en utilisant la force de direction avant-arrière au lieu d'utiliser le déplacement angulaire et la vitesse angulaire du train de roues (13a à 13b) dans la direction de lacet, et

la variable de transformation est représentée par une différence entre le déplacement angulaire du bogie (12a, 12b) dans la direction de lacet et le déplacement angulaire du train de roues (13a à 13b) dans la direction de lacet.

**4.** Système d'inspection selon la revendication 2 ou 3, dans lequel

le moyen d'acquisition de données est conçu pour acquérir en outre une valeur mesurée de l'accélération de la carrosserie de véhicule (11) dans la direction droite-gauche,
la variable d'observation comporte en outre l'accélération de la carrosserie de véhicule (11) dans la direction droite-gauche,
les variables d'état comportent en outre un déplacement et une vitesse de la carrosserie de véhicule (11) dans la direction droite-gauche, un déplacement angulaire et une vitesse angulaire de la carrosserie de véhicule (11) dans la direction de lacet, un déplacement angulaire et une vitesse angulaire de la carrosserie de véhicule (11) dans la direction de roulement, et un déplacement angulaire d'un amortisseur de lacet fixé au véhicule ferroviaire dans la direction de lacet, et
le moyen d'opération de filtrage est conçu pour déterminer les valeurs estimées des variables d'état lorsque les différences entre les valeurs mesurées et les valeurs estimées des accélérations de la carrosserie de véhicule (11), du bogie (12a, 12b) et du train de roues (13a à 13b) dans la direction droite-gauche deviennent minimales.

**5.** Système d'inspection selon la revendication 4, dans lequel
l'équation d'état est constituée en utilisant en outre une équation de mouvement qui décrit le mouvement de la carrosserie de véhicule (11) dans la direction droite-gauche, une équation de mouvement qui décrit le mouvement de la carrosserie de véhicule (11) dans la direction de lacet, une équation de mouvement qui décrit le mouvement de la carrosserie de véhicule (11) dans la direction de roulement, et une équation de mouvement qui décrit le mouvement de l'amortisseur de lacet dans la direction de lacet.

**6.** Système d'inspection selon l'une des revendications 2 à 5, dans lequel

l'équation d'observation est constituée en utilisant en outre l'équation de mouvement qui décrit le mouvement du train de roues (13a à 13b) dans la direction droite-gauche et l'équation de mouvement qui décrit le mouvement du bogie (12a, 12b) dans la direction droite-gauche, et
l'équation de mouvement qui décrit le mouvement du train de roues (13a à 13b) dans la direction droite-gauche est une équation de mouvement décrite en utilisant la variable de transformation au lieu d'utiliser le déplacement angulaire du train de roues (13a à 13b) dans la direction de lacet.

**7.** Système d'inspection selon la revendication 6, dans lequel
l'équation d'observation est constituée en utilisant en outre l'équation de mouvement qui décrit le mouvement de la carrosserie de véhicule (11) dans la direction droite-gauche.

**8.** Système d'inspection selon l'une des revendications 2 à 7, dans lequel

la quantité physique comporte les variables d'état,
le moyen d'ajustement de fréquences comporte en outre un deuxième moyen d'ajustement de fréquences conçu pour réduire l'intensité de signal de la composante basse fréquence générée en raison de la circulation du véhicule ferroviaire sur une partie courbe de la voie (16) des données de séries chronologiques des valeurs estimées des variables d'état.

**9.** Système d'inspection selon l'une des revendications 2 à 8, dans lequel le filtre est un filtre de Kalman.

**10.** Système d'inspection selon l'une des revendications 1 à 9, dans lequel

le moyen d'ajustement de fréquences est conçu pour utiliser les données de séries chronologiques de la quantité physique et déterminer un coefficient dans un modèle AR corrigé, et utiliser le modèle AR corrigé dont le coefficient est déterminé et les données de séries chronologiques de la quantité physique et réduire l'intensité de signal de la composante basse fréquence générée en raison de la circulation du véhicule ferroviaire sur une partie courbe de la voie (16) des données de séries chronologiques de la quantité physique,
le modèle AR corrigé est une expression représentant une valeur prédite de la quantité physique en utilisant une valeur de la quantité physique et le coefficient répondant à la valeur,
le moyen d'ajustement de fréquences est conçu pour utiliser une équation dans laquelle une première matrice est définie comme une matrice de coefficient et un vecteur d'autocorrélation est défini comme un vecteur constant et détermine le coefficient,

le vecteur d'autocorrélation est un vecteur dont la composante est l'autocorrélation des données de séries chronologiques de la quantité physique avec un décalage temporel de 1 à m, m étant un nombre de la valeur mesurée utilisée dans le modèle AR corrigé,

la première matrice est une matrice $U_s \Sigma_s U_s^T$ obtenue d'une deuxième matrice $\Sigma_s$ qui est obtenue de s valeurs propres d'une matrice d'autocorrélation, s étant un nombre défini à 1 ou plus et inférieur à m, et d'une matrice diagonale $\Sigma$ et d'une troisième matrice $U_s$ qui est obtenue des s valeurs propres et d'une matrice orthogonale U,

la matrice d'autocorrélation est une matrice dont la composante est l'autocorrélation des données de séries chronologiques de la quantité physique avec un décalage temporel de 0 à m-1,

la matrice diagonale est une matrice dont la composante diagonale consiste en les valeurs propres de la matrice d'autocorrélation qui sont obtenues par décomposition en valeurs singulières de la matrice d'autocorrélation,

la matrice orthogonale est une matrice où un vecteur propre de la matrice d'autocorrélation est défini comme un vecteur de composante de colonne,

la deuxième matrice est une sous-matrice de la matrice diagonale et est une matrice dont la composante diagonale consiste en les s valeurs propres, et

la troisième matrice est une sous-matrice de la matrice orthogonale et est une matrice où les vecteurs propres correspondant aux s valeurs propres sont définis comme des vecteurs de composantes de colonnes.

**11.** Système d'inspection selon la revendication 10, dans lequel

parmi les valeurs propres de la matrice d'autocorrélation, la plus grande valeur propre est incluse dans les s valeurs propres.

**12.** Système d'inspection selon l'une des revendications 1 à 11, comprenant en outre :

un moyen de correction conçu pour corriger une valeur de la force de direction avant-arrière dans une section contenant un joint d'un rail dans la partie courbe de la voie (16), dans lequel

la valeur de la force de direction avant-arrière à corriger par le moyen de correction est une valeur mesurée de la force de direction avant-arrière contenue dans les données mesurées ou une valeur de la force de direction avant-arrière à partir de laquelle l'intensité de signal de la composante basse fréquence a été réduite par le premier moyen d'ajustement de fréquences.

**13.** Système d'inspection selon l'une des revendications 1 à 12, dans lequel

les informations reflétant l'état de la voie (16) représentent un degré d'irrégularité d'alignement de la voie (16) ou une force latérale qui est une contrainte dans la direction droite-gauche entre une roue prévue sur le train de roues (13a à 13b) et la voie (16), et

la direction droite-gauche est une direction perpendiculaire à la fois à la direction avant-arrière et à la direction haut-bas qui est une direction perpendiculaire à la voie (16).

**14.** Système d'inspection selon l'une des revendications 1 à 13, dans lequel

parmi les composantes dans la direction avant-arrière des forces s'exerçant dans les deux éléments fixés de part et d'autre du train de roues (13a à 13b) simple dans la direction droite-gauche, la force de direction avant-arrière est les composantes opposées en phase l'une par rapport à l'autre, et

la direction droite-gauche est une direction perpendiculaire à la fois à la direction avant-arrière et à la direction haut-bas qui est une direction perpendiculaire à la voie (16).

**15.** Système d'inspection selon la revendication 14, dans lequel

l'élément est une liaison supportant la boîte d'essieu, ou une douille en caoutchouc fixée à une liaison supportant la boîte d'essieu.

**16.** Système d'inspection selon la revendication 14, dans lequel

l'élément est une poutre d'essieu supportant la boîte d'essieu, ou un douille en caoutchouc fixée à une poutre d'essieu supportant la boîte d'essieu.

**17.** Système d'inspection selon la revendication 14, dans lequel

l'élément est un ressort à lames supportant la boîte d'essieu, ou une douille en caoutchouc fixée à un ressort à lames supportant la boîte d'essieu.

18. Système d'inspection selon l'une des revendications 1 à 17, comprenant en outre :

un moyen d'émission conçu pour émettre les données mesurées acquises par le moyen d'acquisition de données ; et
un moyen de réception conçu pour recevoir les données mesurées émises par le moyen d'émission.

19. Procédé d'inspection, comprenant :

une étape d'acquisition de données pour acquérir des données mesurées qui sont des données de séries chronologiques de valeurs mesurées à mesurer en faisant circuler sur une voie (16) un véhicule ferroviaire comportant une carrosserie de véhicule (11), un bogie (12a, 12b) et un train de roues (13a à 13b) ;
une étape d'ajustement de fréquences pour réduire une intensité de signal d'une composante basse fréquence générée en raison de la circulation du véhicule ferroviaire sur une partie courbe de la voie (16) des données de séries chronologiques d'une valeur mesurée des données mesurées d'une force de direction avant-arrière, dont une valeur varie en fonction d'un état du véhicule ferroviaire, ou des données de séries chronologiques de valeurs estimées d'une quantité physique, dont une valeur varie en fonction d'un état du véhicule ferroviaire ; et
une étape de calcul d'état de voie pour obtenir des informations reflétant un état de la voie (16), dans lequel les données mesurées contiennent une valeur mesurée de la force de direction avant-arrière, la composante basse fréquence est un signal contenu dans les données de séries chronologiques d'une valeur mesurée des données mesurées, la composante basse fréquence n'étant pas mesurée lorsque le véhicule ferroviaire circule sur une partie linéaire de la voie (16), mais étant mesurée lorsque le véhicule ferroviaire circule sur une partie courbe de la voie (16),
la force de direction avant-arrière est une force dans une direction avant et une direction arrière qui s'exerce dans un élément disposé entre le train de roues (13a à 13b) et le bogie (12a, 12b) sur lequel est prévu le train de roues (13a à 13b),
l'élément est un élément pour supporter une boîte d'essieu,
la direction avant-arrière est une direction le long d'une direction de circulation du véhicule ferroviaire,
l'étape d'ajustement de fréquences comporte une première étape d'ajustement de fréquences pour réduire l'intensité de signal de la composante basse fréquence générée en raison de la circulation du véhicule ferroviaire sur une partie courbe de la voie (16) des données de séries chronologiques de la valeur mesurée de la force de direction avant-arrière,
l'étape de calcul d'état de voie utilise une expression relationnelle représentant la relation entre des informations reflétant un état de la voie (16) à une position du train de roues (13a à 13b) et la force de direction avant-arrière, et une valeur de la force de direction avant-arrière à partir de laquelle l'intensité de signal de la composante basse fréquence a été réduite par la première étape d'ajustement de fréquences pour obtenir des informations reflétant un état de la voie (16), et
l'expression relationnelle est une expression basée sur une expression ne comportant pas de rayon de courbure d'un rail.

20. Produit de programme informatique comprenant des instructions qui, lorsque le programme est exécuté par un ordinateur, amènent l'ordinateur à effectuer les étapes comprenant :

une étape d'acquisition de données pour acquérir des données mesurées qui sont des données de séries chronologiques de valeurs mesurées à mesurer en faisant circuler sur une voie (16) un véhicule ferroviaire comportant une carrosserie de véhicule (11), un bogie (12a, 12b) et un train de roues (13a à 13b) ;
une étape d'ajustement de fréquences pour réduire une intensité de signal d'une composante basse fréquence générée en raison de la circulation du véhicule ferroviaire sur une partie courbe de la voie (16) des données de séries chronologiques d'une valeur mesurée des données mesurées d'une force de direction avant-arrière, dont une valeur varie en fonction d'un état du véhicule ferroviaire, ou des données de séries chronologiques de valeurs estimées d'une quantité physique, dont une valeur varie en fonction d'un état du véhicule ferroviaire ; et
une étape de calcul d'état de voie pour obtenir des informations reflétant un état de la voie (16), dans lequel les données mesurées contiennent une valeur mesurée de la force de direction avant-arrière, la composante basse fréquence est un signal contenu dans les données de séries chronologiques d'une valeur mesurée des données mesurées, la composante basse fréquence n'étant pas mesurée lorsque le véhicule ferroviaire circule sur une partie linéaire de la voie (16), mais étant mesurée lorsque le véhicule ferroviaire circule sur une partie courbe de la voie (16),

la force de direction avant-arrière est une force dans une direction avant et une direction arrière qui s'exerce dans un élément disposé entre le train de roues (13a à 13b) et le bogie (12a, 12b) sur lequel est prévu le train de roues (13a à 13b),

l'élément est un élément pour supporter une boîte d'essieu,

la direction avant-arrière est une direction le long d'une direction de circulation du véhicule ferroviaire,

l'étape d'ajustement de fréquences comporte une première étape d'ajustement de fréquences pour réduire l'intensité de signal de la composante basse fréquence générée en raison de la circulation du véhicule ferroviaire sur une partie courbe de la voie (16) des données de séries chronologiques de la valeur mesurée de la force de direction avant-arrière,

l'étape de calcul d'état de voie utilise une expression relationnelle représentant la relation entre des informations reflétant un état de la voie (16) à une position du train de roues (13a à 13b) et la force de direction avant-arrière, et une valeur de la force de direction avant-arrière à partir de laquelle l'intensité de signal de la composante basse fréquence a été réduite par la première étape d'ajustement de fréquences pour obtenir des informations reflétant un état de la voie (16), et

l'expression relationnelle est une expression basée sur une expression ne comportant pas de rayon de courbure d'un rail.

EP 3 677 485 B1

# FIG. 1

FIG. 2

## FIG. 3A

## FIG. 3B

# FIG. 4

EP 3 677 485 B1

# FIG. 5

EP 3 677 485 B1

# FIG. 6

FIG. 7

EP 3 677 485 B1

# FIG. 8

EP 3 677 485 B1

FIG. 9

INSPECTION APPARATUS

FIG. 10

```
        ┌─────────────┐
        │    START    │
        └──────┬──────┘
               │
               ▼
┌──────────────────────────────┐
│     STORE STATE EQUATION     │─── S1001
└──────────────┬───────────────┘
               │
               ▼
┌──────────────────────────────┐
│  STORE OBSERVATION EQUATION  │─── S1002
└──────────────┬───────────────┘
               │
               ▼
        ┌─────────────┐
        │     END     │
        └─────────────┘
```

# FIG. 11

START

ACQUIRE MEASURED DATA — S1101

REDUCE LOW-FREQUENCY COMPONENT OF
FORWARD-AND-BACKWARD-DIRECTION FORCE — S1102

CALCULATE STATE VARIABLE — S1103

REDUCE LOW-FREQUENCY COMPONENT OF
STATE VARIABLE — S1104

CALCULATE ALIGNMENT IRREGULARITY AMOUNT — S1105

OUTPUT INFORMATION OF ALIGNMENT
IRREGULARITY AMOUNT — S1106

END

FIG. 12

FIG. 13

FIG. 14

TIME (SECOND)

EP 3 677 485 B1

FIG. 15

FIG. 16

FIG. 17

EP 3 677 485 B1

FIG. 18

```
        ( START )
            │
            ▼
┌──────────────────────────┐
│   STORE STATE EQUATION    │──S1001
└──────────────────────────┘
            │
            ▼
┌──────────────────────────┐
│ STORE OBSERVATION EQUATION │──S1002
└──────────────────────────┘
            │
            ▼
┌──────────────────────────┐
│     STORE TRACK DATA      │──S1801
└──────────────────────────┘
            │
            ▼
         ( END )
```

# FIG. 19

START

ACQUIRE MEASURED DATA ~S1101

REDUCE LOW-FREQUENCY COMPONENT OF FORWARD-AND-BACKWARD-DIRECTION FORCE ~S1102

~S1901

PASSED THROUGH SEAM SECTION?    NO

YES

CORRECT FORWARD-AND-BACKWARD-DIRECTION FORCE ~S1902

CALCULATE STATE VARIABLE ~S1103

REDUCE LOW-FREQUENCY COMPONENT OF STATE VARIABLE ~S1104

CALCULATE ALIGNMENT IRREGULARITY AMOUNT ~S1105

OUTPUT INFORMATION OF ALIGNMENT IRREGULARITY AMOUNT ~S1106

END

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017053773 A
- EP 3434552 A1

- EP 3042822 A1

**Non-patent literature cited in the description**

- Railway vehicle dynamics The latest bogie technology. DENKISYA KENKYUKAI CO.,LTD, January 2003, 15-33

- **PING LI et al.** Estimation of railway vehicle suspension parameters for condition monitoring. *Control Engineering Practice,* 2007, vol. 15, 43-55
- *Japan Industrial Standard (JIS E 1001,* 2001